Europäisches Patentamt

European Patent Office

Office européen des brevets

(19)

(11) EP 0 963 105 A2

(12) EUROPEAN PATENT APPLICATION

(43) Date of publication:
08.12.1999 Bulletin 1999/49

(51) Int Cl.$^6$: H04N 1/405

(21) Application number: 99304306.6

(22) Date of filing: 02.06.1999

(84) Designated Contracting States:
AT BE CH CY DE DK ES FI FR GB GR IE IT LI LU
MC NL PT SE
Designated Extension States:
AL LT LV MK RO SI

(30) Priority: 03.06.1998 JP 15445998

(71) Applicant: CANON KABUSHIKI KAISHA
Tokyo (JP)

(72) Inventors:
• Suzuki, Takashi
  Ohta-ku, Tokyo (JP)
• Okinaka, Keiji
  Ohta-ku, Tokyo (JP)

(74) Representative:
Beresford, Keith Denis Lewis et al
BERESFORD & Co.
High Holborn
2-5 Warwick Court
London WC1R 5DJ (GB)

Remarks:
A request for correction dated 30/07/99 (figs.
correction) has been filed pursuant to Rule 88 EPC.
A decision on the request will be taken during the
proceedings before the Examining Division
(Guidelines for Examination in the EPO, A-V, 3.).

(54) Threshold matrix, and method and apparatus of reproducing gray level using threshold matrix

(57) The present invention provides a threshold matrix that can obtain high-quality images with a uniform dot distribution using small masks and that can obviate the need to increase the mask size for a high-definition printer to reduce the memory capacity required to store the masks, as well as a gray-level reproduction method and apparatus using this threshold matrix.

A threshold matrix is formed so that (1) a dot pattern generated by executing gray level processing using the threshold matrix has a set of element pixel blocks having in all gray levels the same dot distribution in each element pixel block corresponding to each element mask, so that (2) a low irregularity or pseudo periodicity is introduced into one of the low gray levels after the first gray level, so that (3) in all gray levels, the number of dots is equal for all element pixel blocks, and so that (4) every 4n ((n) is an integer) gray levels, the number of dots is equal for four partial element pixel blocks each obtained by dividing each element pixel block into four.

FIG. 5

## Description

## BACKGROUND OF THE INVENTION

## FIELD OF THE INVENTION

The present invention relates to a threshold matrix and a gray level reproducing method and apparatus using the threshold matrix, and more specifically to a threshold matrix and a gray level reproducing method and apparatus using the threshold matrix for converting input image data into binary or multivalue data in a gray level process.

## DESCRIPTION OF THE RELATED ART

The digital halftoning technologies have been, roughly speaking, categorized into two methods, i.e., the error diffusion method and the mask method. In the mask method, basically, an output value of a pixel of an output image is determined by corresponding a pixel of the original image one to one to an element of a threshold matrix in a binarizing process.

On the other hand, in error diffusion method, an output value of a relevant pixel in an input image is determined so that errors can be recovered through the calculation for diffusing the above errors into neighboring pixels. Therefore, although the quality of the output image is higher than that of the image produced by the mask method, time for this halftoning process of the method usually takes 3 to 5 times of that time of the mask method even if a high speed processor is used.

The ordered dithering method as a well-known mask method is roughly divided into clustered-dot dithering and dispersed-dot dithering (R. Ulichney, Digital Halftoning (MIT Press, Cambridge, Massachusetts) 1987)).

About 10 years ago, when resolution of digital printers was coarse like about 300 to 500 dpi on average, this dispersed-dot dithering process was used for producing output images whose image quality is allowed to the low and, when the demand for image quality is high, error-diffusion process was used. The reason why the image quality of the dispersed-dot dithering method is low is that a regular pattern with the periods corresponding to mask size appears two-dimensionally in some output image regions where values of gray levels are comparatively low and, furthermore, that, when regular patterns with periods small compared to the mask size are involved in input images, moire, vis., a kind of regular artifact, can appear. The clustered-dot dithering process becomes a periodical pattern using the mask size as the periods independently of the gray level, in which each cluster becomes only large as the gray level goes up, this method has been generally used in printing in which resolution is much higher than that of digital printers.

When an output image is actually observed by the eye with the optimal viewing distance of about 25cm, since the characteristic of the modulation transfer function (MTF) for the eye possesses its peak at about 1 lp (line pairs)/mm together with the substantial resolution limit of 7 lp/mm or so, the resolution limit of the distance between neighboring two dots in the output image plane is about 0.14 mm. In the dispersed-dot dithering method whose mask has, provided that the number of density levels to be reproduced is 256, $16 \times 16 = 256$ elements, the size of the mask projected on the output image plane is 1.4 mm square for printers with 300 dpi or 0.8 mm square for printers with 500 dpi. When an input image has regions where individual gray levels are constant and low, since a characteristic dot pattern produced by a single mask having one of the above sizes, which we may call a mask pattern for later convenience, are repeatedly disposed two-dimensionally in those regions, such periodic patterns of approximately 1 mm having similar frequencies to the frequency at the peak of MTF for the eye can be sensitively observed as regular artifact.

In the dispersed-dot dithering method, in which a periodic dot pattern with the highest frequency appears at the middle gray level 128, individual dot patterns at every gray level have distinct periodicity. Therefore, if an input image involves a periodic pattern having a period similar to that of the mask pattern, moire as a periodic structure having the frequency determined as the difference of two frequencies of the above two periodic patterns can be observed as a artifact, easily perceivable for the eye, provided that the artifact has a period near 1 mm to a few mm. Apart from the moire, in order to make the period of a periodic pattern generated by repeatedly disposing the mask pattern be the same as the resolution limit of the eye, a printer with 2860 dpi will be necessary.

In the error diffusion method, although there has been various methods for diffusing errors, it was shown by Ulichney (the above-mentioned book, Ë8.3.1, p. 268 and Dithering with Blue Noise, Proc. IEEE, vol. 76, no. 1 (1988) p. 56) that the perturbed error diffusion method is visually superior to others because the domain frequency spectrum of binary coded pattern (dot pattern) generated at each gradation has blue-noise patterns, and this method can produce blue-noise patterns which are enjoying the benefits of aperiodic uncorrelated structure without low frequency graininess (Ulichney, the above-mentioned book, p. 233).

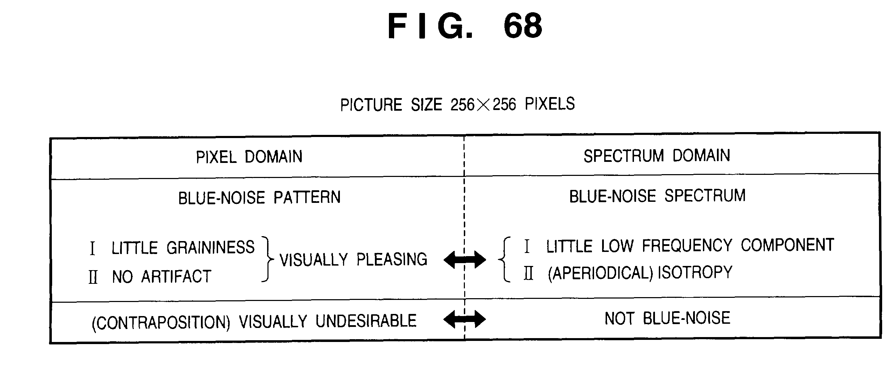

Fig. 68 shows the correspondence between the characteristics of the blue-noise patterns in a spectrum domain and an output-image domain. In Fig. 68, a little of low frequency spectrum in the spatial frequency domain means a little of low frequency graininess in the output-image domain, and being aperiodic in the spectral domain signifies that artifacts such as a visually periodic pattern caused by repeatedly disposing the same mask patterns and moire caused by interference between the mask pattern and an input image do not generate in the output-image domain. That is, a visually pleasing dot pattern requires a little of low frequency element in a spectrum domain, and aperiodic. Therefore, according to the logic scheme disclosed by Ulichney, a visually pleased pattern should be a blue-noise pattern, and vice versa.

In spite of the above serious difficulty, stimulated by the success in error diffusion method, inventions to realize blue-noise patterns in the mask method having the merit of quick process time were issued. First, a method in which each blue-noise mask is prepared for individual gray levels was invented (USP 4,920,501 and USP 5,214,517). Next, a blue-noise mask method preparing only the single mask as a threshold matrix, which is naturally applicable to every gray level, was invented (Japanese Patent Publication No. 2622429, USP 5,111,310, USP 5,477,305, etc. specifications). Further, void and cluster method (USP 5,535,020) and its improvement (USP 5,317,418) were invented.

The blue-noise mask method is a binarization method based on the logic scheme shown in Fig. 68. As described in all inventions (Japanese Patent Publication No. 2622429, USP 5,111,310, USP 5,323,247, USP 5,341,228, USP 5,477,305, USP 5,543,941 specifications) related to this method, the blue-noise properties of the blue-noise patterns generated by the method refer to that, when an arbitrary gray level is set, the output pattern of dots (dot pattern) is locally aperiodic and isotropic with a small amount of low frequency element. In addition, the blue-noise properties are non-deterministic in that the dot distribution at an arbitrary gray level is not predetermined, or they depend only on the randomness of the algorithm of generating a mask. Therefore, the dot distribution having the blue-noise properties can be defined as random, non-deterministic, and having non-white noise characteristics (USP 5,111,310).

Note that since the logic scheme shown in Fig. 68 is prepared based on the error diffusion method in which an output signal obtained by binarizing an input signal in real time is output, the dot distribution having the blue-noise properties can be obtained basically regardless of the size of the output screen. However, in the mask method, the dot pattern, whose size depends on the size of the mask, the resolution of the output device, for example, a printer, etc., for an input image at a constant gray level periodically appears on the output screen. This refers to high periodicity not detected in the error diffusion method, and is a severe problem that it is inconsistent in principle with the logic scheme of the blue-noise properties which are basically aperiodic (isotropic). In various mask methods relating to the above-described blue-noise properties, no disclosures is made on the practical conditions of solving the inconsistency.

Described below are the above-described basic problems of the blue-noise mask method, and the limit of the method from the problems specific to the blue-noise mask method.

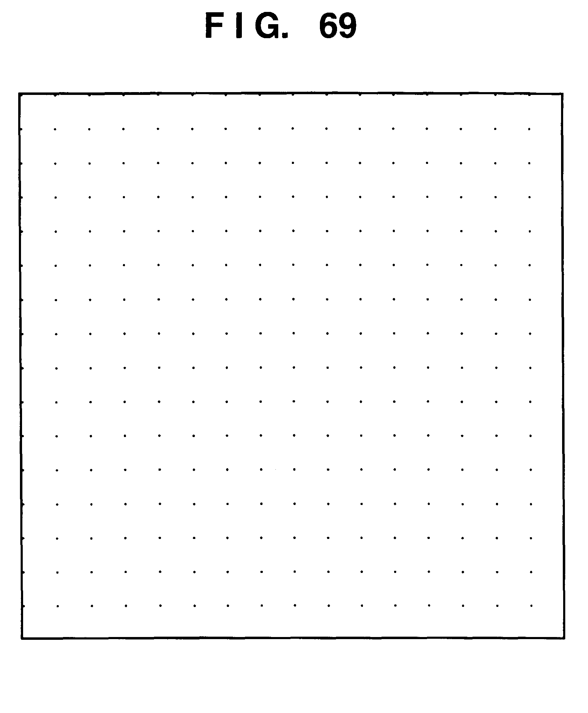

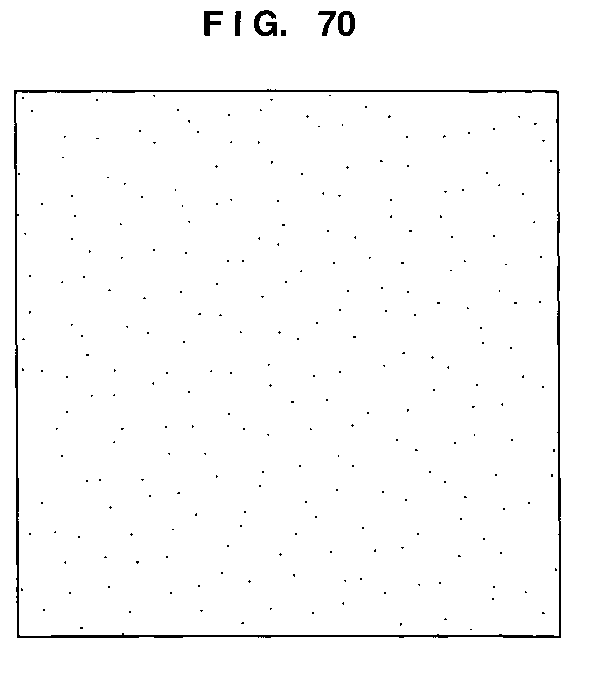

When the above-described method was invented, the resolution of printers are 300 through 500 dpi on average (Japanese Patent Publication No. 2622429, USP 5,111,310, USP 5,323,247, USP 5,341,228, USP 5,477,305, USP 5,543,941 specifications). In the blue-noise mask generation method disclosed in the inventions, when the number of gray levels is 256, the blue-noise pattern at the 128th gray level is generated first. Then, the system of generating a dot pattern is divided into two, that is, the system of generating a dot pattern at a gray level below the 128th level, and the system of generating a dot pattern at a gray level above the 128th level. Then, the dot patterns are sequentially generated at gray levels of the respective systems. When the dot patterns of all gray levels are determined, all thresholds are determined, and the mask is completed. At this time, since no new dots cannot be placed at a point at which a dot has been placed for one or more gray levels before. Therefore, the farther from the central gray level, the smaller freedom of selecting the position of a dot, thereby hardly obtaining a pleasing blue-noise pattern. Figs. 69 and 70 show the first gray level (Fig. 69) of the ordered dithering method for the input image gray level of 256 and the output screen size of 256 × 256 pixels, and the first gray level (Fig. 70) of the blue-noise mask method. The dot pattern of the first gray level of the clustered dot dithering method is the same as that of the dispersed-dot dithering method. As compared with the dispersed-dot dithering method, the blue-noise mask method has apparently poor uniformity in the dot distribution at a low gray level.

In the blue-noise mask method, if the preparation for the first blue-noise mask pattern is stopped at the central gray level and a blue-noise mask pattern is prepared at a low gray level, for example, at the first gray level, then a pleasing blue-noise mask pattern should be obtained at a low gray level. In this case, the properties become poor at the higher gray level. Thus, the properties at the 255th gray level are twice as poor as the properties at the central gray level at which the preparation of blue-noise mask patterns has been started. Thus, in this method, the preparation has been started from the central gray level in consideration of the balance of the properties at all gray levels. As a result, the problem with the blue-noise mask method is that pleasing blue-noise mask patterns can be hardly obtained at a low gray level.

Furthermore, with higher printer resolution in the blue-noise mask method, the limit of the blue-noise mask method from the problem with its principle becomes obvious. That is, to obtain pleasing blue-noise properties in the blue-noise mask method, the mask is enlarged with higher printer resolution. In addition, with higher printer resolution from 600 through 700 dpi to approximately 1200 dpi, the periodic pattern unique to the dispersed-dot dithering method becomes fine and difficult to perceive. Therefore, as compared with the dispersed-dot dithering method, the poor uniformity of the dot distribution at a low gray level is distinct in the blue-noise mask method, thus clearly disclosing the problem with the blue-noise mask method.

Thus, the conventional blue-noise mask method has the demerit of poor uniformity of the dot distribution at a low gray level. Furthermore, with high printer resolution, the poor uniformity becomes more distinct, which can only be covered with a large mask, thereby requiring a larger memory capacity.

SUMMARY OF THE INVENTION

Accordingly, it is a concern of the present invention to provide a threshold matrix, and a gray level reproducing method and apparatus using the threshold matrix to obtain a high quality image with good uniformity of dot distribution using a small mask, and therefore to reduce the memory capacity for storing a large mask because no large mask is required with higher printer resolution.

According to one aspect of the present invention, there is provided a gray level reproducing method of reproducing a gray level for representing the density of each pixel of an output image by binary or multivalue data by corresponding each pixel of an original image one to one to each pixel of a threshold matrix (a mask), comprising the steps of: having non-blue noise properties at every gray level of dot patterns generated in a pixel block of a reference size using a mask of a size smaller than the reference size of the pixel block; and generating in an output image no moire having visually undesired contrast and an artifact such as a constant repetitive pattern, etc. caused by the mask itself when an input image receives a gray level process and the image is output through an output device having a resolution of over 600 dpi.

Another gray level reproducing method according to the present invention is a method of reproducing a gray level for representing the density of each pixel of an output image by binary or multivalue data by corresponding each pixel of an original image one to one to each pixel of a threshold matrix (a mask), comprising the steps of:

having non-blue noise properties at every gray level of dot patterns generated only by the mask; and generating in an output image no moire having visually undesired contrast and an artifact such as a constant repetitive pattern, etc. caused by the mask itself when an input image receives a gray level process.

A further gray level reproducing method according to the present invention is a method of reproducing a gray level for representing the density of each pixel of an output image by binary or multivalue data by corresponding each pixel of an original image one to one to each pixel of a threshold matrix (a mask), comprising the steps of:

having a plurality of independent spectra, of a two-dimensional domain frequency spectrum of a dot pattern generated only by the mask, caused by periodicity of the mask at every gray level; and generating in an output image, which has received a gray level process, no visually undesired artifacts by introducing low irregularity (perturbation) to distribution of dots at a plurality of gray levels, and by assigning noise elements having a small amount of low frequency elements to a spectrum in a one-dimensional radius direction.

A further gray level reproducing method according to the present invention is a method of reproducing a gray level using a relatively small threshold matrix having the same threshold array corresponding to an entire original image in a two-dimensional and regular array to represent density of each pixel of an output image by binary or multivalue data by corresponding each pixel of an original image one to one to each pixel of a threshold matrix (a mask), comprising the steps of:

the mask having a size of the arrangement of a plurality of masks (element masks) of a size used in a dispersed-dot dithering method, and a dot pattern generated by the mask:

(1) having a set of element pixel blocks in which distribution of dots in each element pixel block corresponding to each element mask is the same at every gray level;
(2) having low irregularity or pseudo-periodicity at any low gray level at the first level or thereafter;
(3) having the equal number of dots in all element pixel blocks at every level; and
(4) having the equal number of dots in four partial element pixel blocks each having a quarter of each element pixel block at every 4n (n indicates an integer) gray level.

A gray level reproducing apparatus according to the present invention is an apparatus of reproducing a gray level for representing the density of each pixel of an output image by binary or multivalue data by corresponding each pixel of an original image one to one to each pixel of a threshold matrix (a mask), comprising:

a storage unit for storing a threshold matrix;
a comparison unit for comparing a value of the threshold matrix as a threshold with density of each pixel of an original image; and
an output unit for outputting a binary or multivalue dot pattern based on a comparison result of the comparison unit, wherein the threshold matrix has a size smaller than the reference size of the pixel block, dot patterns generated in a pixel block of a reference size have non-blue noise properties at every gray level, no moire having visually undesired contrast nor an artifact such as a constant repetitive pattern, etc. caused by the mask itself is generated in an output image when an input image receives a gray level process and the image is output through an output device having a resolution of over 600 dpi.

According to a further gray level reproducing apparatus according to the present invention is an apparatus of reproducing a gray level for representing the density of each pixel of an output image by binary or multivalue data by corresponding each pixel of an original image one to one to each pixel of a threshold matrix (a mask), comprising:

a storage unit for storing a threshold matrix;
a comparison unit for comparing a value of the threshold matrix as a threshold with density of each pixel of an original image; and
an output unit for outputting a binary or multivalue dot pattern based on a comparison result of the comparison unit, wherein the threshold matrix has dot patterns generated only by the threshold matrix having non-blue noise properties at every gray level, and generates in an output image no moire having visually undesired contrast or an artifact such as a constant repetitive pattern, etc. caused by the mask itself when an input image receives a gray level process.

A further gray level reproducing apparatus according to the present invention is an apparatus of reproducing a gray level for representing the density of each pixel of an output image by binary or multivalue data by corresponding each pixel of an original image one to one to each pixel of a threshold matrix (a mask), comprising:

a storage unit for storing a threshold matrix;
a comparison unit for comparing a value of the threshold matrix as a threshold with density of each pixel of an original image; and
an output unit for outputting a binary or multivalue dot pattern based on a comparison result of the comparison unit, wherein the threshold matrix has a plurality of independent spectra, of a two-dimensional domain frequency spectrum of a dot pattern generated only by the threshold matrix, caused by periodicity of the threshold matrix at every gray level, and generates in an output image, which has received a gray level process, no visually undesired artifacts by introducing low irregularity (perturbation) to distribution of dots at a plurality of gray levels, and by assigning noise elements having a small amount of low frequency elements to a spectrum in a one-dimensional radius direction.

A further gray level reproducing apparatus according to the present invention is an apparatus of reproducing a gray level for representing the density of each pixel of an output image by binary or multivalue data by corresponding each pixel of an original image one to one to each pixel of a threshold matrix (a mask), comprising:

a storage unit for storing a threshold matrix;
a comparison unit for comparing a value of the threshold matrix as a threshold with density of each pixel of an original image; and
an output unit for outputting a binary or multivalue dot pattern based on a comparison result of the comparison unit, wherein the threshold matrix mask has a size of an arrangement of a plurality of masks (element masks) of a size used in the dispersed-dot dithering method, and a generated dot pattern has:

(1) a set of element pixel blocks in which distribution of dots in each element pixel block corresponding to each element mask is the same at every gray level;
(2) low irregularity or pseudo-periodicity at any low gray level at the first level or thereafter;
(3) an equal number of dots in all element pixel blocks at every level; and
(4) an equal number of dots in four partial element pixel blocks each having a quarter of each element pixel block at every 4n (n indicates an integer) gray level.

A threshold matrix according to the present invention is a threshold matrix for use in converting the density of each pixel of an original image into binary or multivalue data, wherein the threshold matrix has a size smaller than the reference size of the pixel block, dot patterns generated in a pixel block of a reference size have non-blue noise properties at every gray level, no moire having visually undesired contrast nor an artifact such as a constant repetitive pattern, etc. caused by the mask itself is generated in an output image when an input image receives a gray level process and the image is output through an output device having a resolution of over 600 dpi.

A threshold matrix according to the present invention is a threshold matrix for use in converting the density of each pixel of an original image into binary or multivalue data, wherein the threshold matrix has dot patterns generated only by the threshold matrix having non-blue noise properties at every gray level, and generates in an output image no moire having visually undesired contrast or an artifact such as a constant repetitive pattern, etc. caused by the mask itself when an input image receives a gray level process.

A further threshold matrix according to the present invention is a threshold matrix for use in converting the density of each pixel of an original image into binary or multivalue data, wherein the threshold matrix has a plurality of independent spectra, of a two-dimensional domain frequency spectrum of a dot pattern generated only by the threshold matrix, caused by periodicity of the threshold matrix at every gray level, and generates in an output image, which has received a gray level process, no visually undesired artifacts by introducing low irregularity (perturbation) to distribution of dots at a plurality of gray levels, and by assigning noise elements having a small amount of low frequency elements to a spectrum in a one-dimensional radius direction.

A threshold matrix according to the present invention is a threshold matrix for use in converting density of each pixel of an original image into binary or multivalue data, wherein the threshold matrix mask has a size of an arrangement of a plurality of masks (element masks) of a size used in the dispersed-dot dithering method, and a generated dot pattern has:

(1) a set of element pixel blocks in which distribution of dots in each element pixel block corresponding to each element mask is the same at every gray level;
(2) low irregularity or pseudo-periodicity at any low gray level at a first level or thereafter;
(3) an equal number of dots in all element pixel blocks at every level; and
(4) an equal number of dots in four partial element pixel blocks each having a quarter of each element pixel block at every 4n (n indicates an integer) gray level.

A storage medium according to the present invention is a computer-readable storage medium storing a control program for controlling a gray level reproducing process for representing the density of each pixel of an output image by binary or multivalue data by corresponding each pixel of an original image one to one to each pixel of a threshold matrix (a mask), comprising:

a threshold matrix having a size smaller than the reference size of the pixel block, dot patterns generated in a pixel block of a reference size having non-blue noise properties at every gray level, wherein no moire having visually undesired contrast nor an artifact such as a constant repetitive pattern, etc. caused by the mask itself is generated in an output image when an input image receives a gray level process and the image is output through an output device having a resolution of over 600 dpi; and
a module for comparing a value of the threshold matrix as a threshold with density of each pixel of an original image for each pixel, and controlling an output of binary or multivalue dot patterns depending on a comparison result.

A storage medium according to the present invention is a computer-readable storage medium storing a control program for controlling a gray level reproducing process for representing the density of each pixel of an output image by binary or multivalue data by corresponding each pixel of an original image one to one to each pixel of a threshold matrix (a mask), comprising: a threshold matrix having dot patterns generated only by the threshold matrix having non-blue noise properties at every gray level, wherein no moire having visually undesired contrast or an artifact such as a constant repetitive pattern, etc. caused by the mask itself is generated when an input image receives a gray level process; and a module for comparing a value of the threshold matrix as a threshold with density of each pixel of an original image for each pixel, and controlling an output of binary or multivalue dot patterns depending on a comparison result.

A storage medium according to the present invention is a computer-readable storage medium storing a control program for controlling a gray level reproducing process for representing the density of each pixel of an output image by binary or multivalue data by corresponding each pixel of an original image one to one to each pixel of a threshold matrix (a mask), comprising: a threshold matrix having a plurality of independent spectra, of a two-dimensional domain frequency spectrum of a dot pattern generated only by the threshold matrix, caused by periodicity of the threshold matrix at every gray level, wherein no visually undesired artifacts is generated in an output image, which has received a gray level process, by introducing low irregularity (perturbation) to distribution of dots at a plurality of gray levels, and by assigning noise elements having a small amount of low frequency elements to a spectrum in a one-dimensional radius direction; and a module for comparing a value of the threshold matrix as a threshold with density of each pixel of an original image for each pixel, and controlling an output of binary or multivalue dot patterns depending on a comparison result.

A storage medium according to the present invention is a computer-readable storage medium storing a control program for controlling a gray level reproducing process for representing the density of each pixel of an output image by binary or multivalue data by corresponding each pixel of an original image one to one to each pixel of a threshold matrix (a mask), comprising:

a threshold matrix mask having a size of an arrangement of a plurality of masks (element masks) of a size used in dispersed-dot dithering, wherein a generated dot pattern has:

(1) a set of element pixel blocks in which distribution of dots in each element pixel block corresponding to each element mask is the same at every gray level;
(2) low irregularity or pseudo-periodicity at any low gray level at a first level or thereafter;

(3) an equal number of dots in all element pixel blocks at every level; and

(4) an equal number of dots in four partial element pixel blocks each having a quarter of each element pixel block at every 4n (n indicates an integer) gray level; and

a module for comparing a value of the threshold matrix as a threshold with density of each pixel of an original image for each pixel, and controlling an output of binary or multivalue dot patterns depending on a comparison result.

In addition, a gray scale reproducing apparatus according to the present invention associates each pixel of an original image with each pixel of a threshold matrix (mask) on a one-to-one correspondence to reproduce the density of each pixel of an output image using binary or multivalue data, characterized in that in the anisotropy of a dot pattern generated only by a threshold matrix, the dot pattern has a spectrum having a mean value of 3 dB or more at every gray level and a maximum value of 10 dB or more, and wherein no moire having a visually undesired contrast or no virtual image such as a constant repetition pattern, etc. caused by the mask is generated in an output image.

According to the present invention, a high quality image with uniform dot distribution can be obtained using a small mask. A large mask is not necessary even with high printer resolution, thereby reducing the memory capacity for storing a mask.

Other features and advantages of the persent invention will be apparent from the following description taken in conjunction with the accompanying drawings, in which like reference characters designate the same or similar parts throughout the figures thereof.

BRIEF DESCRIPTION OF THE DRAWINGS

The accompanying drawings, which are incorporated in and constitute a part of the specification, illustrate embodiments of the invention and, together with the description, serve to explain the principles of the invention.

Fig. 1 shows a theoretical scheme to which a mask method according to this embodiment conforms.

Fig. 2 is a drawing describing regularities (2) and (3) according to this embodiment.

Fig. 3 is a drawing describing regularity (4) according to this embodiment.

Fig. 4 is a drawing describing regularities (1) and (4) according to this embodiment.

Fig. 5 is a flowchart showing a flow of steps for obtaining a dither matrix according to this embodiment.

Fig. 6 is a drawing describing a method for perturbing a dot pattern for the eighth gray level.

Fig. 7 schematically shows the shape of a repulsive potential.

Fig. 8 specifically shows the repulsive potential used in the embodiment.

Fig. 9 is a drawing describing a method for forming dot patterns for the third and subsequent gray levels.

Fig. 10 shows a method for changing step S3 in the flowchart in Fig. 5 and providing a pseudo periodic pattern for the first gray level.

Fig. 11 shows an example of steps for the second and subsequent gray levels used if step S3 in Fig. 5 has been changed.

Fig. 12 shows another example of steps for the second and subsequent gray levels used if step S3 in Fig. 5 has been changed.

Fig. 13 shows an example of configuration of a basic system for processing an image according to this embodiment.

Fig. 14 shows the shape and size of a unit pixel block corresponding to a unit mask and a set of element pixel blocks having the same dot array according to a first embodiment.

Fig. 15 shows how the unit pixel blocks according to the first embodiment are two-dimensionally arranged on an output screen.

Fig. 16 is a drawing describing steps S3 and S4 in the flowchart in Fig. 5 according to the first embodiment.

Fig. 17 shows a dot pattern for the eighth gray level generated in a screen of $256 \times 256$ pixels according to the first embodiment, wherein the dot pattern has been enlarged 10 times.

Fig. 18 shows a dot pattern for the 32nd gray level generated in a screen of $256 \times 256$ pixels according to the first embodiment, wherein the dot pattern has been enlarged 10 times.

Fig. 19 shows the one-dimensional spatial-frequency property in the radial direction of a dot pattern for the 32 gray level generated using a single unit mask according to the first embodiment.

Fig. 20 shows the anisotropy of the dot pattern for the 32 gray level generated using the single unit mask according to the first embodiment.

Fig. 21 shows the one-dimensional spatial-frequency property in the radial direction of a dot pattern for the 32 gray level generated in a screen of $256 \times 256$ pixels using the unit masks according to the first embodiment.

Fig. 22 shows the anisotropy of the dot pattern for the 32 gray level generated in the screen of $256 \times 256$ pixels using the unit masks according to the first embodiment.

Fig. 23 shows the shape and size of a unit pixel block corresponding to a unit mask and a set of element pixel blocks having the same dot array according to a second embodiment.

Fig. 24 shows how the unit pixel blocks according to the second embodiment are two-dimensionally arranged on an output screen.

Fig. 25 is a drawing describing steps S3 and S4 in the flowchart in Fig. 5 according to the second embodiment.

Fig. 26 shows a dot pattern for the eighth gray level generated in a screen of 256 × 256 pixels according to the second embodiment, wherein the dot pattern has been enlarged 10 times.

Fig. 27 shows a dot pattern for the 32nd gray level generated in a screen of 256 × 256 pixels according to the second embodiment, wherein the dot pattern has been enlarged 10 times.

Fig. 28 shows the one-dimensional spatial-frequency property in the radial direction of a dot pattern for the 32 gray level generated using a single unit mask according to the second embodiment.

Fig. 29 shows the anisotropy of the dot pattern for the 32 gray level generated using the single unit mask according to the second embodiment.

Fig. 30 shows the one-dimensional spatial-frequency property in the radial direction of a dot pattern for the 32 gray level generated in a screen of 256 × 256 pixels using the unit masks according to the second embodiment.

Fig. 31 shows the anisotropy of the dot pattern for the 32 gray level generated in the screen of 256 × 256 pixels using the unit masks according to the second embodiment.

Fig. 32 shows the shape and size of a unit pixel block corresponding to a unit mask and a set of element pixel blocks having the same dot array according to a third embodiment.

Fig. 33 shows how the unit pixel blocks according to the third embodiment are two-dimensionally arranged on an output screen.

Fig. 34 is a drawing describing steps S3 and S4 in the flowchart in Fig. 5 according to the third embodiment.

Fig. 35 shows a Gaussian weighting applied to small pixel blocks in determining in probability one pixel in the small pixel block to which a dot for the second gray level is provided according to the third embodiment.

Fig. 36 is a drawing describing steps S3 and S4 in the flowchart in Fig. 5 according to the third embodiment.

Fig. 37 shows a dot pattern for the eighth gray level generated in a screen of 256 × 256 pixels according to the third embodiment, wherein the dot pattern has been enlarged 10 times.

Fig. 38 shows a dot pattern for the 32nd gray level generated in a screen of 256 × 256 pixels according to the third embodiment, wherein the dot pattern has been enlarged 10 times.

Fig. 39 shows the one-dimensional spatial-frequency property in the radial direction of a dot pattern for the 32 gray level generated using a single unit mask according to the third embodiment.

Fig. 40 shows the anisotropy of the dot pattern for the 32 gray level generated using the single unit mask according to the third embodiment.

Fig. 41 shows the one-dimensional spatial-frequency property in the radial direction of a dot pattern for the 32 gray level generated in a screen of 256 × 256 pixels using the unit masks according to the third embodiment.

Fig. 42 shows the anisotropy of the dot pattern for the 32 gray level generated in the screen of 256 × 256 pixels using the unit masks according to the third embodiment.

Fig. 43 shows the shape and size of a unit pixel block corresponding to an initially assumed unit mask and a set of element pixel blocks having the same dot array according to a fourth embodiment.

Fig. 44 shows the shape and size of a unit pixel block corresponding to an actually created unit mask and a set of element pixel blocks having the same dot array according to the fourth embodiment.

Fig. 45 shows how the unit pixel blocks according to the fourth embodiment are two-dimensionally arranged on an output screen.

Fig. 46 is a drawing describing steps S3 and S4 in the flowchart in Fig. 5 according to the fourth embodiment.

Fig. 47 shows a dot pattern for the eighth gray level generated in a screen of 256 × 256 pixels according to the fourth embodiment, wherein the dot pattern has been enlarged 10 times.

Fig. 48 shows a dot pattern for the 32nd gray level generated in a screen of 256 × 256 pixels according to the fourth embodiment, wherein the dot pattern has been enlarged 10 times.

Fig. 49 shows the one-dimensional spatial-frequency property in the radial direction of a dot pattern for the 32 gray level generated using a single unit mask according to the fourth embodiment.

Fig. 50 shows the anisotropy of the dot pattern for the 32 gray level generated using the single unit mask according to the fourth embodiment.

Fig. 51 shows values obtained by subtracting from the anisotropy values of the dot pattern for the 32nd gray level generated using the single unit mask according to the fourth embodiment, the anisotropy values of a dot pattern obtained using a blue mask and cut out in the same mask shape as in the embodiment, in order to eliminate the effects of the shape anisotropy of the unit mask according to this embodiment.

Fig. 52 shows the one-dimensional spatial-frequency property in the radial direction of a dot pattern for the 32 gray level generated in a screen of 256 × 256 pixels using the unit masks according to the fourth embodiment.

Fig. 53 shows the anisotropy of the dot pattern for the 32 gray level generated in the screen of 256 × 256 pixels using the unit masks according to the fourth embodiment.

Fig. 54 shows the shape and size of a unit pixel block corresponding to an initially assumed unit mask and a set of element pixel blocks having the same dot array according to a fifth embodiment.

Fig. 55 shows the shape and size of a unit pixel block corresponding to an actually created unit mask and a set of element pixel blocks having the same dot array according to the fifth embodiment.

Fig. 56 shows how the unit pixel blocks according to the fifth embodiment are two-dimensionally arranged on an output screen.

Fig. 57 is a drawing describing steps S3 and S4 in the flowchart in Fig. 5 according to the fifth embodiment.

Fig. 58 is a drawing for describing a rule for selecting one pixel from a small pixel block to which a dot for the second gray level is provided according to the fifth embodiment.

Fig. 59 shows a dot pattern for the eighth gray level generated in a screen of 256 × 256 pixels according to the fifth embodiment, wherein the dot pattern has been enlarged 10 times.

Fig. 60 shows a dot pattern for the 32nd gray level generated in a screen of 256 × 256 pixels according to the fifth embodiment, wherein the dot pattern has been enlarged 10 times.

Fig. 61 shows the one-dimensional spatial-frequency property in the radial direction of a dot pattern for the 32 gray level generated using a single unit mask according to the fifth embodiment.

Fig. 62 shows the anisotropy of the dot pattern for the 32 gray level generated using the single unit mask according to the fifth embodiment.

Fig. 63 shows values obtained by subtracting from the anisotropy values of the dot pattern for the 32nd gray level generated using the single unit mask according to the fourth embodiment, the anisotropy values of a dot pattern obtained using a blue mask and cut out in the same mask shape as in the embodiment, in order to eliminate the effects of the shape anisotropy of the unit mask according to this embodiment.

Fig. 64 shows the one-dimensional spatial-frequency property in the radial direction of a dot pattern for the 32 gray level generated in a screen of 256 × 256 pixels using the unit masks according to the fifth embodiment.

Fig. 65 shows the anisotropy of the dot pattern for the 32 gray level generated in the screen of 256 × 256 pixels using the unit masks according to the fifth embodiment.

Fig. 66 shows a part of a gray scale output using a 600-dpi printer and the masks according to the second embodiment, which has been magnified several times.

Fig. 67 shows a part of a gray scale output using a 600-dpi printer and the masks according to the fourth embodiment, which has been magnified several times.

Fig. 68 shows a theoretical scheme to which the dithering method having a blue noise property conforms.

Fig. 69 shows a dot pattern for the first gray level according to the organizational dithering method.

Fig. 70 shows a dot pattern for the first gray level according to the blue noise mask method.

Fig. 71 shows a part of a gray scale output using a 600-dpi printer and a blue noise mask of 256 × 256 pixels, which has been magnified several times.

Fig. 72 shows a part of a gray scale output using a 600-dpi printer and the blue noise mask of 128 × 128 pixels, which has been magnified several times.

Fig. 73 shows a part of a gray scale output using a 600-dpi printer and a blue noise mask of 64 × 64 pixels, which has been magnified several times.

Fig. 74 shows the one-dimensional spatial-frequency property in the radial direction of a dot pattern for the 32 gray level generated using a single blue noise mask of 128 × 128 pixels.

Fig. 75 shows the anisotropy of the dot pattern for the 32 gray level generated using the single blue noise mask of 128 × 128 pixels.

Fig. 76 shows the one-dimensional spatial-frequency property in the radial direction of a dot pattern for the 32 gray level generated in a screen of 256 × 256 pixels using the blue noise mask of 128 × 128 pixels.

Fig. 77 shows the anisotropy of the dot pattern for the 32 gray level generated in the screen of 256 × 256 pixels using the blue noise mask of 128 × 128 pixels.

Fig. 78 shows the one-dimensional spatial-frequency property in the radial direction of a dot pattern for the 32 gray level generated using a single blue noise mask of 64 × 64 pixels.

Fig. 79 shows the anisotropy of the dot pattern for the 32 gray level generated using the single blue noise mask of 64 × 64 pixels.

Fig. 80 shows the one-dimensional spatial-frequency property in the radial direction of a dot pattern for the 32 gray level generated in a screen of 256 × 256 pixels using the blue noise mask of 64 × 64 pixels.

Fig. 81 shows the anisotropy of the dot pattern for the 32 gray level generated in the screen of 256 × 256 pixels using the blue noise mask of 64 × 64 pixels.

Fig. 82 shows a well-known technique using a pseudo periodic irregular pattern for a half-tone scale reproduction screen.

Fig. 83 shows a well-known technique using the clustered-dot dithering method with a cross-shaped threshold matrix.

Fig. 84 shows the well-known technique using the clustered-dot dithering method with the cross-shaped threshold matrix wherein a low irregularity (perturbation) has been introduced into a dot pattern for the first dot pattern.

## DETAILED DESCRIPTION OF THE PREFERRED EMBODIMENTS

Preferred embodiments of the present invention will now be described in detail in accordance with the accompanying drawings.

Described below are the embodiments of the present invention.

The present invention can be applied to represent gray scales with an apparatus such as a conventional ink jet printer, a bubble-jet (BJ) printer, etc. for generating, for a simplest example, an image by determining whether or not a dot of ink is to be applied to each pixel of an output image. Similarly, it can be applied to represent gray scales with a liquid crystal device, etc. for displaying an image in shadings.

More practically, gray scales can be desirably represented using an ink jet printer, etc. for converting a monochrome or color image of continuous gray levels into a binary or multivalue image and outputting it, or using such appliances as a laser beam printer, facsimile, a printing apparatus, etc.

Furthermore, the present invention is more effective with higher resolution over 600 dpi through 1200 dpi of an output device such as a printer, etc.

To more easily understand the embodiments of the present invention, the problems with the conventional blue-noise mask method are described in detail, and then the important points of the embodiments are explained furthermore in detail.

Described below is the reason why the above-described large blue-noise mask is required.

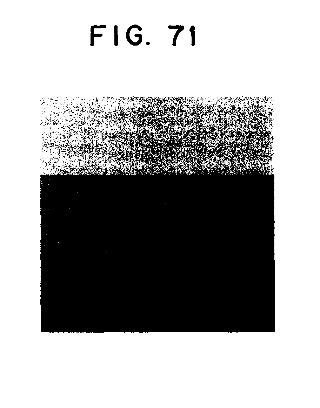

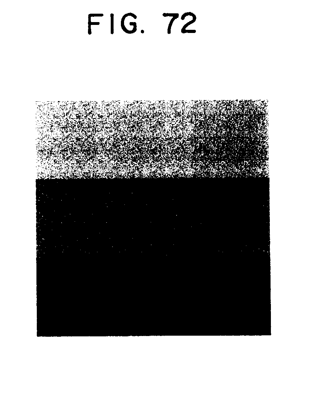

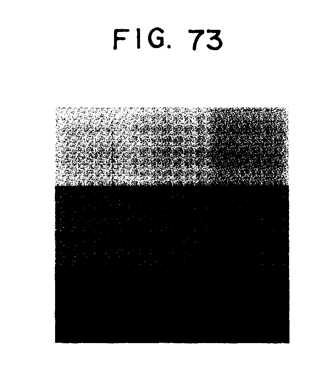

We carried out experiments to study quality of images produced by the above blue-noise mask method under the condition that the number of gray levels reproducible in output images should be 256, using mainly an ink jet printer with 600 dpi which is commercially available. In accordance with the disclosed methods for preparing blue-noise masks (USP 5,111,310 and others; T. Mitsa and K. J. Parker, J. Opt. Soc. Am., 9, pp. 1920-1929 (1992)); we made three masks with different sizes, i.e., 256 $\times$ 256 elements (10.8 mm square on an output-image plane), 128 $\times$ 128 elements (5.4 mm square), and 64 $\times$ 64 elements (2.7 mm square). First, we visually estimated quality of output images produced by using the above blue-noise masks. The input image we used was a gray scale consisting of a number of 18.5 mm square images, each of which has a constant gray level, and their gray levels change step by step like a stair up to 256 gray level. Parts of output images of the above gray scale are shown in order of mask size in Fig. 71 (256 $\times$ 256), Fig. 72 (128 $\times$ 128), and Fig. 73 (64 $\times$ 64). Each figure illustrates 30th, 31st, and 32nd gray levels from left to right in the upper line, 40th, 41st, and 42nd gray levels in the middle line, and 50th, 51st, and 52nd gray levels in the bottom line. However, the figures are copied from the original image on a printer, and the contrast in shadings has somewhat changed due to the non-linear characteristic.

Although about 2 $\times$ 2 = 4 pieces of a 10.8 mm square blue-noise mask pattern produced by the above 256 $\times$ 256 blue-noise mask should be included in each square image, no periodic pattern is perceived whereas some irregular distribution of density or, in other words, weak low frequency graininess is observed in Fig. 71. Results of estimation for gray level images other than those shown in this figure were almost similar to the above result.

However, in the case of the above blue-noise mask with the size of 128 $\times$ 128, a two-dimensional periodic pattern consisting of about 3 $\times$ 3 = 9 pieces of mask patterns, each of which is produced by the single mask, is appeared at many gray-level square images shown in Fig. 72. These appearances of output images are not suitable for practical use.

In the case of the above blue-noise mask with the size of 64 $\times$ 64 elements, the situation gets worse as shown in Fig. 73, where a two-dimensional lattice pattern with 2.7 mm periods can be clearly observed in almost all gray level range. The above situations indicate that, when the mask size decreases, since the gradient of spatial variation concerning the density of dots increases, irregularity on a mask pattern is relatively emphasized, resulting in an output image in which the same mask patterns with irregular density distribution of dots are periodically laid down two-dimensionally. If the period becomes a few mm which is a distance sensitive for the eye, we can perceive an artifact of the two-dimensional lattice pattern in the output image.

According to the above results, we can conclude that the blue-noise mask with 256 $\times$ 256 elements gives the size suitable for an ink jet printer with 600 dpi.

For printers with low resolution of 300 through 500 dpi, that is, for example, with 300 dpi, a distinct artifact is obtained in a regular pattern specific to a mask in the dispersed-dot dithering method whereas an artifact as shown in Fig. 72 is less perceivable with the 128 $\times$ 128 blue-noise mask. However, when the resolution of the printer is as high as 600 dpi, the size of a dot pattern generated by a piece of mask becomes smaller, and a periodic artifact in the dispersed-dot dithering method becomes less perceivable while an artifact in the blue-noise mask method is more perceivable as shown in Fig. 72. That is, to obtain an acceptable dot pattern in the blue-noise mask method, a larger mask is required with a higher resolution printer.

Next, we try to quantitatively investigate in the spectrum domain as to whether dot patterns produced by using aforementioned blue-noise masks with different sizes have blue-noise properties. This time, the output image size is fixed to the size of mask patterns of the 256 $\times$ 256 blue-noise mask. The size is the same as the screen used when Ulichney (p. 54) investigated the one-dimensional frequency characteristic Pr(fr) (the power spectrum averaged within individual annular domains with each radius fr in the two-dimensional spatial frequency domain displayed with the radius direction fr as a horizontal axis) and the anisotropy (Ulichney, p. 56).

Ulichney defines the anisotropy in the error diffusion method as follows.

$$\text{Anisotropy} = \frac{s^2(fr)}{P^2(fr)} \qquad (1)$$

where $s^2(fr)$ denotes the variance of one-dimensional power spectrum $Pr(fr)$ and $Pr^2(fr)$ is a square of the power spectrum. In the case of error diffusion method, since a dot pattern differs every time when the location of the dot pattern in an output image with a certain gray level differs, the power spectrum of ten samples of $256 \times 256$ screen is calculated, and the power spectrum is defined for the gray level as an average of 10 different samples of power spectrum under the supposition that individual power spectrums are independent of one another. Then, the value of anisotropy equals -10 dB for the case of being completely isotropic.

It should be noted that if a dot pattern is isotropic, it is non-periodic but that the converse is not always true. Conversely speaking, if a dot pattern is periodic, it is always anisotropic. As shown above, it should be noted that a dot pattern must be non-periodic rather than isotropic and have no correlated artifact so as to be the blue-noise pattern defined by Ulichney, thus, a visually pleasing pattern.

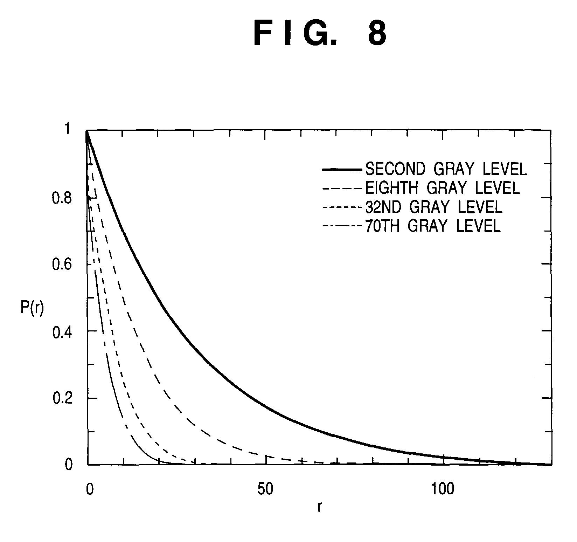

As described by Ulichney (§8.2) in the error diffusion method introduced by Floyd and Steinberg, although images at several gray levels are represented by pleasingly isotropic, structureless dot patterns, correlated artifacts in many of the gray level patterns and artifacts of directional hysteresis in very light and very dark regions of images, etc. are observed. According to graphs illustrating anisotropy of the above method (Ulichney, Fig. 8.8), the measure of anisotropy averaged across all available frequency range at seven gray levels being able to refer shows over -6 dB, when the maximum of gray level number g is normalized to 1.

In addition, the maximum anisotropy value is 0 dB or more at the sixth gray level and -2 dB at g = 7/8. The smaller number of dots near the lowest or highest frequency causes the value of anisotropy to vary significantly, so these variations must be eliminated.

If any spectrum has at least one frequency corresponding to an aniostropy value of 0 dB or more, such a pattern is especially anisotropic (Ulichney, cited above, p. 242). Actually, correlated artifacts are unexceptionally observed at the sixth level at which the mean anisotropy value is -6 dB or more and at which the maximum anisotropy value is 0 dB or more. At g = 7/8, however, the maximum value does not reach 0 dB, the mean value is high, -5.5 dB, and a few artifacts appear.

Further, in error diffusion method by Jarvis et al., in which some of the artifacts seen in error diffusion method by Floyd and Steinberg are reduced, directional hysteresis in the very dark and light regions has increased, and pixels are clustered together more in the middle gray region (Ulichney, §8.2.1, p. 253), increasing graininess. Accordingly, it is apparent that the anisotropy in this error diffusion method becomes weaker than that in the error diffusion method by Floyd and Steinberg. By the way, in the error diffusion method by Jarvis et al., the average anisotropy at all five levels being able to refer is within the range from just over -7 dB to -4 dB, and their average amounts near -6 dB.

At the third gray level at which the mean anisotropy value is -7 dB odd or more and at which the maximum anisotropy value is 0 dB or more, artifacts are unexceptionally observed. Accordingly, in both error diffusion methods, artifacts can be assumed to unexceptionally appear in a dot pattern with a spectrum having a mean anisotropy value of -7 dB odd or more and a maximum anisotropy value of 0 dB or more.

Based on the above description, a dot pattern obtained by an error diffusion method and having a maximum anisotropy value of 0 dB or more and a mean anisotropy value of -7 dB odd or more cannot be assumed to have the blue-noise property but to have the non-blue-noise property. This is because as shown in Fig. 68 based on Ulichney (cited above), a dot pattern having the blue-noise property dose not essentially generate artifacts such as those described above. Accordingly, such a dot pattern can be determined to unexceptionally have the non-blue-noise property based on only the maximum and mean anisotropy values regardless of the power spectrum.

Furthermore, referencing the case of the number of gray levels g = 1/8 according to Jarvis et al. 's error diffusion method and if the number of low-frequency components is presumably small, the limit for the blue-noise property in terms of anisotropy may be defined as a dot pattern having a mean value of -7 dB or less. At this gray level, the maximum anisotropy value is relatively high, -2.5 dB.

The reason why g = 1/8 that is visually pleasing is selected as the limit for the blue-noise properties will be shown below. The shape of the power spectrum at g = 1/8 is very close to the shape of the ideal power spectrum of the blue noise shown by Ulichney (Ulichney, cited above, p. 238, Fig. 8.3). Compared to Ulichney's figure, however, this power spectrum at g = 1/8 has a very high peak at the position of a principal frequency fg, at which anisotropy has a maximum value. In addition, the mean anisotropy value is -7 dB and very close to the lower limit of the mean value, -7 dB odd of the anisotropy of the non-blue-noise property shown by this error diffusion method, indicating the relatively high anisotropy of this power spectrum. If these values concerning anisotropy are higher, the dot pattern has its visual properties rapidly degraded to clearly exhibit the non-blue-noise property. On the contrary, however, if the mean anisotropy value becomes -7 dB or less and approaches -10 dB (isotropic), the visual property is also degraded, as described below. That is, this gray level based on Jarvis et al.'s error diffusion method is very likely to be optimized so as to obtain the highest level of anisotropy for excellent visual properties.

Even if the maximum anisotropy value further increases above the level exhibiting the blue-noise property, the dispersed-dot dithering process can provide a very visually pleasing image, as understood when producing a dot pattern again at $g = 1/8$ (32nd gray level when the total number of gray levels is 256) using a 600-dpi printer. This dot pattern, however, doe not have the blue-noise property.

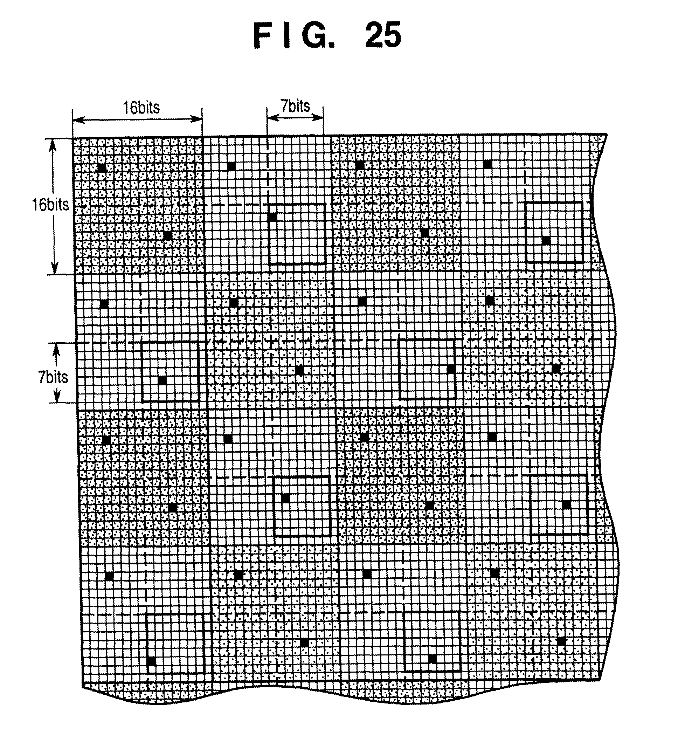

Spectral characteristics of perturbed error diffusion method with a stochastic error filter with one weight which is shown as an example producing more acceptable output images, indicate the following desirable properties at various gray levels (6 levels of $g = 1/32, 1/16, 1/8, 1/4, 1/2,$ and $3/4$) when the maximum of gray level number g is normalized to 1 (Ulichney, p. 272 and Fig. 8.15 ; IEEE, vol. 76, No. 1 (1988) p. 69 and Fig. 25 (P. 70),

    (1) very low anisotropy,
    (2) flat blue-noise region, and
    (3) cutoff at fg.

(1) is a property relating to anisotropy and (2) and (3) are properties relating to power spectra. Accordingly, whether a dot pattern has the blue-noise property cannot be evaluated from only one of the spectra, that is, either the anisotropy or power spectrum.

As described above, however, whether a dot pattern has the non-blue-noise property can be determined only from the maximum and mean anisotropy values. In light of the above definition of the blue noise, the level of anisotropy indicating a particularly high anisotropy is inconsistent with property (1) (very low anisotropy). Thus, the blue-noise property is defined only by the above spectrum properties (1) to (3) regardless of the resolution of the printer or the number of gray levels g in the dot pattern.

If the three conditions are met at all gray levels, that dot pattern can be assumed to have the blue-noise property. Strictly speaking, however, even the perturbed error diffusion method disclosed by Ulichney does not meet condition (2) at $g = 1/2$ and provides a relatively large number of low-frequency components. Consequently, the dot pattern is significantly granular. According to Ulichney, however, such a deviation from condition (2) falls within the allowable range of the blue-noise property, in contrast with the white noise. Thus, due to its basis on the blue-noise properties defined by Ulichney, the perturbed error diffusion method is characterized to strictly restrain the periodicity and correlated artifacts at all gray levels to prevent moire but is also characterized to be weak in retraining granularity.

In the above perturbed error diffusion method, the anisotropy values at three of the six gray levels, that is, $g = 1/8, 1/4,$ and $7/8$ are within the range of $-10\pm2.5$ dBin almost all frequency bands, indicating isotropy because the mean value is -10 dB. At the remaining three gray levels, however, the mean value is larger than -10 dB depending on the frequency band, definitely exhibiting anisotropy. At a gray level with a higher anisotropy, the maximum value is about -4 dB and the mean value is about -7 dB. Such anisotropy, however, exists in frequency bands lower than the principle frequency fg, and the power spectrum shows no peak at a particular frequency. Thus, no artifacts are sensed.

As described above, the limit for the blue-noise property has been set for $g = 1/8$ according to Jarvis et al.' s error diffusion method. According to the perturbed error diffusion method, when the number of gray levels $g = 1/8$, the mean anisotropy value is almost -10 dB, exhibiting a good anisotropy. The power spectrum, however, shows a large number of low-frequency components, indicating a substantially degraded granularity compared to the dot pattern at $g = 1/8$ according to Jarvis et al.'s error diffusion method.

The mask method can constantly provide the same dot pattern at the same gray level, thereby eliminating the need to obtain and average 10 samples. Accordingly, the correspondence between the error diffusion method and the mask method must be checked for the maximum and mean anisotropy values. Thus, Floyd and Steinberg's error diffusion method and Jarvis et al. 's error diffusion method were examined for the correspondence between these values for the respective methods and these values for each of the 10 samples. Even in the error diffusion method, actually viewed dot patterns are individual samples, so the anisotropy and power spectra for each sample have more direct correspondence with the visual properties.

First, if the anisotropy obtained by the error diffusion method has a peak value of about 5 dB or less, the difference between the mean anisotropy value of each sample and the isotropy reference value of 0 dB is a little lower than the half of the difference between the mean anisotropy value of the 10 samples and the reference value of -10 dB. This means that if the error diffusion method and the mask method are compared with each other for anisotropy and if the mask method exhibits a value half that in the error diffusion method in terms of the difference between the mean value and the reference value, these two methods may be determined to have an almost equal anisotropy, and more precisely speaking, the mask method may be determined to have a little higher anisotropy.

Next, each sample was checked for the maximum value indicating a significant anisotropy and that is 0 dB (+10 dB higher than the reference value of -10 dB) in the error diffusion method. Only the results are shown below. Despite the variation among the 10 individual samples, the values fell within the range of 5 dB$\pm$1 dB = 4 - 6 dB. In addition, in the error diffusion method, when the mean value of the case of anisotropy in which artifacts unexceptionally appear was assumed to have a maximum value of 0 dB or more, the maximum value was -7 dB odd, that is, 3 dB odd higher than the reference value of -10 dB. Accordingly, in the mask method, the corresponding mean value is less than 1.5 dB odd. When the mean value of each of the 10 samples was actually calculated, the lowest value was 0.6 dB.

In addition, with respect to the limit for the blue-noise property, a dot pattern having a mean anisotropy value of -7 dB or less and a maximum anisotropy value of -2.5 dB was specified referencing the case of the number of gray levels g = 1/8 according to Jarvis et al. 's error diffusion method. Thus, the limit for the blue-noise property according to the mask method is a dot pattern in which the mean anisotropy value is less than 1.5 dB. When the mean value of each of the 10 samples was actually calculated, the largest value was 0.9 dB. This value is higher than the lower limit of the mean value of the samples that should have the non-blue-noise property, that is, 0.6 dB.

The maximum value of each of the 10 samples varied between 2.5 and 4 dB, and the mean value was 3.2 dB. Nine of the ten samples, however, had the maximum value at different frequencies that were lower than fg that was a frequency having the maximum anisotropy value according to the error diffusion method, and the largest of these maximum values reached 5.4 dB. Artifacts, however, were not sensed.

The reason will be shown below. According to the error diffusion method, the 10 samples all have different dot patterns. Besides, for example, the spectrum having a maximum value of 5.4 dB belongs to one particular sample and is in a frequency band lower than the principle frequency fg, and in the power spectrum, these frequencies have no peak. This means that a very small number of dots are related to anisotropy, preventing artifacts from being doubly sensed. Consequently, for the maximum value of each pattern, only the frequency having the maximum value according to the error diffusion method must be noted.

Despite numerically equivalent anisotropy, the mask method is more anisotropic because it allows artifacts to be visually sensed more easily. This is because the mask method repeats the same dot pattern corresponding to one mask, resulting in a more significantly biased dot distribution. The significance of the bias of the dot distribution increases with decreasing size of the mask. As a result, even if the dot pattern corresponding to one mask exhibits anisotropy numerically equivalent to that in the error diffusion method, the mask method provides stronger non-blue-noise properties including the above visual properties, and the level of these properties increases with decreasing mask size.

In addition, in relation to the visual characteristics, a higher resolution printer generates a more distinct artifact even if the size of a mask is the same.

Returning to the previous subject, even in the mask method, the non-blue noise can be unexceptionally determined only from the maximum and mean values of anisotropy. Since the maximum value, which corresponds to 0 dB according to the error diffusion method, falls within the range of 5 dB±1 dB = 4 dB - 6 dB according to the mask method, a maximum value of 4 dB or more can be determined to indicate the non-blue-noise property. Since, however, the largest of the maximum values of the respective patterns is 4 dB at g = 1/8 that is the number of gray levels according to Jarvis et al., a pattern that inherently exhibits the blue-noise property meets the requirements for the non-blue noise if only the maximum values are taken into account. To exclude such examples, a condition for the mean anisotropy value must be set in addition to the condition that the maximum value is 4 dB or more, preferably 5 dB or more.

With respect to the mean anisotropy value, the lower limit value of 0.6 dB for each sample indicating the non-blue-noise property was in fact higher than the upper limit value for a sample for the error diffusion method indicating the limit for the blue noise property. Thus, to make reliable determinations, the lower limit must be set higher than the upper limit of 0.9 dB. Thus, in a dot pattern according to the error diffusion method having a maximum anisotropy value of 3 dB and a mean anisotropy value of almost -5.5 dB, the mean value of each sample was examined to find that the lower limit was 1.2 dB. Thus, this value is defined as the lower limit of the mean anisotropy value for a dot pattern exhibiting the non-blue-noise property. The mean anisotropy value of -5.5 dB corresponds to the mean value at g = 7/8 according to Floyd and Steinberg's error diffusion method which value indicates the non-blue-noise property because at this value, artifacts, insignificant as they are, are observed though the maximum value is less than 0 dB.

In this manner, even in the mask method, a dot pattern can be determined to have the non-blue-noise property based on only the two values of anisotropy. In this case, according to the error diffusion method, when the reference isotropy value was 0 dB, the maximum value was 10 dB or more and the mean value was 3 dB odd or more. According to the mask method, however, the maximum value must be 4 dB or more, preferably, 5 dB or more, and the mean value must be 1.2 dB or more. Of the three properties of the blue noise defined for the error diffusion method by Ulichney, property (1) _very low anisotropy_ must use the above two values as references.

In either half tone processing method, according to the blue-noise property defined by Ulichney, whether a dot pattern has the blue-noise property cannot be determined from only one of the spectra, that is, either the anisotropy or power spectrum. An actual example is shown below in which despite a relatively good blue-noise power spectrum shown by each sample, the maximum anisotropy value for the error diffusion method exhibits the non-blue-noise property.

The maximum anisotropy value at g = 1/16 according to Jarvis et al.'s error diffusion method is about 1 dB, exhibiting the non-blue noise. In this case, artifacts are present in the dot pattern due to the directional hysteresis. When the power spectrum of each pattern was calculated, 2 of the 10 samples exhibited a relatively good blue-noise power spectrum. This evidently indicates that even with the mask method, whether the dot pattern is the blue noise cannot be defined using only the properties of the power spectrum.

In the perturbed error diffusion method indicating the blue-noise properties, three of six gray levels are isotropic, and two gray levels indicate the difference of 1 dB or lower than a reference value of the mean value, or approximately 1.5 dB at the highest anisotropic gray level. Therefore, in the mask method, if a mean value of anisotropy is less than 0.8 dB, then it is assumed to have the same blue-noise properties as the perturbed error diffusion method.

In all the inventions relating to the blue-noise mask method (Japanese Patent Publication No. 2622429, USP 5,111,310, USP 5,323,247, USP 5,341,228, USP 5,477,305, and USP 5,543,941), the blue-noise mask patterns produced by the patented method are more isotropic than those produced by the perturbed error diffusion method by Ulichney. We first evaluate spectral characteristics of individual dot patterns generated by a piece of individual masks and, then, of individual dot patterns produced in the square of 256 × 256 pixels for three types of blue-noise masks, which is the standard size when Ulichney evaluated spectral characteristics of dot patterns generated by various error diffusion methods.

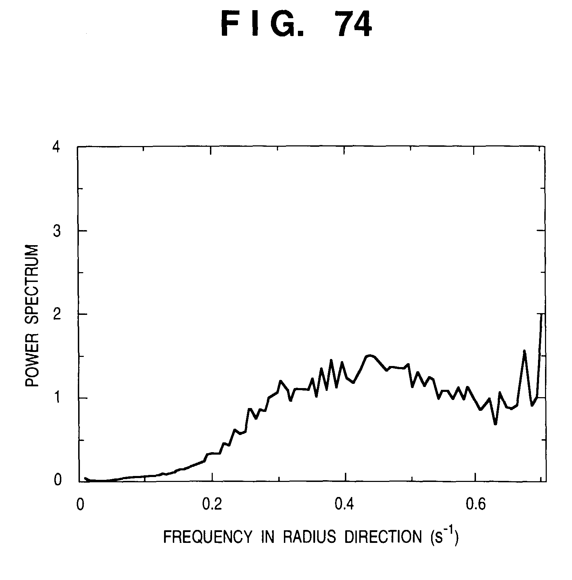

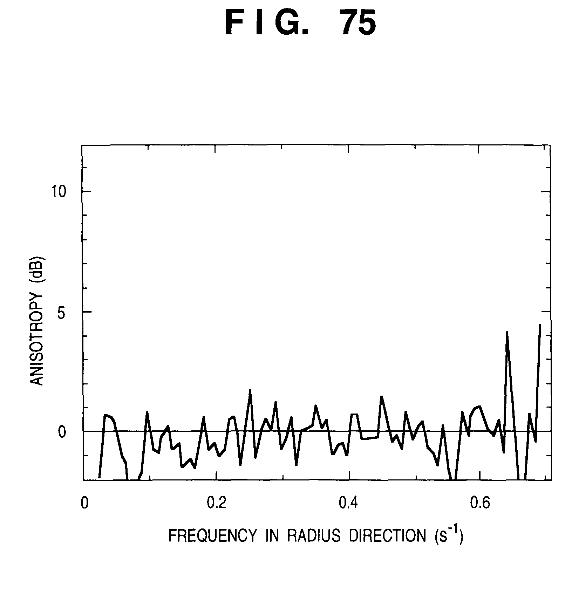

Fig. 74 shows a one-dimensional power spectrum of a dot pattern at the 32nd gray level for one piece of 128 × 128 blue-noise mask. Fig. 75 shows the anisotropy.

Since the above power spectrum shows a little of low-frequency components, together with substantial flat blue-noise region, and the average anisotropy indicating 0 dB. However, inspecting anisotropy at individual frequencies, trembling around 0 dB is observed together with the maximum amplitude of 4 dB. This measure itself is more anisotropy than that of the perturbed error diffusion method by Ulichney. Although similar anisotropic property is obtained at other various gray levels, anisotropy of mask patterns produced by a piece of the 128 × 128 blue-noise mask are more isotropic than dot patterns produced by the perturbed error diffusion method in the sense of the average anisotropy.

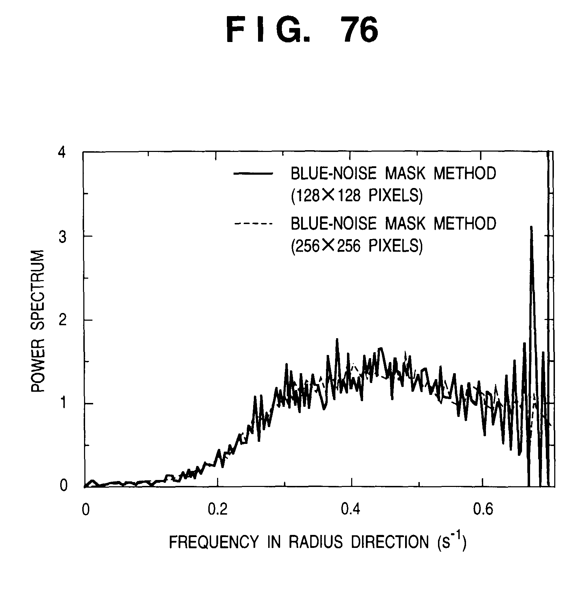

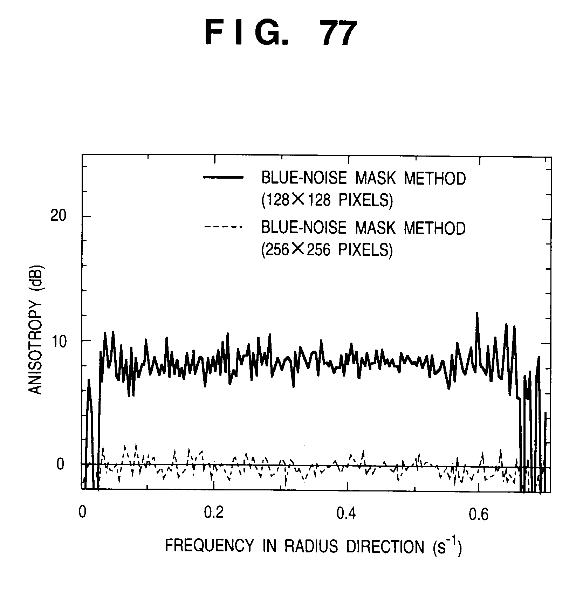

Fig. 76 shows the one-dimentional power spectrum on the dot pattern at 32nd gray level produced by the above 128 × 128 blue-noise mask in the output-image size of 256 × 256 pixels, and Fig. 77 shows anisotropy on the pattern. In these figures, characteristics concerning the 256 × 256 blue-noise mask pattern are indicated by broken lines for comparison. First, broken lines show the superior blue-noise properties and, especially, the anisotropy measure is within the range of 0±1.5 dB, and similar characteristics are shown in the other gray levels. Hence, we can say that the 256 × 256 blue-noise mask produces superior mask patterns that are more isotropic than dot patterns produced by Ulichney's perturbed error diffusion method.

With respect to the one-dimentional power spectrum of the above dot pattern produced by using the 128 × 128 blue-noise mask, many isolated spectrums with sharp peaks are seen being superposed on the noise component and, at especially high frequency range, isolated spectrums are prominent. There are a plurality of spectra having a mean anisotropy value of about 9 dB and a maximum anisotropy value higher than 10 dB. Taking into consideration that all the spectrums on a dot pattern produced by dispersed-dot dithering method indicate over 10 dB, this dot pattern in the output-image size of 256 × 256 pixels indicates very high anisotropy. This dot pattern clearly does not possess property of the blue-noise properties.

Since the average anisotropy measure on the mask pattern produced by a piece of the 128 × 128 blue-noise mask indicates 0 dB, we can say that this mask pattern substantially possesses the blue-noise properties. However, as a conclusion, the dot pattern generated on the 256 × 256 screen does not possess the blue-noise properties.

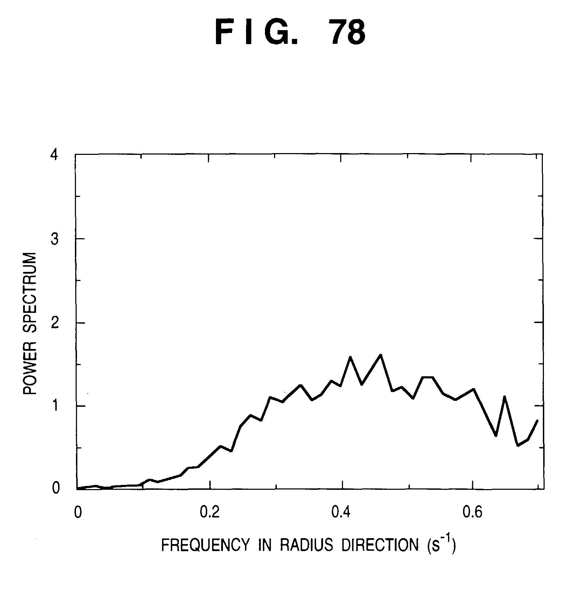

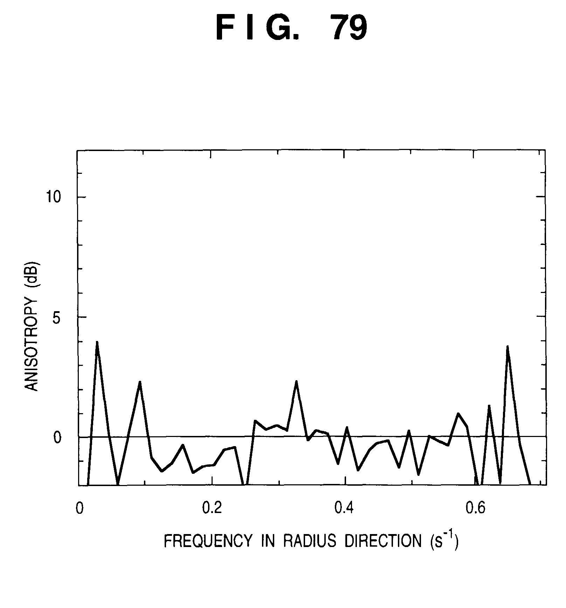

Fig. 78 shows the one-dimensional power spectrum on the dot pattern at the 32nd gray level produced by a piece of 64 × 64 blue-noise mask. Fig. 79 shows the anisotropy.

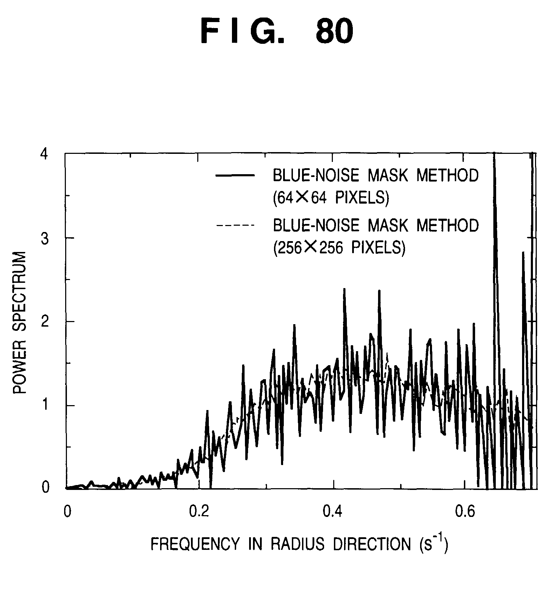

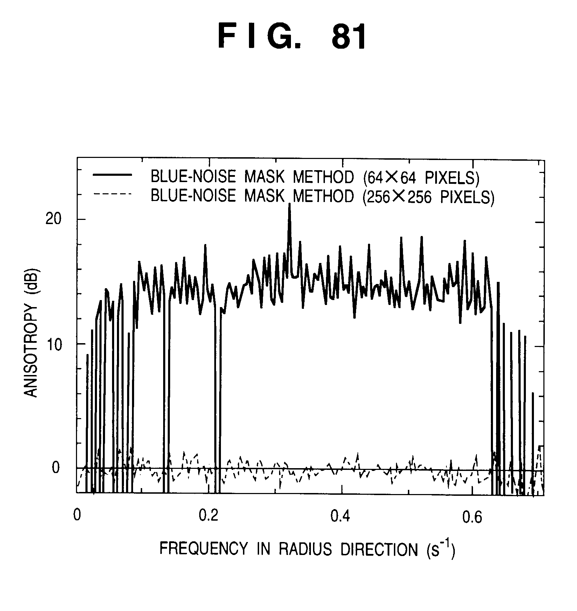

Fig. 80 shows the one-dimensional power spectrum on the dot pattern at the 32nd gray level produced by a piece of 64 × 64 blue-noise mask on the 256 × 256 screen. Fig. 81 shows the anisotropy. The value of the 256 × 256 blue-noise mask is indicated by broken lines. The characteristics at other gray levels are similar to the characteristics shown in the figures.

In Figs. 78 and 79, since the dot pattern from one piece of 64 × 64 blue-noise mask has a mean value of 0 dB of anisotropy, it can be assumed to have the blue-noise properties. However, since its anisotropy refers to a plurality of spectra having a maximum value of 4 dB, the smaller the mask, the larger the bias of a dot pattern in the blue-noise mask method.

In Fig. 80, a dot pattern generated using the mask on the 256 × 256 screen indicates a mean value of anisotropy as high as 14 dB, thereby having no blue-noise properties.

Blue-noise properties are defined by Ulichney inherently for evaluating spectral characteristics of dot patterns produced by various error diffusion methods in the standard output-image size of 256 × 256 pixels. In blue-noise masks with the size of 64 × 64 elements and 128 × 128 elements, although individual mask patterns indicate blue-noise properties, dot patterns produced in the above standard output-image size do not have all the blue-noise properties. In this way, unlike the descriptions of the specifications (USP 5,111,310, etc.) that the pattern is more isotropic than that obtained by the perturbed error diffusion method by Ulichney. The above two different experimental results, i.e., the visual estimation and the spectral evaluation of the dot patterns are compared.

Of the different three sizes of blue-noise masks, in the case of masks with the size smaller than 256 × 256 elements, even if isotropy of each mask pattern itself is better than that of the perturbed error diffusion method, dot patterns individually produced in the standard output-image size of 256 × 256 pixels are far from blue-noise properties, visually resulting in conspicuous periodic artifacts consisting of repetition of the same irregular density patterns each corresponding to the mask pattern. Accordingly, a visually pleasing blue-noise mask pattern is obtainable at any gray level only by using the 256 × 256 blue-noise mask , which produced dot patterns more isotropic than those produced by the perturbed error diffusion method.

As described above, although the anisotropy of a piece of mask is defined as a mean value for use in determining anisotropy, a slightest bias of the dot distribution, that is, the uneven density, repeatedly appears at a visually sensitive frequency in the mask method as pattern gets smaller, unlike the error diffusion method in principle, in which the same pattern is repeated. As a result, the pattern is visually perceived as artifacts.

Fig. 68 showing the logic scheme about the blue-noise properties implies that "a dot pattern is not visually pleasing unless it possesses the blue-noise spectrum in contraposition." That is, since the blue-noise mask method fundamentally follows the logic scheme shown in Fig. 68, the implication is correct when the mask is considerably smaller than the 256 × 256 reference screen.

As a result of the above-described investigation, to solve the problem of the inconsistency in principle about the periodicity when the blue-noise properties defined in the error diffusion method is realized by the blue-noise mask method, it clearly proves that a more flexible large mask should be used to obtain isotropy at least better than that by the perturbed error diffusion method. Since the mask size in the dispersed-dot dithering method is 16 × 16 = 256, a practical blue-noise mask size of 256 × 256 with a 600 dpi printer is 256 times as large as that.

The anisotropy of the dot pattern of the 256 × 256 screen size generated by a 256 × 256 blue-noise mask outputs a result better than that by the perturbed error diffusion method. However, if the anisotropy of a dot pattern is evaluated using a larger, for example, 512 × 512 screen, it logically indicates a value over 10 dB and has no blue-noise properties. Nevertheless, no artifacts are perceived, and it appears as if the logic scheme of the blue-noise properties shown in Fig. 68 were not followed.

In this case, it is necessary to suggest that, in the logic scheme shown in Fig. 68, a dot pattern is defined for the error diffusion method having no periodicity as the mask method has, and that the 256 × 256 screen is determined for use in evaluating the frequency characteristic. That is, it should be assumed that, in the logic scheme shown in Fig. 68, when it is applied to the mask method, a spectrum is evaluated with a dot pattern on the 256 × 256 screen, and if anisotropy and uniformity is better than in the perturbed error diffusion method, then it is not visually perceived even if it is repeated for a long but not visually sensitive periodicity without discontinuity.

On the other hand, a dot pattern having high anisotropy than that by the perturbed error diffusion method, that is, having a bias in the dot distribution, can be perceived as artifacts if the bias is distributed at visually sensitive intervals. The experiment with a 600 dpi printer has just proved the fact.

In another disclosed method (USP 5,477,305) of generating blue-noise mask, for example, it is described that a 256 × 256 mask is necessary for a 256 gray scales to be capable of freely changing the accumulative distribution function and mapping non-linearity of input/output characteristics. On the other hand, as described above, the invention of the blue-noise mask method realizes a blue-noise mask pattern more isotropic than that by the perturbed error diffusion method shown by Ulichney. However, according to the result of the above-described experiments, a large mask of 256 × 256 is required to obtain such blue-noise mask patterns with a 600 dpi printer which is higher in resolution than the maximum 500 dpi of the average according to the invention in that method.

In addition, it is not true that the 256 × 256 blue-noise mask can be practically used with a 1,200 dpi printer only because that it can be practically used with a 600 dpi printer. Actually, a super resolution laser printer (of symbolic Sciences International Inc.) is used to test it. The resolution is set to two levels, that is, 1016 dpi and 2032 dpi. The size of the 256 × 256 blue-noise mask on the screen is 6.4 mm square for the resolution of 1016 dpi; and 3.2 mm square for the resolution of 2032 dpi. In the experiment for the resolution of 1016 dpi, strong graininess is obtained at a gray level lower than the 120th gray level. On the other hand, at a resolution higher than 160th gray level, the periodicity corresponding to the size of a mask can be perceived with low contrast, though. At the resolution of 2,032 dpi, the obtained graininess is lower than in the experiment for the resolution of 1016 dpi, but the periodicity corresponding to the size of a high contrast mask can be perceived at a gray level higher than the 160th gray level. Thus, with a high resolution printer of approximately 1200 dpi or higher, the size of a blue-noise mask to obtain a pleasing visual characteristic should be larger than 256 × 256.

On the other hand, a mask size in the dispersed-dot dithering method is fundamentally independent of the resolution of a printer, and the higher the resolution printer test gets, the better the visual characteristics is obtained.

Next, the unevenness in the dot distribution, which is the unique problem with the blue-noise mask method, is compared with that by the dispersed-dot dithering method.

When a printer with 600 dpi resolution is used, the mask size in the 256 gray scale dispersed-dot dithering method is 0.68 mm. As long as a step gray scale is output, the uniformity of a dot pattern is naturally better than that in the dispersed-dot dithering method because its regularity is superior to that of the blue-noise mask method. When a natural image taken by a digital camera using a CCD sensor of about 580,000 pixels is used as an input image, and unless the screen contains a periodic pattern of about 0.68 mm having the contrast or below as converted on the screen, then no moire is generated or the difference in the quality of an output image between the blue-noise mask method and the dispersed-dot dithering method is hardly perceived. However, in the gray scale, the odd number gray level up to the 50th level clearly indicates a dot pattern of 0.68 mm periodicity as a mask size.

With a printer of the resolution of 1200 dpi, the visual uniformity in the dispersed-dot dithering method is furthermore improved, and the dot pattern of the periodicity of 0.34 mm which is the mask size is hardly perceivable at a low gray level with the effect of smaller dots. Therefore, if an image taken by a digital camera using a CCD image sensor of about 350,000 pixels per 1/3 inch in the VGA system (640 pixels × 480 pixels) is output using a 1200 dpi printer in a card size (8 cm × 12.5 cm), then the dispersed-dot dithering method is a sufficiently practical method.

Since a pattern having the local periodicity of about 0.34 mm which may cause moire on the screen is a periodic pattern of about 17 $\mu$m on the sensor, and is lower than 20 $\mu$m which is the maximum resolution of the sensor, even a pattern having the periodicity around the input image cannot be resolved with sufficient contract, thereby suppressing perceivable moire. Practically, an image sensor has a complementary or primary color filter, and is normally provided with a low-pass filter to prevent moire from being generated between the periodic patterns of an image. Therefore, the resolution is furthermore reduced down to the 70 or 80 percent of the maximum resolution, that is, about 25 to 29 $\mu$m, thereby also reducing the contrast.

In this case, the size of a mask by the dispersed-dot dithering method is 1/256 or less of the size of the mask in the blue-noise mask method. Therefore, it is costly to require a small ROM capacity for storage of a threshold of a mask in the direct print system for outputting an image stored in the digital camera directly on a printer without a computer.

Recently, a digital camera comprising a 1/2 inch CCD image sensor of 1,300,000 pixels has been marketed by numbers of manufacturers at price of 100,000 yen or less. Such digital cameras can clearly store even fine stripes on clothes.

Therefore, when such an input image is binarised and output with a 1200 dpi printer and by the dispersed-dot dithering method, moire can be appeared as artifacts. In such a digital image system, the blue-noise mask method in which the mask is large and does not have periodicity is advantageous in that it can generally prevent moire. However, when an input image such as a CG image, etc. which has not a fine periodicity pattern is normally better with the dispersed-dot dithering method from the point of eveness.

When only natural images are taken, the detailed comparison proves that the quality of an image by the error diffusion method with a 600 dpi printer is better than that by the blue-noise mask method except the problem with a processing time. However, with a 1200 dpi printer, there is little difference between the blue-noise mask method and the error diffusion method, and the blue-noise mask method excels in the processing speed.

As described above, the resolution of a printer as an output device used in the latest consumer digital image processing system is outstandingly improved compared with that in 8 years ago when the blue-noise mask method was invented. That is, the resolution is normally 600 dpi through 700 dip at minimum, and 1,200 dpi at maximum. In addition, a digital camera which did not exist then as an image input device can be classified into two classes, that is, a high class and a low class.

Thus, under the conditions that there have been various systems, it is certain that the blue-noise mask method cannot be the optimum solution to all systems as a gray scale processing method. That is, although the difference from other methods has been reduced these days, the error diffusion method still excels in the quality of an image in the resolution about 600 dpi, and the dispersed-dot dithering method excels in the quality of an image in the resolution about 1200 dpi.

Therefore, when a future system is taken into account base on an output device with the resolution about 600 dpi or more, the optimum solution does not, naturally, depend on each system, but makes the most of the dispersed-dot dithering method in which a high speed process can be performed with a small mask and excellent uniformity, and the blue-noise mask method in which no artifacts are generated with a small mask and desirable periodicity. The present embodiment aims at providing such a method.

An important element to be considered in designing the above-described ideal mask method is the characteristic of aperiodic pattern, that is, a spatial frequency and contrast, contained in a stored natural image when a natural image is an input image. Specifically, the characteristics of eyes viewing an output image provided through a gray scale process, that is, the frequency response of the eyes, should be considered. As described above, it is necessary to carefully consider that the sensitivity of eyes is high to the periodic pattern from 1 mm to several mm. However, the periodic patterns change their shading in the format of a sine function, and have the contrast of 1.

The parameters on the system side directly associated with the above-described elements are shown below using a printer as an example. They can be the following four parameters as indicated by the results of the above-described investigation.

(1) pixel rate of a printer (dpi)
(2) screen size of an output image
(3) mask size
(4) number of gray levels

The main range of the above-described parameters to be considered at present when a new mask method is developed is described as follows.

(1) 600 dpi through 1200 dpi pixel rate of a printer
(2) size of a name card through A4 size
(3) 128 × 128 or smaller (256 gray scales, 1/4 or smaller of the optimum size of the blue-noise mask with a 600 dpi printer
(4) 256 or more

The reason for the 1/4 size or smaller of the optimum size is to reduce the cost for the direct print system.

The dot patterns by the blue-noise mask method and the dispersed-dot dithering method are quite different. That is, they are random properties (isotropy in spectrum domain) and regular properties (anisotropy in spectrum domain) respectively except common characteristics of few low frequency elements.

An example of the regularity introduced to the blue-noise mask method is a method of adopting a checker board pattern similar to the 128th gray level of the dispersed-dot dithering method at the 128th gray level of the blue-noise mask method so that the problem of the dot gain can be solved (M. Yao and K. J. Parker, Proc. SPIE, vol. 2411, pp. 221-225, 1995). To solve the problem of the dot gain, adjacent 2 × 2 = 4 pixels should be pixels of a square at the 128th gray level. A dot pattern generated with the check mask is a two-dimensional periodic pattern which has the highest contrast at the 128th gray level. Therefore, if an input image contains a pattern with high contrast periodicity close to the periodicity of the input image, it is predicted that moire will appear as artifacts. Actually, an object having a periodicity pattern is captured by a digital camera of 580,000 pixels, processed in gray scales using a 256 × 256 check mask, and output on a 600 dpi printer as an image of 1/2 size of a name card, and as a result clearly shows moire as artifacts. The quality of the image output using the mask is apparently worse than the quality of the image by the blue-noise mask method or the dispersed-dot dithering method.

The similar experiment is conducted on the 128th gray level of the check mask using the same checker board pattern as the 128th gray level in the dispersed-dot dithering method.

When a moire check pattern having fine periodicity is used as an input image, processed with the check mask, and output in a cabinet size on a 600 dpi printer, the output image indicates low contrast, but clear moire as artifacts. The total quality of the image excels that by the dispersed-dot dithering method, but when it is compared with the quality of the image by the blue-noise mask method, it is inferior in that there is the possibility of moire.

The anisotropy of a dot pattern processed using these two types of 256 × 256 check masks has a very high maximum value over a wide range of gray levels around the 128-th level including relatively low and high gray levels. Even in this case, the mean anisotropy value is low, almost 0 dB. Relating these two types of check masks, gray scales are generated to be variable in steps of gray levels with three sizes of 256 × 256, 128 × 128, and 64 × 64. Any of the check masks indicates low uniformity in the dot distribution at low gray levels as in the normal blue-noise mask method. Artifacts from repetitive dot patterns corresponding to the size of a mask are perceivable on the gray scales with the 128 × 128 and 64 × 64 check masks as shown in Figs. 72 and 73.

The logic scheme of the blue-noise properties shown in Fig. 68 indicates that the periodicity should be removed as much as possible to obtain a visually pleasing image. Therefore, the experiment obtained using the above-described check mask proves that simply introducing the periodicity (anisotropy) to the scheme invites the deterioration of the quality of an image in principle.

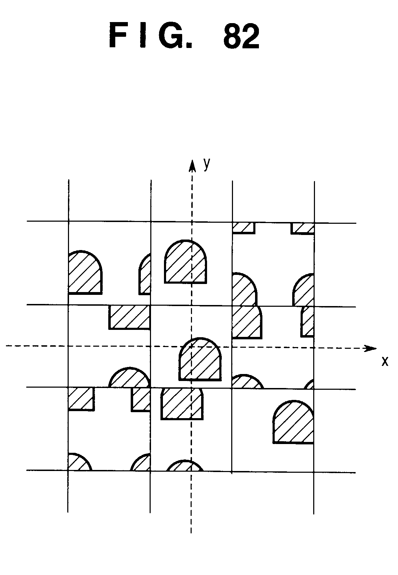

The attempt to implement the irregularity in the regular ordered dithering method has been made in the clustered-dot dithering method. Allebach and Liu (J. Opt. Soc. Am., vol. 66, No. 9, p. 909 (1976)) introduced the pseudo-periodicity at the center of each dot (corresponding to a cluster of dots in the clustered-dot dithering method) to avoid the generation of moire on the screen. Fig. 82 shows the outline of the pattern on the screen. In Fig. 82, a section containing a dot is called a cell, and nine cells are called a block. The central position of the dot with a shift from the normal position is limited to inside each cell including the boundary. Therefore, the irregularity includes certain regularity.

When the number of gray levels is 256, the dot patterns at the first and 255th gray levels can be set to have blue-noise properties. However, since the characteristic of the clustered-dot dithering method that the higher the gray level gets, the larger the cluster of dots gets remains unchanged, it is not applicable to a printer having the current resolution. In addition, to realize a mask having the blue-noise properties at the first gray level, the number of cells should be increased, and the block (mask) itself should be large enough as indicated relating to the blue-noise mask. Therefore, it is not applicable to the purpose of the present invention.

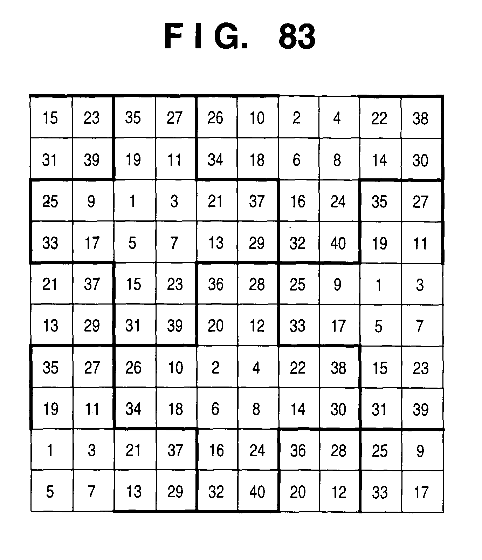

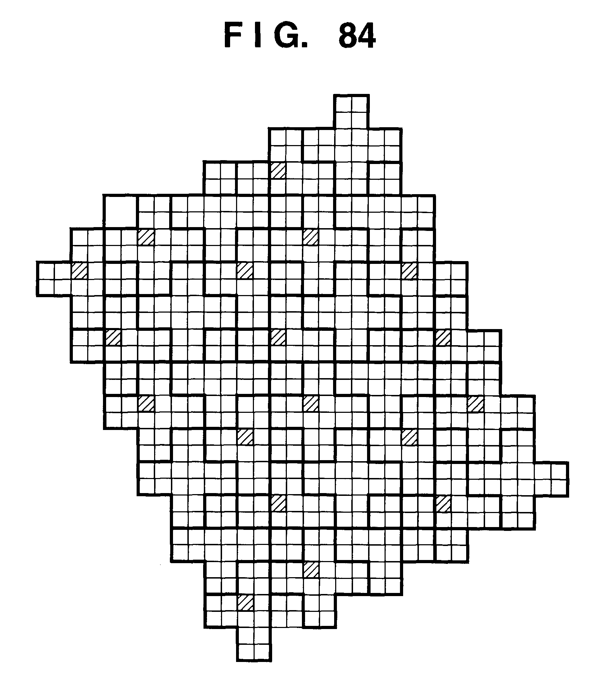

An attempt of introducing a change to the regularity of a mask in the clustered-dot dithering method (USP 4,752,822) is described below. Fig. 83 shows an example of a threshold matrix in the clustered-dot dithering method. Fig. 84 shows a dot pattern at the first gray level generated by the matrix.

In this method, two changed are detected. One is to provide a partial threshold matrix at an odd gray level and a partial threshold matrix at an even gray level, and the resolution is heightened by 40% by dividing the domain to which a threshold is assigned as shown in Fig. 83. The other is, also as shown in Fig. 83, to make the partial threshold matrix in the cross shape to give a tilt to the primary scanning direction of the printer and the mask arrangement direction. Actually, the first gray level shows a dot pattern a little more irregular than that of the first gray level in the clustered-dot dithering method as shown in Fig. 84. In this method, since the regular arrangement of a cluster of dots is obtained at a tilt by predetermined degrees (corresponding to the tilt of a screen) at and after the second gray level, it is not practical for a low resolution printer although the resolution is improved by 40%. However, in this method, since the primary scanning direction is not parallel to the dot arrangement direction, the problem that an uneven stripe is generated in each scanning direction when non-uniformity is detected in the primary and secondary scanning directions is reduced.

As described above, in the normal clustered-dot dithering method and the dispersed-dot dithering method, the dot pattern at the first gray level is the same if the number of gray levels to be reproduced is equal to that of each other. Therefore, the dot pattern at the first gray level in the clustered-dot dithering method obtained in the above-described method is set as the first gray level of the dispersed-dot dithering method. Then, a weak regularity (perturbation) is introduced with the regularity remaining to some extent at and after the second gray level of the method so that the cause of the generation of various artifacts can be removed in the method.

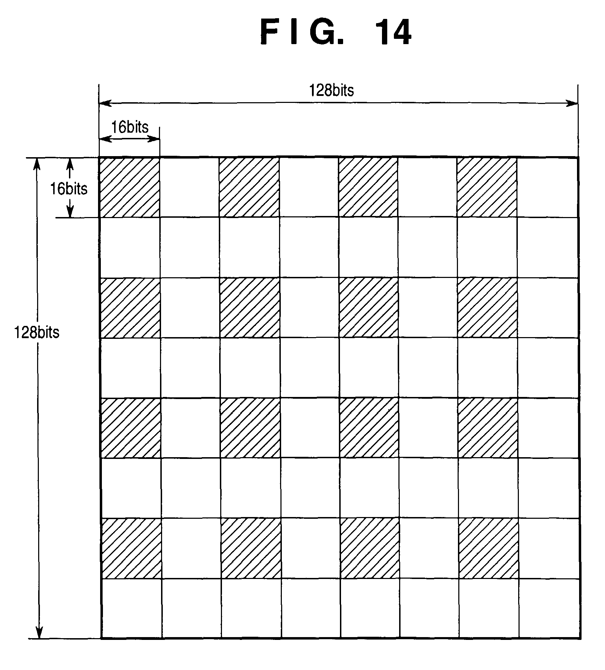

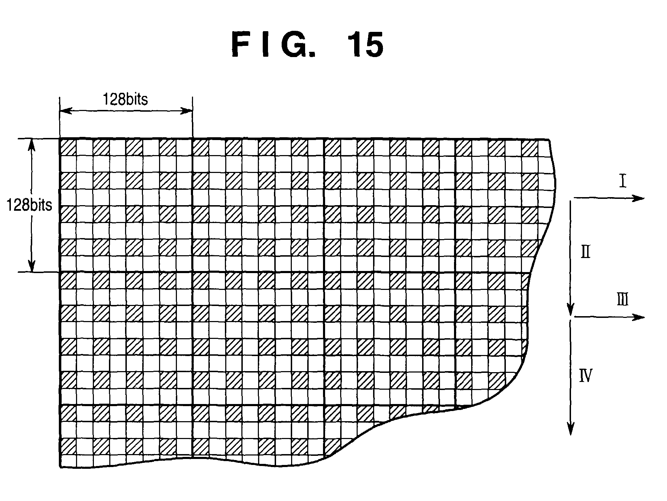

There is an example (USP 5,109,282) of introducing the periodicity indicating a value of very high anisotropy in the error diffusion method, and the dot pattern (Figs. 14B and 15B) at the uniform gray level indicates strong periodicity. A simple experiment proves the generation of moire. As in the case of the check mask described above, this method also proves that introducing the periodicity, therefore, the anisotropy, to the logic scheme relating to the blue-noise properties shown in Fig. 68 indicates in principle the deterioration of the quality of an image.

A novel mask method to be used can be basically characterized in its mask patterns which preserve various kinds of similar periodicity of dot pattern in dispersed-dot dithering, further introducing some weak irregularity or, in other words, perturbation thereto. Hence, when a 600 dpi printer is used, the size of a mask according to present invention can be made at largest 1/4 (128 × 128) of the optimum size of a 256 × 256 blue-noise mask, which was, as shown in previous section, the minimum size in three different sizes of the blue-noise mask to get visually pleasing dot patterns for this resolution of the printer. In the much smaller case for the masks, it can be made 1/16 (64 × 64) of the above 256 × 256 blue-noise mask and, as for memory size required to store thresholds of the mask, it can be 1/25 of that for individual 256 × 256 blue-noise masks.

Furthermore, the anisotropy of a dot pattern produced using a single small mask according to the present method reflects various periodicities and is higher than that of the perturbed error diffusion method shown by Ulichney, in contrast with the blue-noise mask method. It has a mean anisotropy value of 1.2 dB or more at all comparable gray levels in all frequency bands, and has a maximum value of 4 dB or more, preferably 5 dB or more. These values have been shown to be conditions required for a dot pattern to unexceptionally exhibit the non-blue-noise property according to the mask method. These values also provide a similar non-blue-noise property at the other gray levels, so a dot pattern formed using the mask according to this invention has the non-blue-noise property at all gray levels.

When the size of the mask is substantially reduced in terms of the storage capacity by improving the internal periodicity while maintaining the same external shape, both the mean and maximum anisotropy values further increase at all gray levels to exhibit a significant non-blue-noise property. Thus, when this method is evaluated using an output screen of a standard size 256 × 256 pixels, a dot pattern produced by a single mask is repeated four times or more, so the mean anisotropy value at all gray levels is about 10 dB or well over, indicating a very high anisotropy. Therefore, the present method exhibits an incomparably higher anisotropy than the perturbed error diffusion method disclosed by Ulichney.

In this way, in spite of showing higher anisotropy than that of the 128 × 128 or 64 × 64 blue-noise mask, irrespective of output-image size, the repetition of the same mask patterns is not conspicuous even if the mask-pattern size becomes about a few mm square and moire does not appear, owing to high uniformity together with moderate irregularity of dot distribution. Within the scope of the four parameters mentioned before, the mask method can reproduce visually most pleasant halftone image comparing to any other known mask methods.

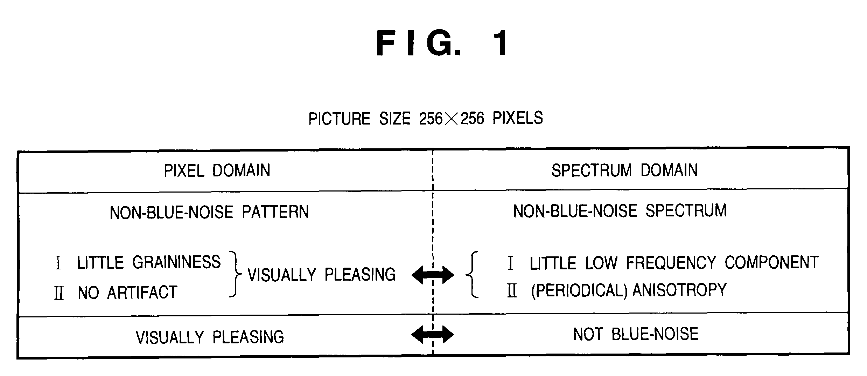

Therefore, the logic scheme according to the mask method of the present embodiment is quite different from the logic scheme (shown in Fig. 68) about the blue-noise properties, and a visually pleasing dot pattern can be generated without a blue-noise properties as shown in Fig. 1. In other words, in the logic scheme about the blue-noise properties, a dot pattern as visually desirable as or even more visually desirable than the dot pattern generated by a large blue-noise mask can be obtained by applying the periodicity (anisotropy) to be removed to obtain a visually pleasing dot pattern to an extent of specific anisotropy. As a supplement, such a desirable visual characteristic is more easily obtained with higher resolution of an input device.

Each mask has four fundamental periodic properties, which are succeeded to periodic properties of the mask in dispersed-dot dithering method or of the dithering method itself. The periodicity of the mask and that of individual mask patterns has a one-to-one correspondence. Hence, for better understanding, fixing gray levels to be reproduced as 256, the above four periodic properties in terms of an output-image domain are expressed. Incidentally, in the case of 256 gray levels, the mask of dispersed-dot dithering method has 16 × 16 elements. Then, the mask has the size of 16 element square multiplied by an integer. In this embodiment, the individual 16 × 16 mask is designated as an elementary mask and the mask itself is called a unit mask. In the pixel domain, the elementary mask corresponds to an elementary pixel block and the unit mask corresponds to a unit pixel block. Further, a quarter size of the elementary pixel block is defined as a partial elementary pixel-block.

Then, the four periodic properties of the mask can be described as follows.

(1) Having at least a group of 16 × 16 elementary pixel-blocks each of which has the same dot distribution at any gray level.
(2) The dot pattern at the first gray level is the same as that in the dispersed-dot dithering method.
(3) Individual elementary pixel-blocks of 16 × 16 have the same number of dots at any gray level, and
(4) Each partial elementary pixel-block of 8 × 8 pixels has the same number of dots at every 4n gray level, where n represents a positive integer.

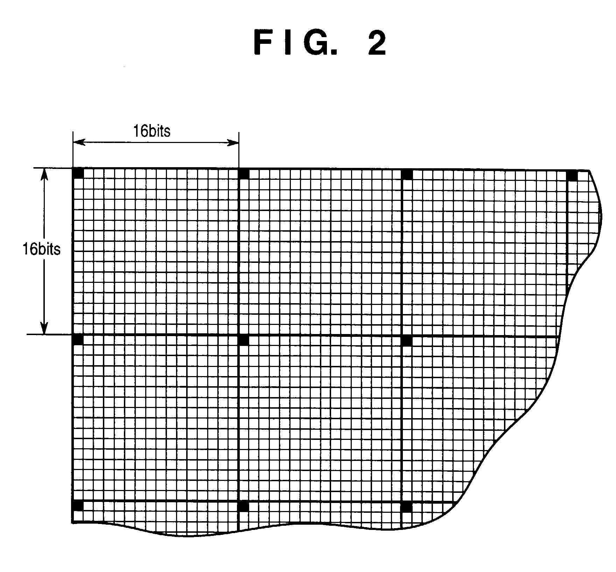

The above four periodic properties and their effects are explained in detail by referring to Fig. 2.

Fig. 2 shows a portion o the dot pattern at the first gray level in dispersed-dot dithering method, (the same as a portion of Fig. 69 illustrating a dot pattern at the first gray level in the dithering method). Each 16 × 16 pixel-block in this figure corresponds to the size of a mask pattern in the dispersed-dot dithering method and black pixels represent the dot pattern at the first gray level in the dithering. The dot pattern at the first gray level in the dithering. The dot pattern at the first gray level in the method is basically made to coincide with that in the dispersed-dot dithering method shown in Fig. 2 according to the above property (2).

The effects of property (2) are as follows. In images taken by various cameras in the surroundings, high contrast periodic patterns like stripes and checked patterns are often seen in artificial things such as clothes, lattice structures, wall surfaces of buildings and so on. On the other hand, the chance to see very low contrast periodic patterns becomes lower as its periodicity becomes more rigid. Further, in the images taken by digital cameras or by video cameras, very low contrast periodic patterns are scarcely recorded because of the narrow dynamic range of present image sensors. Moreover, very low contrast periodic patterns is hardly recognized as visually uncomfortable patterns from the beginning.

Actually, even if a 600 dpi printer is used, although the distance between two neighboring dots is 0.68 mm being resolvable for the eye, since the diameter of each dot itself is 40 μm (0.04 mm) very much smaller than the above distance, such an extremely low contrast regular pattern visually gives no uncomfortable impression. Hence, even if the dot pattern at the first gray level is strictly periodic, moire caused by interference with an input image with low contrast periodic patterns will not be recognized as artifacts in output images.

In addition, in an output image with a low and constant gray level, the uniformity is overwhelmingly superior in a completely regular dot pattern such as that at the first gray level in dispersed-dot dithering method in Fig. 69, rather than in a dot pattern with random appearances at the first gray level produced by the blue-noise mask method shown in Fig. 70. This property together with individual regularity due to properties (1), (3) and (4) contributes to raise reproducibility of moderate gradation change in lower gray level domains of an input image. Then, the power spectrum of a dot pattern at individual lower gray levels until about the 20th has isolated spectrums caused by the completely regular dot pattern at the first gray level and, therefore, the anisotropy measure of dot patterns is very high in these gray levels. In other words, property (2) raises the uniformity of dot pattern at low gray levels, simultaneously introducing periodicity or high anisotropy to a mask itself.

In Fig. 2, each square of 16 × 16 pixels divided by bold lines corresponds to an elementary pixel-block which is occupied by a dot pattern produced by a single mask in dispersed-dot dithering method and, on this output-image plane, the same dot patterns are periodically disposed laterally and vertically with the same period of 16 pixels. An elementary pixel-block mentioned in the expression of property (1) indicates this 16 × 16 pixel block. As described above, the mask according to this embodiment has several integers of elementary masks having the size of 16 × 16. Hence, although locations of dots within the remaining elementary pixel-blocks are different from one another, the number of dots included in every 16 × 16 elementary pixel-block becomes equal at any gray level according to periodic property (3) . This equality of dot number in every 16 × 16 pixel block is the same periodic property as that associated with the dispersed-dot dithering method. This property (3), therefore, contributes to maintain the uniformity of dot distribution or, in other words, dot density per unit area of a 16 × 16 pixel square irrespective of a gray level. The shape of the mask is not always limited to a square.

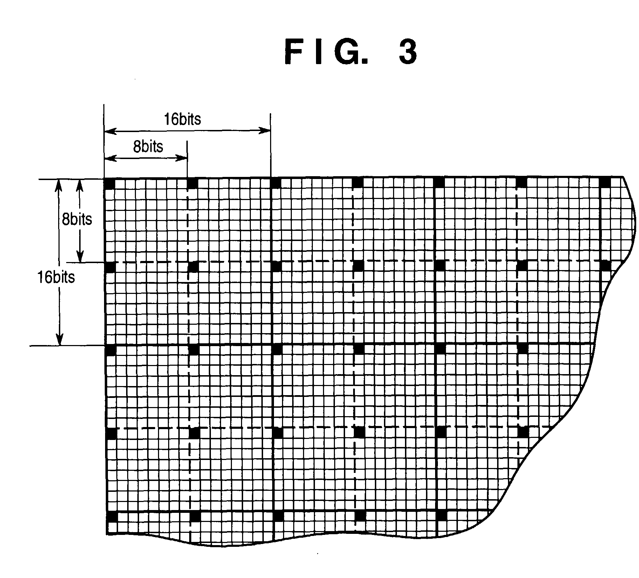

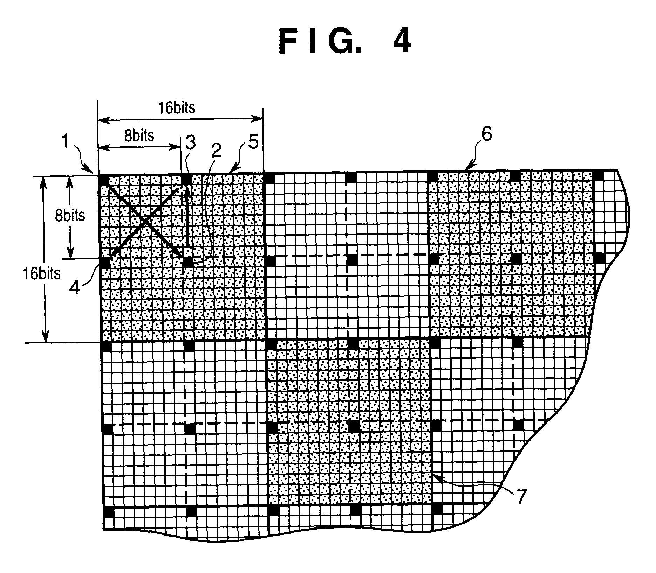

Fig. 3 shows a portion of the dot pattern at the third gray level. Fig. 4 shows a portion at the fourth gray level in the dispersed-dot dithering method.

In these figures, blocks each having 8 × 8 pixels divided by broken lines are denoted as partial elementary pixel-blocks in the property (4). In the dispersed-dot dithering method as shown in Fig. 4, a new dot is placed at a certain pixel within a 16 × 16 pixel block every time when a gray level raises a step. Namely, the first dot at the first gray level is dotted at pixel 1 within the upper left partial elementary pixel-clock. The second dot at the second gray level is dotted at pixel 2 within the lower right partial elementary pixel-clock. The third dot at the third gray level is dotted at pixel 3 within the upper right partial elementary pixel-clock. The fourth dot at the fourth gray level is dotted at pixel 4 within the lower left partial elementary pixel-clock. Then, the location of the fifth dot for the fifth gray level returns within the upper left partial elementary pixel-block again. Thus, the order of placing dots in each 8 × 8 partial elementary pixel-block is determined in advance for 4 gray levels as one period.

In this way, the number of dots in each partial block of 8 × 8 pixels becomes the same at every 4n gray level in this dithering method. Thus, each position of the dot placed at and after the second gray level is different from that in the dispersed-dot dithering method, but the property (4) according to the present embodiment about the number of placed dots is the same as the property of the dispersed-dot dithering method.

The properties (3) and (4) are, as in the dispersed-dot dithering method, to improve the uniformity of the dot distribution. As described later, the algorithm for determining the position of each dot according to the present embodiment has the effect (to improve the uniformity of the dot distribution) of setting the distance between dots to reach a predetermined value depending on the gray level. These two properties have the function of furthermore improving the uniformity with the above-described effect.

The property (1) and its effects based on Fig. 4 is explained below. Assume that a unit mask has a square shape which consists of 4 × 4 = 16 elementary masks, each having 16 × 16 thresholds. Provided that Fig. 4 shows a part of the unit mask pattern, property (1) means that individual dot patterns in elementary pixel-blocks 5, 6, and 7 colored gray like a checkerboard and the same at any gray level. As shown in Fig. 4, in the dot pattern in dispersed-dot method the dot patterns of one square shape are regularly arranged, and since individual dot patterns in every 16 × 16 pixel block are the same at any block are the same at any gray level in dispersed-dot dithering method, this property (1) partly succeeds the above periodic property of dot pattern in the dithering method in the sense that the same dot patterns each within 16 × 16 pixel block repeatedly lay down two-dimensionally, although periods are longer.

Assuming that this periodic property (1) refers to the periodicity of the mask itself, the arrangement of each dot in the dispersed-dot dithering method is periodic in the mask at and after the second gray level, therefore matching the property of the mask in the dispersed-dot dithering method.

This property (1) has two effects. One is memory-size saving for masks and another is giving anisotropy to every dot pattern at any gray level. In the case of a 64 × 64 unit mask, the memory size must be sufficient to store 64 × 64 = 4096 thresholds. However, provided that 8 elementary masks have the same threshold matrices, essential thresholds which must be stored can be reduced to (16 × 16) × (8 + 1) = 2304, resulting about a half of 4096 with the use of an appropriate readout methods.

Assuming that the periodicity having a scale smaller than that of a small mask is defined as local periodicity, the property (1) has an effect of introducing the local periodicity. That is, the property like the property (1), also introduces anisotropy to a mask itself. Therefore, although limited, it is common that the more a larger number of sets of element masks having the same threshold arrangement, that is, the smaller the memory capacity for the mask get, the higher the anisotropy of the dot pattern generated by a piece of a mask get.

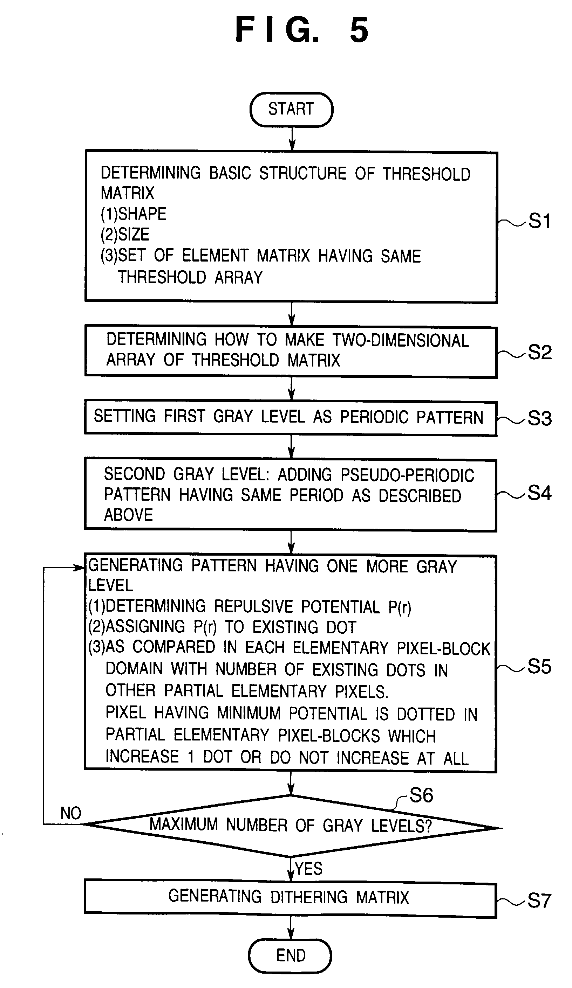

Fig. 5 shows an outline of a flowchart concerning the algorithm for producing masks. By referring to Fig. 5 in steps 1 through 3, the relationships between properties are described. That is, the property (1) is implemented in step S1, and the property (2) is implemented in step S3.

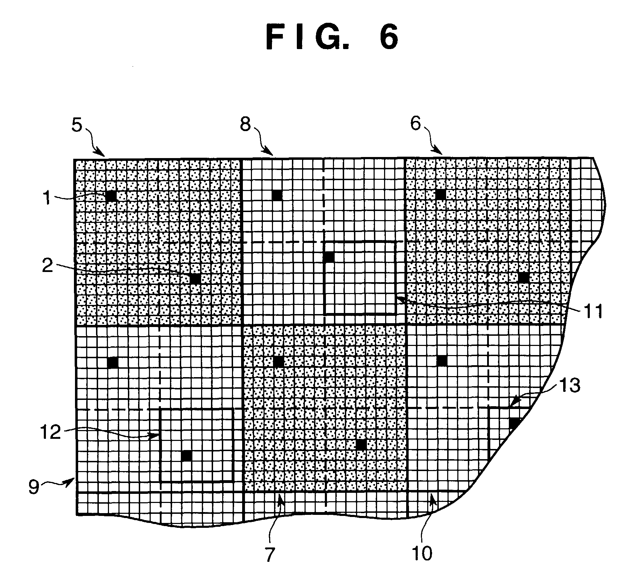

Fig. 6 shows an example of implementing weak irregularity (perturbation) to the dot pattern at the second gray level (step S4).

Fig. 6 shows a portion of the dot pattern at the second gray level produced by a unit mask in which 4 × 4 = 16 elementary masks, each of which has 16 × 16 elements, are arrayed. Elementary masks corresponding to individual elementary pixel-blocks 5 through 7 colored gray are already determined in step S1 (Fig. 5) so that every elementary pixel-block colored gray has entirely the same array of thresholds 1 through 255. The gray levels after the second of the remaining elementary pixel-blocks 8, 9, 10 mutually forms dependent patterns.

In Fig. 6, designating a horizontal row of pixels as line i and a vertical one as column j in, for example, elementary pixel-block 5, the position of a pixel as (i, j) can be expressed. Then, dot 1 at pixel (4, 4) was dotted at step S3 for the first gray level in Fig. 5 and, therefore, every pixel at (4, 4) in other elementary pixel-blocks is also dotted. This dot pattern coincides with that at the first gray level produced by dispersed-dot dithering method.

In step S4 in Fig. 5, a pseudo-periodic pattern that is added at the second gray level to the periodic pattern for the first gray level is explained.

In elementary pixel-block 5 shown in Fig. 6, dot 2 at pixel (12, 12) was dotted at the second gray level. Hence, dots are also positioned at individual pixel at (12, 12) in elementary pixel-blocks 6 and 7, which correspond to elementary masks having the same threshold arrays. Incidentally, the dot pattern consisting of these dots is a portion of the dot pattern at the second gray level in dispersed-dot dithering method..

Positions for individual pixels dotted at the second gray level in elementary pixel-blocks 8 through 10, which correspond to elementary masks whose threshold arrays are independent of one another, are determined as follows.

In the above-described individual pixel blocks 8 through 10, small pixel blocks 11 through 13 individually consisting of $7 \times 7 = 49$ pixels, each center of which is located at (12, 12) in these blocks 8 through 10, are provided. The reason for transferring each dot position (1, 1) for the first gray level to (4, 4) in individual pixel blocks is to make each small pixel block be included in individual $8 \times 8$ partial pixel block at lower right in each elementary pixel-block. Then, randomly selecting a pixel in each small pixel block, a dot is positioned there.

In this way, the above dots at the second gray level constitute a dot pattern having weak irregularity introduced to that at the second gray level in the dispersed-dot dithering method. Since the weakly irregular dot pattern added at the second gray level has the same basic period as that for the dot pattern at the first gray level, the pattern represents a pseudo-periodic pattern. In the above-described process in step S4, the degree of irregularity to be introduced can be made weaker by making the size of individual small pixel blocks 11 through 13 be smaller like $5 \times 5$ pixel blocks or $3 \times 3$ pixel blocks. Hence, the framework of individual dot patterns at gray levels above the second gray level is basically determined by this weak irregularity introduced at the second gray level. The weak irregularity thus introduced, together with algorithm producing individual dot patterns with gray levels above the second gray level, brings about the effect of almost eliminating the defect in the dispersed-dot dithering method that periodic artifacts tend to appear.

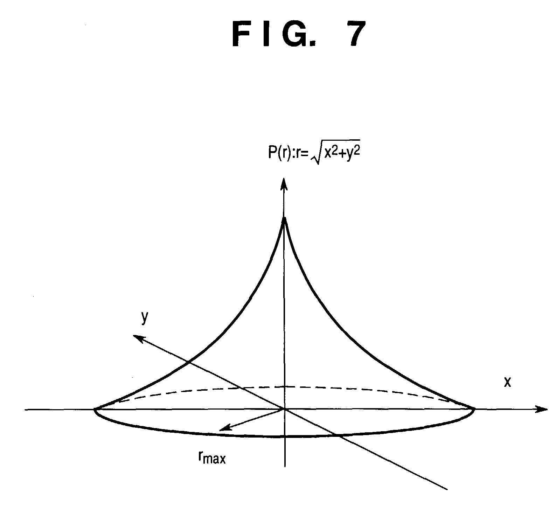

The process of generating a dot pattern at and after the third gray level in step S5 shown in Fig. 5 is explained by referring to Figs. 7 though 9.

The algorithm which determines individual positions for newly dotting at every gray level above the second one is basically similar to an algorithm to determine a dot pattern for the third gray level. According to the algorithm, giving a certain repulsive potential P(r) shown in Fig. 7 to all pixels already dotted and, superposing them, an overall potential distribution is obtained. Then, fundamentally, dotting at a single pixel where the overall potential takes the minimum value in each $16 \times 16$ elementary pixel-block, a dot pattern for the third gray level is obtained.

As for elementary pixel-blocks subject to property (1), if a pixel to be dotted is determined first with respect to, for example, elementary pixel-block 5, each position of a pixel to be dotted in individual elementary pixel-blocks 6 and 7 is automatically determined without any calculation at the same position corresponding to the position of the pixel dotted in elementary pixel-block 5.

Since the number of pixels dotted in each elementary pixel-block up to the second gray level is, as shown in Fig. 6, two, satisfying property (3), this property is necessarily satisfied at every gray level above the second one, provided that positions of pixel newly dotted are determined according to the algorithm shown above.

The repulsive potential is usually used in solid state physics (C. Kittel, Introduction to Solid State Physic, 6th ed. (John Wisley & Sons, 1986) Let $\lambda$ and $\rho$ be parameters. Denoting a three-dimensional distance from the center of the potential as r, its mathematical form is given by

$$P(r) = \lambda 3^{-r/\rho}$$

Then, in our case, the repulsive potential can be defined for two-dimensional distance r as

$$P(r) = e^{-\alpha r} \tag{2}$$

where, let the range of gray level number g be $1 \leq g \leq 256$,

$$\alpha = \frac{\beta}{\sqrt{256/g}} \tag{3}$$

$\beta$ being some constant. Here, $\sqrt{256/g}$ corresponds to a length (distance) to which an average of the distance between arbitrary two neighboring dots should be proportional, assuming that every dot distributes uniformly at the relevant gray level g. In this case, since the higher the gray level gets, the higher the dot density gets and, also, the larger gets the $\alpha$, the repulsive potential represents a function rapidly decreasing with respect to r. For dissolving gray level dependence of the potential, it is enough to set g = 256 in equation (3).

In Fig. 7, when the origin of orthogonal axes are fixed at the center of a dot to which the repulsive potential is given, the lateral coordinate axis is denoted as the x axis and the vertical coordinate axis is denoted as the y axis. Then, $r_{max}$ is the distance beyond which the potential becomes zero. The unit of distance is the distance between neighboring pixels, that is, the length of a side s of each square pixel.

Fig. 8 shows an example of repulsive potentials with gray level dependence. In this potential, $\beta = 0.4$, and $r_{max} = 128(s)$. As clear in this figure, the larger the number of a gray level gets and the higher the density of dots gets, the more rapid decrease the individual repulsive potential reduces rapidly.

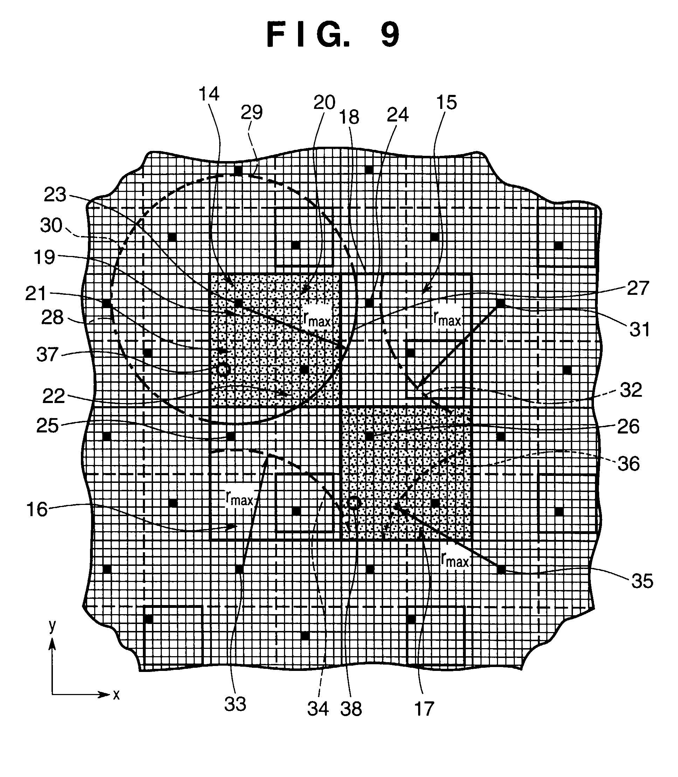

The method of producing individual dot patterns after the third gray level by applying the above potential is explained by referring to Fig. 9.

In Fig. 9, for simplifying our explanation, let a unit mask be small size of $32 \times 32$ elements. Then, this mask corresponds in the output-image domain to a unit pixel block 18 of $32 \times 32$ pixels consisting of four elementary pixel-blocks 14 through 17 each with the size of $16 \times 16$ pixels. Here, elementary pixel-blocks 14 and 17 colored gray are a pair of elementary pixel-blocks having the same dot patterns at all gray levels in accordance with periodic property (1). Further, the way to repeatedly array the unit mask on an input image corresponds to repeatedly lay down unit pixel block 18 over an output-image plane along the both directions of the $\times$ axis and the y axis.

In unit pixel block 18, dots 23 through 26 for the first gray level, following periodic property (2) and four dots for the second gray level are already positioned within each elementary pixel-block.

At this stage, two partial elementary pixel-blocks each with $8 \times 8$ pixels in which a dot is already positioned is stored so as not to be newly dotted before the dot pattern at the fourth gray level is to be completed. This control is provided for realizing periodic property (4).

The maximum radius $r_{max}$ is, for simplicity, assumed to be 13s. The method of giving this potential for the third gray level to dot 23 positioned in elementary pixel-block 15 for the first gray level is explained below.

An arc edge of a portion of the above potential covering inside unit pixel block 18 is indicated by solid line 27. Another portion of the potential outside the left side boundary of block 18, whose arc edge is denoted by single-point chain line 28, is transferred inside block 18 parallel to the $\times$ axis toward the right side boundary, maintaining its shape. This transferred portion is equivalent to portion of another potential inside block 18 covered by the potential which is given to dot 31 for the first gray level, whose arc edge inside block 18 is denoted by the same type of chain line 32.

A portion of the above potential outside the upper boundary of block 18 whose arc edge is denoted by broken line 29 is transferred inside the block parallel to the y axis toward the bottom boundary of the block, maintaining its shape. This transferred portion is equivalent to a portion of the other potential inside block 18 covered by the potential which is given to dot 23 for the first gray level, whose arc edge inside block 18 is denoted by the same broken line 34.

A portion of the above potential inside another unit pixel block situated diagonally to upper left of block 18 whose arc edge is denoted by dotted line 30 is transferred inside block 18 diagonally to the lower right corner of the block, maintaining its shape. This transferred portion is equivalent to a portion of a potential inside block 18 covered by the potential which is given to dot 35 for the first gray level, whose arc edge inside the block is indicated by the same dotted line 36.

When repulsive potential is given to all the dots inside block 18 by the similar way to the above, overall repulsive-potential distribution inside the block 18 is constructed as a result of superposing all the repulsive potentials.

Next, a dot for the third gray level is positioned at pixel 37 inside elementary block 18 where the above overall potential is minimum. At the same time, another dot for the third gray level is automatically dotted at pixel 38 inside elementary pixel-block 17, whose position corresponds to that of pixel 37 inside elementary pixel-block 14. Giving repulsive potential for this gray level to these dots 37 and 38 and superposing these potentials with the above overall potential, we obtain a new overall potential distribution. At this stage, partial elementary pixel-blocks in which dots were positioned and elementary pixel-blocks including these partial elementary pixel-blocks are stored for controlling so as not to newly dot before the dot pattern for the fourth gray level is to be completed, realizing periodic properties (3) and (4).

With respect to the overall potential distribution obtained above, a dot is placed at the pixel where the potential is minimum within both elementary pixel-blocks 15 and 16 and, then, giving repulsive potential for the third gray level to the dot, a new overall potential distribution is obtained. Here, a partial elementary pixel-block in which the dot was placed and an elementary pixel-block including the partial elementary pixel-block are stored for controlling so as not to newly dot before the dot pattern for the fourth gray level is to be completed, realizing periodic properties (3) and (4).

At this stage, an elementary pixel-block in which a dot for the third gray level is not yet placed is left only one and, according to our algorithm shown above, a dot is placed in the block completing the third gray level mask pattern. Then, the partial elementary pixel-block in which the dot was placed is stored to control so as not to dot in the block before the dot pattern at the fourth gray level is to be completed, realizing periodic property (4).

A dot pattern for the fourth gray level is produced as follows.

At the stage in which the dot pattern for the third gray level is accomplished, there remains only one partial elementary pixel-block without a dot for the gray level in each of four elementary pixel-blocks 14 through 17. Hence, the first dot for the fourth gray level is to be dotted at a pixel where the three repulsive potential is minimum within the four partial elementary pixel-blocks, simultaneously giving repulsive potential for the fourth gray level to the pixel to produce a new potential distribution. Here, the partial elementary pixel-block in which the dot was placed is stored so as not to dot in the block before the dot pattern for the fourth gray level is to be completed, realizing property (4).

If the partial elementary pixel-block stored as above belongs to either of a pair of elementary pixel-blocks subject to property (1), a pixel to be dotted within another elementary pixel-block is automatically determined, resulting a new potential distribution and partial elementary pixel-blocks in which dotting is inhibited before the dot pattern for the fourth gray level is to be completed.

By repeating similar process and placing a dot in every elementary pixel-block, the dot pattern for the fourth gray level and the distribution of the repulsive potential are determined.

A method of producing dot patterns over the fourth gray level is explained. Let n be a positive integer and a mask pattern for the 4nth gray level be known. First, a dot pattern for 4n + 1st gray level is produced.

In the unit pixel block, dotting at a pixel where the above overall potential is minimum and simultaneously giving repulsive potential for 4n + 1st gray level to the pixel, a new potential distribution is obtained. Further, both a partial elementary pixel-block and an elementary pixel-block including the pixel are stored so as not to dot in these blocks before a dot pattern at 4n + 1st gray level is to be completed, maintaining periodic properties (3) and (4).

If the elementary pixel-block in which a dot was placed belongs to either of a pair of elementary pixel-blocks which satisfy property (1), a pixel to be dotted within another of the pair elementary pixel-blocks is automatically determined, resulting a new overall potential distribution and partial elementary pixel-blocks in which no dot should be placed before the dot pattern for 4n + 1st gray level is completed, keeping periodic properties (3) and (4).

Under the above new potential distribution, a dot is placed at a pixel where the potential is minimum within partial elementary pixel-blocks and elementary pixel-block individually including the partial elementary pixel-blocks, simultaneously giving repulsive potential for 4n + 1st gray level to the dot, producing a new potential distribution. Further, both a partial elementary pixel-block and an elementary pixel-block including the dot are stored so as not to dot in these blocks before a dot pattern at 4n + 1st gray level is to be accomplished, according to periodic properties (3) and (4).

By repeating the similar process and placing a new dot to every four elementary pixel-blocks, the dot pattern at 4n + 1st gray level and the distribution of the repulsive potential are determined.

Then, by applying the similar procedure shown above, in which the dot pattern at the 4n + 1st gray level was accomplished based on the dot pattern for the 4nth gray level, dot patterns at the 4n + 2nd, 4n + 3rd, and 4(n + 1)th gray levels and the distribution of the repulsive potential are determined.

Finally, after confirming in step S6 that dot patterns of all gray levels up to 255 gray level are completed, all the thresholds for a mask can be determined by passing control to step S7 in Fig. 5.

In the present method, mask patterns are produced step by step from the first gray level to the 25th and, therefore, a pixel where a dot is already placed at a lower gray level necessarily has the same dot at a higher gray level. In this procedure in which each mask pattern at every gray level is produced step by step, let the number of a gray level be n ($n_{max} = 256$) for an input image with each constant gray level and a threshold of the mask be m ($m_{max} = 255$) which is an integer. Then, increasing the threshold of an element one by one from 1 on the mask, where the element corresponds to the pixel in which a dot is already placed in an output image at the above each gray level, the dot has been placed when

$$m = n \qquad (4)$$

Since the value of each element is determined like this, all the threshold are determined and the mask is completed.

In the case of usual input image, if the gray level number of a pixel and a threshold of a corresponding element in a mask are in a relation expressed by

$$m \leq n \qquad (5)$$

it follows that a dot is placed at a corresponding pixel in an output image.

In this way, in the present embodiment, each mask pattern for individual gray levels is designed to get optimum dot distribution by applying repulsive potentials and periodic properties (1) through (4). Hence, dot patterns having extremely superior uniformity are obtained in every gray level from the 1st through 255th. Actually, as can be confirmed in all embodiments described later (not shown in the attached drawings), the larger the number of gray levels gets and the number of placed dots gets, the higher peak value of an isolated spectrum at a high frequency area of noise elements in a one-dimensional spectrum appear because the number of dots forming a set of dots having a predetermined dot intervals becomes larger than the number of dots which do not form the set of dots.

In the blue-noise mask method, since the optimization of dot distribution is usually carried out at the middle gray level, viz., 128th gray level, uniformity of the above distribution gets worse as the larger or the smaller the gray level number get.

Although the masks are generated based on the procedure explained in Figs. 5 and 8, the method to produce the masks can be variously changed maintaining periodic properties (1) through (4).

For example, in the above-described method, when the dot pattern at the (n + 1)th gray level is generated from the dot pattern at the nth gray level, a pixel at which a new dot is placed is determined based on the distribution of the repulsive potential. Simultaneously, the repulsive potential is assigned to the pixel, and the distribution of the potential is updated.

This procedure can be simplified by simultaneously generating the dot pattern at the (n + 1)th gray level and the distribution of the repulsive potential by placing a new dot at the pixel at which the distribution of the potential indicates the minimum value inside each of the four elementary pixel-blocks when the dot pattern at the (n + 1)th gray level is generated from the dot pattern at the nth gray level. In this method, with the higher gray level, the difference from the dot pattern in the original method becomes smaller, and there are no fundamental differences in the one-dimensional spatial frequency characteristics or anisotropy of a dot pattern.

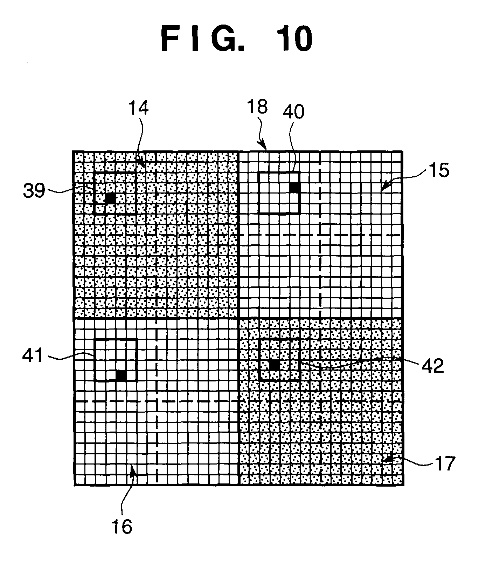

It is also possible to change periodic property (2) alone a little. According to property (2), the dot pattern at the first gray level coincided with that in the dispersed-dot dithering method as shown in Fig. 9. Adding weak irregularity (perturbation) to the dot pattern, it is changed to a pseudo-periodic dot pattern. Fig. 10 shows an example of such the pseudo-periodic dot pattern.

As shown in Fig. 10, a unit mask has the size of 32 × 32 elements and corresponds in an output image domain 18 to a unit pixel block of 32 × 32 pixels consisting of four elementary pixel-blocks 14 through 17, each having the size of 16 × 16 pixels. Here, elementary pixel-blocks 14 and 17 constitute a pair of blocks which have the same dot patterns at every gray level in accordance with periodic property (1).

In order to produce a dot pattern at the first gray level, 4 × 4 small pixel blocks 39, 40, 41, and 42 are first set up in the center of individual partial elementary pixel-blocks situated upper right within each elementary pixel-block. Then, one pixel is randomly selected from 16 pixels within each small pixel block and, placing a dot at the pixel, the dot pattern for the first gray level is accomplished. However, here, the position of the pixel dotted within individual small pixel blocks 39 and 40 corresponds to the same positions. In this method too, the degree of irregularity can be controlled by changing the size of every small pixel block.

Then, the way to produce dot patterns above the first gray level is divided into two methods.

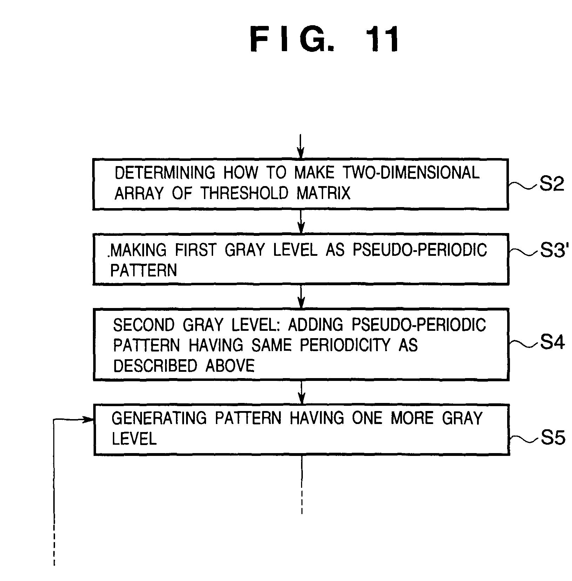

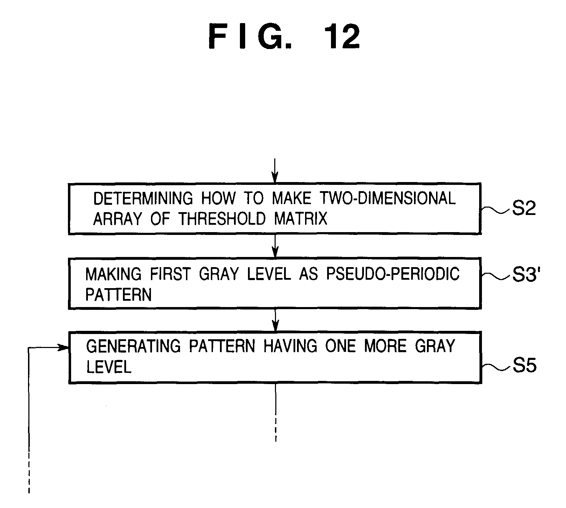

One is that, as shown in Fig. 11, a pseudo-periodic pattern is added at the second gray level according to step S4 in the flowchart in Fig. 5 and, then, producing dot patterns above the second gray level follows steps after step S4 in the flowchart. Another is that, as shown in Fig. 12, dot patterns above the first gray level are produced following to steps after step S4. In either methods above, although the anisotropy measure and power spectrum change at every lower gray levels, the one-dimensional spatial frequency characteristics or anisotropy of a dot distribution does visually not change in these gray levels.

In contrast to the above alterations, provided that resolution of printers is much higher like 1200 dpi, a gray level in which weak irregularity is introduced can be raised at, for example, the fifth gray level, making better use of superior uniformity in dot distribution of the dispersed-dot dithering method.

As explained above in detail, since problems in conventional dithering methods were solved by utilizing, apart from introducing weak irregularity, fundamental four periodic properties of the dispersed-dot dithering method, these properties brought about into our method, as they work in the dithering, an effect of giving high anisotropy to dot patterns together with memory-size saving and, at the same time, another effect of being able to produce visually more pleasing dot patterns as resolution of output devices becomes higher.

Considering that improvement in the resolution of an output device requires a larger mask in the blue-noise mask method and therefore has a disadvantageous on this method, the advantage of the mask method following the logic scheme (Fig. 1) over the blue-noise mask method (Fig. 68) having an opposite logic scheme is apparent. Described below in detail is embodiments of the present invention. Their advantages are clearly described.

The embodiments of the present invention are described below in detail by referring to the attached drawings. The embodiments relate to the masks generated according to the basic flowcharts shown in Fig. 5.

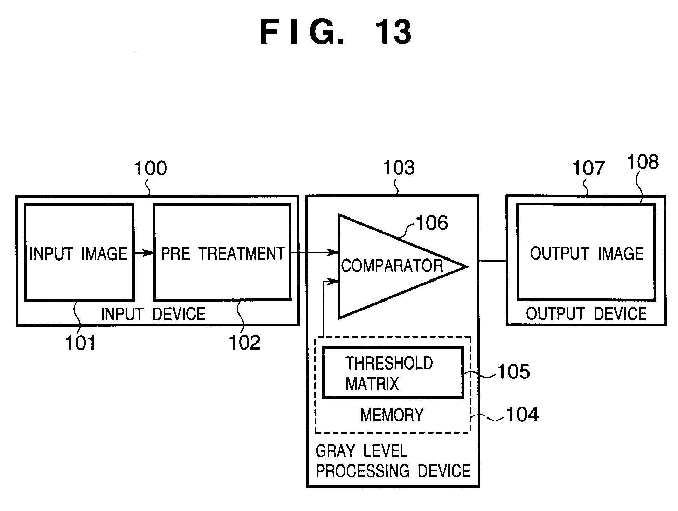

Fig. 13 shows the basic system for processing an image according to an embodiment of the present invention.

In this figure, 100 is an image input device such as a scanner that scans an input image 101. This device executes pre-processing 102 including the digitization of the input image 101 with continuous gray levels wherein the number of gray levels becomes 256; non-linear processing; and color processing for each color component of a color input image. Reference numeral 103 designates a gray level processing device including a memory 104 storing a threshold matrix (a mask) 105 including various periodicities characteristic of this embodiment, that is, a high anisotropy and a low irregularity (perturbation); and a comparator 106 for comparing the number of gradients of each pixel of an input image with the corresponding threshold based on Equation (5) and determining either 0 (no dot is provided) or 1 (a dot is provided) as an output value depending on the result of the comparison. Reference numeral 107 is a device for displaying or printing an output image 108 formed based on an output value from the comparator 106.

In addition, in a direct print system using a digital camera as an input device, the luminance and color information of the input image in Fig. 13 is converted into digital information, which is then stored in a memory of the camera. Thus, as part of the pre-processing 102, the non-linear and color processing accounting for the properties of the printer as well as the gray level processing device 103 are incorporated in an ink jet printer 107 acting as an output device.

<First embodiment>

A procedure for creating a mask having the features of this embodiment will be described with reference to the flowchart in Fig. 5.

Fig. 14 shows the shape and size of unit pixel blocks corresponding to a unit mask, and a set of element pixel blocks having the same dot array in the embodiment. This figure shows that the mask is a square matrix of 128 × 128 dots. In addition, all element pixel blocks that are painted black and that each consist of 16 × 16 pixels have the same dot pattern over all gray levels. Thus, the corresponding 16 x16 elements masks have the same threshold array.

Fig. 15 shows a two-dimensional array of unit pixel blocks of 128 × 128 pixels corresponding to a unit mask on an output screen on the basis of step S2 in Fig. 5. If the output device is a printer, the rightward arrow represents a main scanning direction for a head ejecting an ink and a laser beam, the downward arrow indicates a sub-scanning direction for sheet feeding, and the numbers accompanying the arrows indicate the order in which the mask is scanned on the screen.

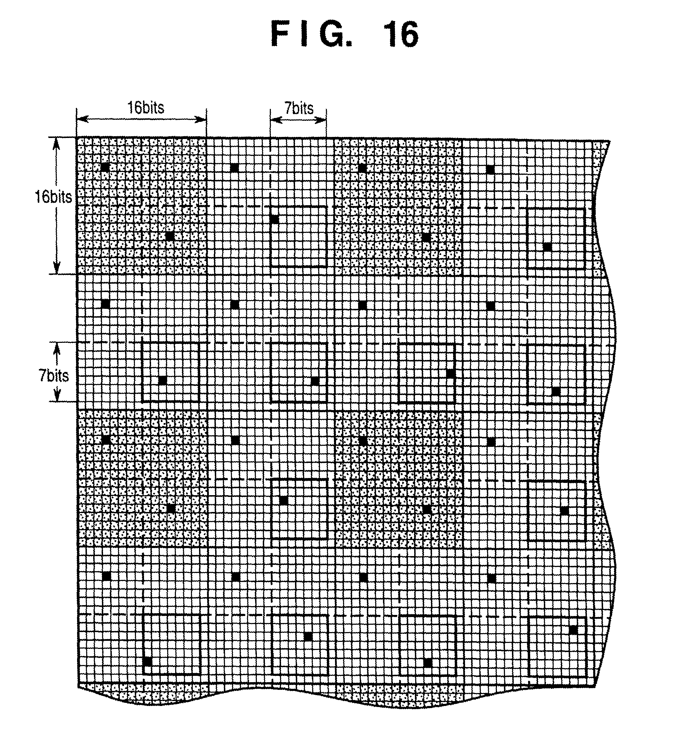

Steps S3 and S4 in Fig. 5 according to this embodiment will be described with reference to Fig. 16. In Fig. 16, the dots each provided for the (4, 4) pixel of each element pixel block of 16 × 16 pixels have the same dot pattern as the first gray level of the dispersed-dot dither method.

All element pixel blocks painted gray form the same dot pattern, but the dots each provided for the (12, 12) pixel of each pixel element block form the second gray level and match the dots for the second gray level of the dispersed-dot dithering method. A small pixel block of 7 × 7 pixels is provided in each of the other element pixel blocks, and one of the 49 pixels is selected as the second gray-level dot. Accordingly, the dots provided for the second gray level has a pseudo periodic pattern having the same period as the dot pattern for the first gray level of the dispersed-dot dithering method.

For the third and subsequent gray levels, the repulsive potential expressed by Equations (2) and (3) and shown in Fig. 8 was used to form dot patterns according to step S5 in Fig. 5, as described above in detail. The potential, however, was varied with the gray level up to the 70th level, but the potential used for the 70th gray level is used for the 71st and subsequent gray levels.

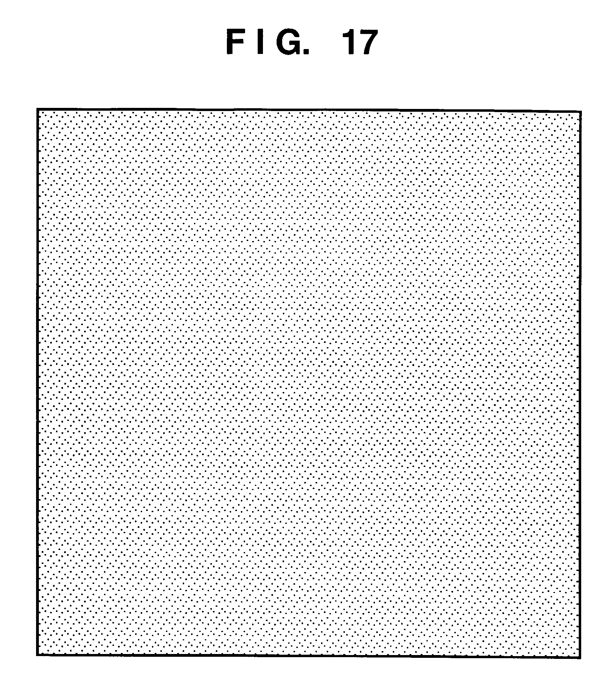

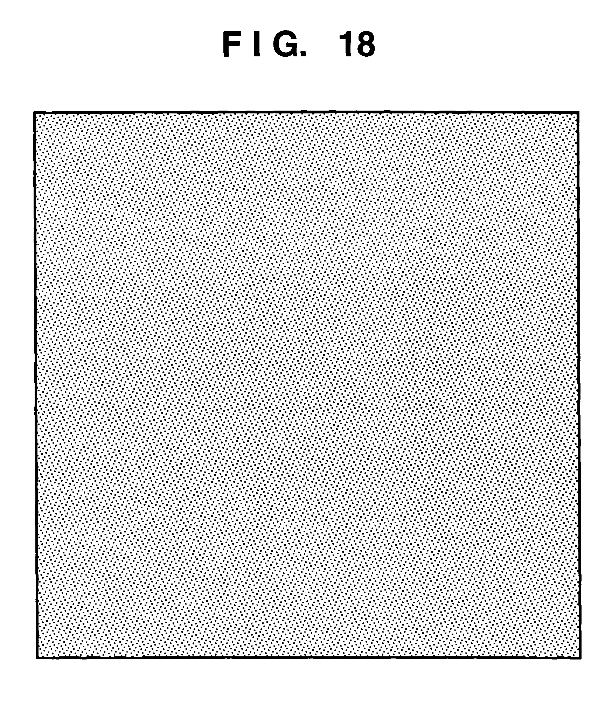

Masks created in this manner were used to output the dot patterns for an input image of a uniform density on a screen of 256 × 256 pixels using a 600-dpi BJ printer. Fig. 17 shows the dot pattern for the 8thgray level, and Fig. 18 shows the dot pattern for the 32nd gray level. These figures show actual screens obtained using the 600-dpi BJ printer, which have been enlarged 10 times in both length and width. The unit pixel blocks corresponding to the unit mask are exactly one-fourth of these screens in size, and the distribution of dots shown in Figs. 17 and 18 indicate the periodicity of the masks.

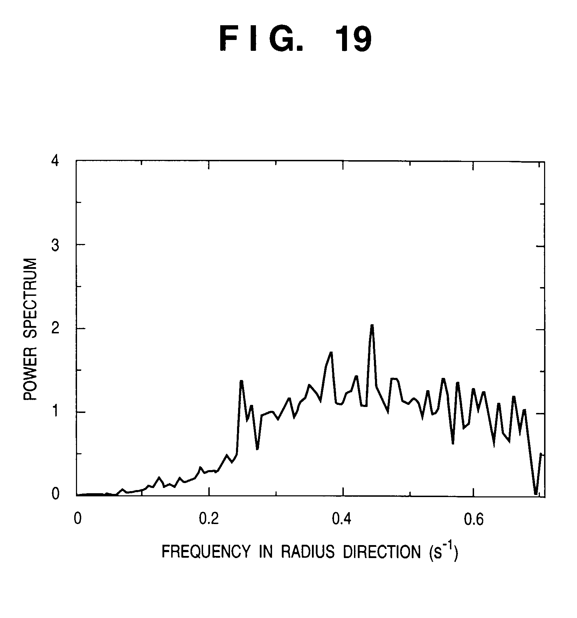

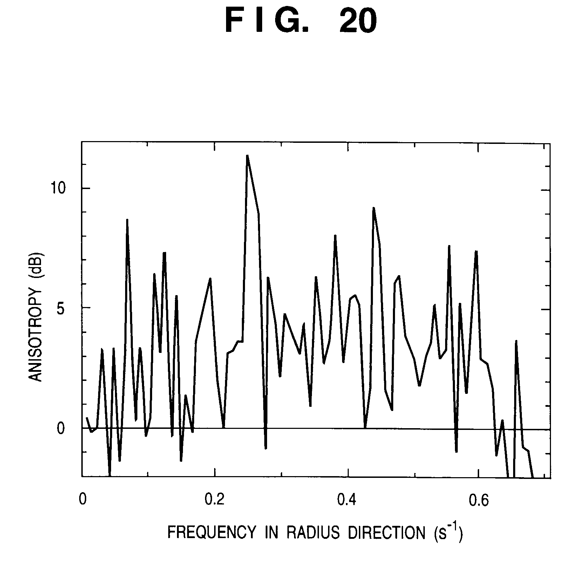

Figs. 19 and 20 show the spatial-frequency property of the dot pattern of 128 × 128 pixels for the 32nd gray level generated using a single unit mask according to this embodiment. Fig. 19 shows a one-dimensional-frequency property in the radial direction and also shows many isolated spectra having sharp peaks are seen on noise components.

Fig. 20 shows anisotropy. This figure shows spectra having a mean anisotropy value of 3 dB odd and a maximum anisotropy value substantially higher than 4 dB, which is assumed to be a particularly high anisotropic level, or possibly close to 10 dB or more, which is assumed to be a very anisotropic level. Both the mean and maximum values are at a level that can be determined to exhibit the non-blue-noise property even in the error diffusion method. Thus, this dot pattern corresponding to the single mask evidently has the non-blue-noise property. The match between the frequencies indicating a high anisotropy and the frequencies of the isolated spectra in the one-dimensional-frequency property indicates that the spectra are attributable to the periodicity of the mask.

Such a spectrum property is not limited to the 32ndgray level but is found in all gray levels, so the unit mask according to this embodiment obviously has a non-blue noise property.

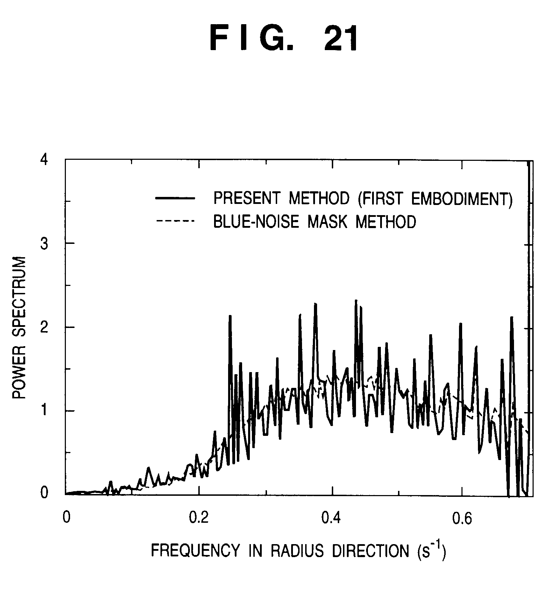

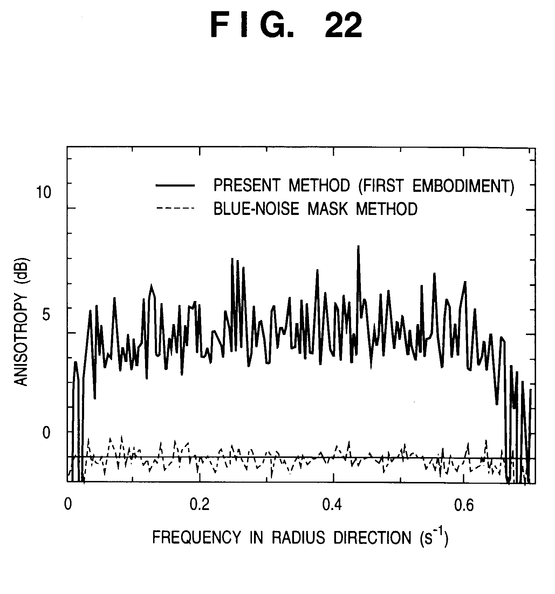

Figs. 21 and 22 show the spatial-frequency property of a dot pattern for 32nd gray level generated on a screen of 256 × 256 pixels, which is used as a criteria in evaluating spectra, the gray level being generated using unit masks of 128 and 128 pixels according to this embodiment.

Fig. 21 shows a one-dimensional-frequency property in the radial direction. In this figure, the solid line shows this embodiment, while the broken line shows the case of a blue noise mask of 256 × 256 pixels. This figure shows noticeable differences from the case of the single unit mask in that the number of noise components decrease, in that isolated spectra having high sharp peaks increase, and in that spectra for the blue noise masks are observed.

Fig. 22 shows anisotropy. In this figure, the solid line shows this embodiment and the broken line shows the case of a blue noise mask of 256 × 256 pixels. This embodiment exhibits a very high anisotropy of about 10dB as an average value, evidently in contrast to the isotropic blue noise mask method exhibiting an anisotropy of 0 dB as an average value.

As shown in Fig. 77, the blue noise mask of 128 × 128 pixels exhibited an anisotropy of about 8 dB as an average value for a dot pattern generated on the screen of 256 × 256 pixels, which did not indicate the blue noise property. In this case, evenly spaced blurs of 128 × 128 pixels were sensed on the gray scale in Fig. 72 as an artifact, so this method was not practical. According to this embodiment, however, such blurs were not sensed despite its higher anisotropy.

In addition, when output images were compared which were obtained using the present masks and blue noise mask of 256 × 256 pixels, respectively, from an input image of, for example, the human skin surface having lower gray levels and a gradually changing shading, the present masks exhibited a slightly better performance in reproducing the gradually changing shading. The high uniformity of the dot distribution according to this embodiment is numerically substantiated. When pixel blocks of 16 × 16 pixels were scanned on the screen to examine the variation of the number of dots contained in these blocks, this embodiment, which meets regularities (2) and (3), exhibited smaller values at most gray levels.

Besides, the size of the mask generating a visually pleasing dot pattern is only one-fourth of that of the blue noise mask of an optimal size for a printer of this definition. Furthermore, since the element masks corresponding to the 16 element pixel blocks painted black in Fig. 14 have the same threshold array, only one element mask must be stored, thereby reducing the storage capacity for masks down to one-fifth.

These results of evaluations indicate that the mask according to this embodiment is not based on the theoretical scheme for the blue noise property shown in Fig. 68 but on the new theoretical scheme shown in Fig. 1. That is, clearly, if small masks are repeatedly and periodically used from the beginning, in other words, if the spatial-frequency property exhibits a high anisotropy, a visually pleasing dot pattern without periodic artifacts can be obtained by miniaturizing the masks and providing them with the variable regularities shown in (1) to (4) and the periodicity, that is, a high anisotropy, in contrast to the theoretical scheme in Fig. 68.

<Second embodiment>

A procedure for creating another mask having the features of this embodiment will be described with reference to the flowchart in Fig. 5.

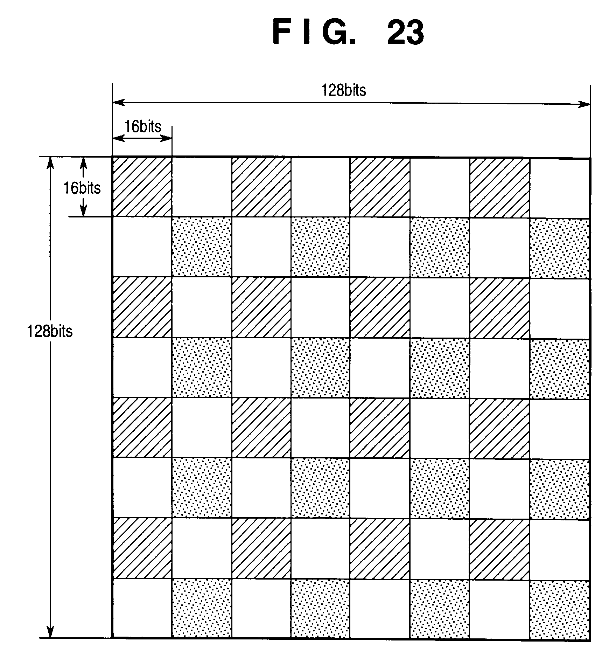

Fig. 23 shows the shape and size of a unit pixel block corresponding to a unit mask, and a set of element pixel blocks having the same dot array. This mask differs from the mask according to the first embodiment in that in addition to 16 element pixel blocks painted black, 16 element pixel blocks painted light gray have the same dot array to reduce the substantial storage capacity of the mask and in that anisotropy is further increased.

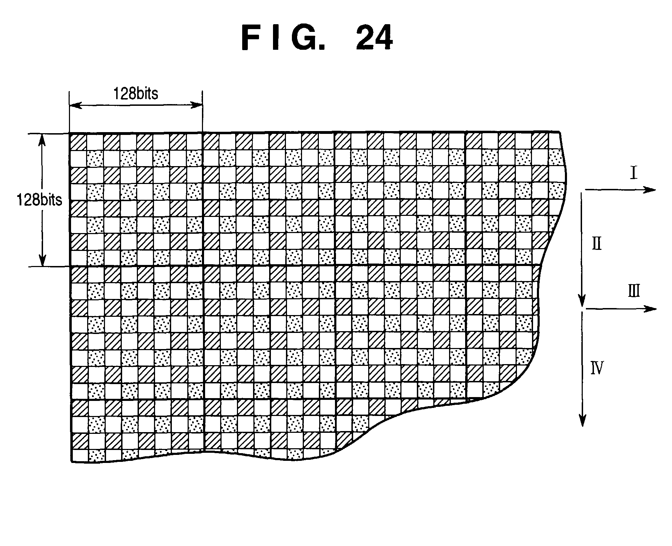

Fig. 24 shows a two-dimensional array of unit pixel blocks of 128 × 128 pixels corresponding to a unit mask on an output screen, which is determined at step S2 in Fig. 5. The meanings of the arrows and numbers shown in the right of the screen are the same as in Fig. 15.

Steps S3 and S4 in Fig. 5 according to this embodiment will be described with reference to Fig. 25. This figure shows part of a dot pattern for the second gray level in unit pixel blocks corresponding to a single mask, and the set of element pixel blocks painted dark gray and the set of element pixel blocks painted light gray have exactly the same dot pattern over all gray levels. In addition, the dots each provided for the (4, 4) pixel of each element pixel block of 16 × 16 pixels form a dot pattern for the first gray level and match the dot pattern for the first gray level of the dispersed-dot dither method.

The dots each provided for the (12, 12) pixel of each pixel element block of the set of element pixel blocks having the same dot pattern form the second gray level and also match the dots for the second gray level of the dispersed-dot dithering method. A small pixel block of 7 × 7 pixels is provided in each of the other element pixel blocks, and one of the 49 pixels is randomly selected as the second gray-level dot.

For the third and subsequent gray levels, dot patterns were formed according to step S5 in Fig. 5 using exactly the same items as in the first embodiment including the repulsive potential, and masks were then produced based on these dot patterns.

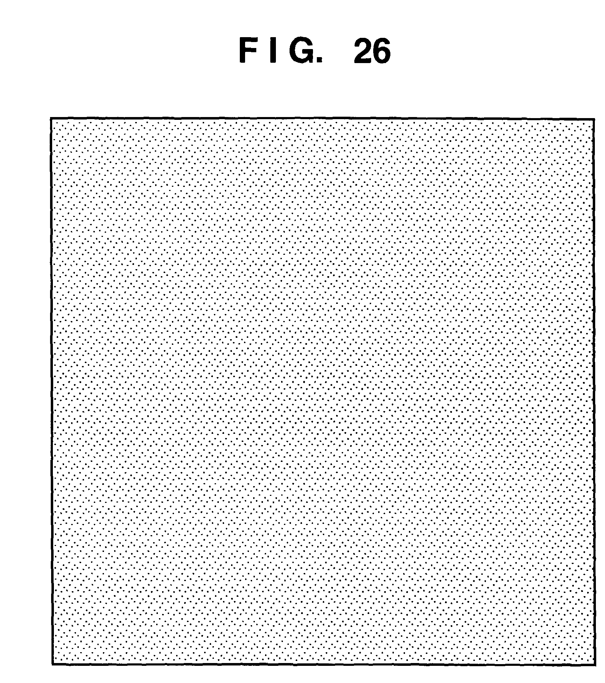

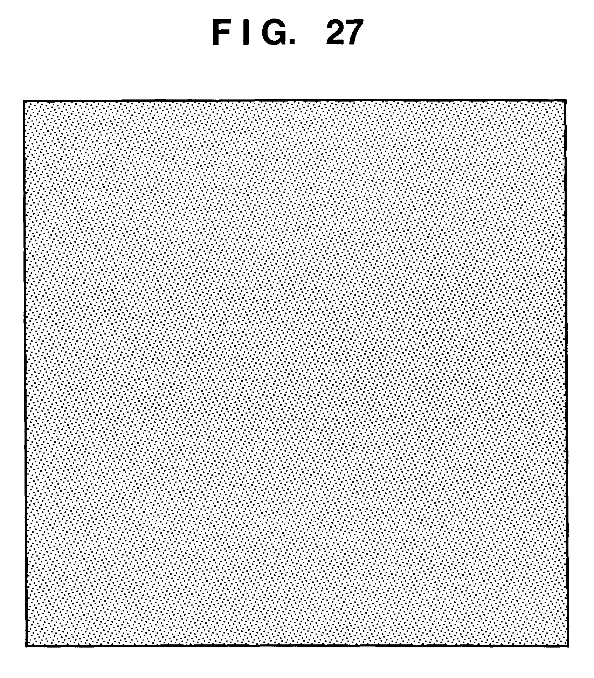

The masks created in this manner were used to output the dot patterns for an input image of a uniform density on a screen of 256 × 256 pixels using a 600-dpi BJ printer. Fig. 26 shows the dot pattern for the 8thgray level, and Fig. 27 shows the dot pattern for the 32nd gray level. These figures show actual screens obtained using the 600-dpi BJ printer, which have been enlarged 10 times in both length and width. The unit pixel blocks corresponding to the unit mask are exactly one-fourth of these screens in size, and the distribution of dots shown in Figs. 26 and 27 evidently show the periodicity of the unit masks.

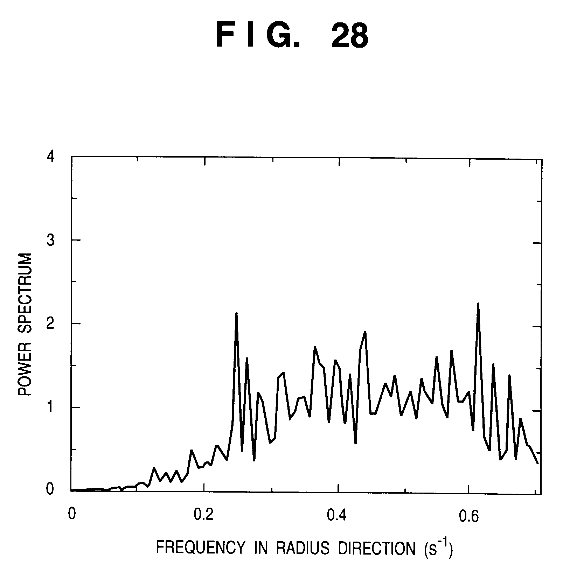

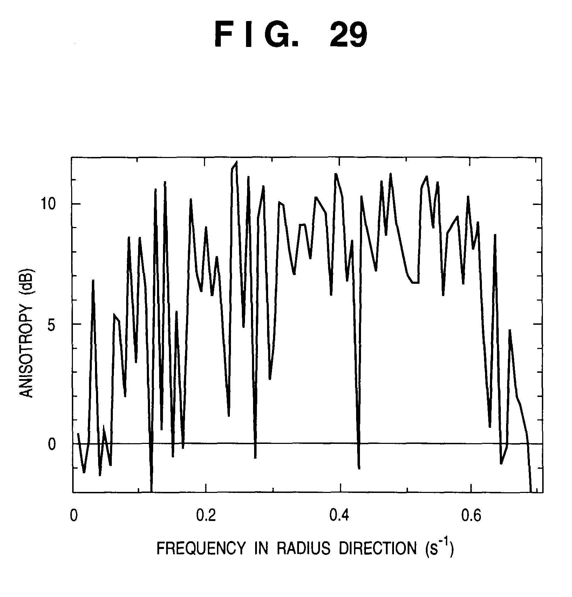

Figs. 28 and 29 show the spatial-frequency property of the dot pattern of 128 × 128 pixels for the 32nd gray level generated using a single unit mask according to this embodiment. Fig. 28 shows a one-dimensional-frequency property in the radial direction and also shows many isolated spectra having sharp peaks are seen on noise components. Compared to the first embodiment (Fig. 19), the peaks of the isolated spectra are relatively higher than the noise components. This is because the number of sets of element pixel blocks having the same dot pattern was doubled to increase the periodicity.

Fig. 29 shows anisotropy. In this figure, the mean anisotropy value exceeds 4 dB, which is assumed to indicate a particularly high anisotropy, and is a little under 7 dB, and the maximum value exceeds 10 dB, which is assumed to indicate a very high anisotropy, and the largest of the maximum values reaches 14 dB. Both the mean and maximum values are higher than a level that can be determined to exhibit the non-blue-noise property according to the error diffusion method. Therefore, this dot pattern evidently has the non-blue-noise property.

The match between the frequencies indicating a high anisotropy and the frequencies of the isolated spectra in the one-dimensional-frequency property indicates that the spectra are attributable to the periodicity of the mask.

Such a spectrum property is not limited to the 32ndgray level but is found in all gray levels, so the unit mask according to this invention obviously has a non-blue noise property.

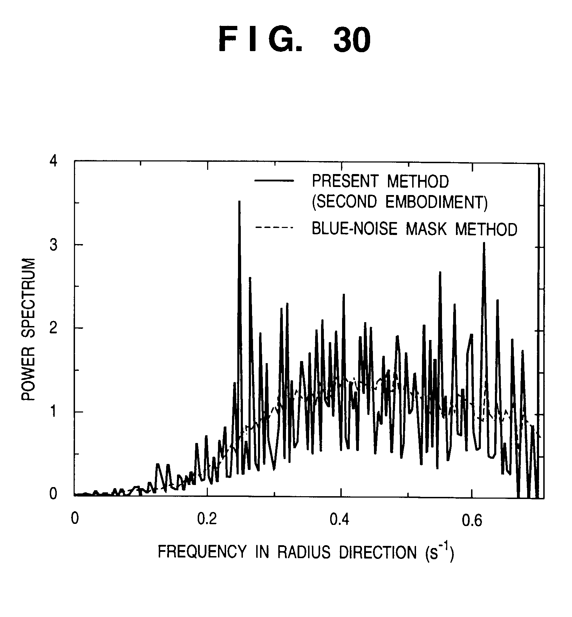

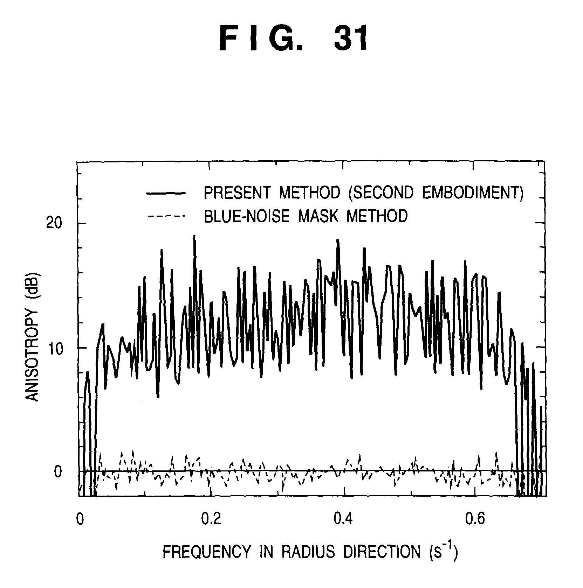

Figs. 30 and 31 show the spatial-frequency property of the dot pattern for the 32nd gray level generated using the unit masks according to this embodiment, on a screen of 256 × 256 pixels, which is a standard for evaluating spectra. Fig. 30 shows a one-dimensional-frequency property in the radial direction. In this figure, the solid line shows this embodiment, while the broken line shows the case of a blue noise mask of 256 × 256 pixels. This figure shows that the present masks substantially reduce the number of noise components and that many of the isolated spectra have high sharp peaks, compared to the case of the single unit mask.

Fig. 31 shows anisotropy. In this figure, the solid line shows this embodiment and the broken line shows the case of a blue noise masks of 256 × 256 pixels. This embodiment exhibits a very high anisotropy of about 13 dB as an average value and provides a large number of spectra having a maximum value exceeding 15 dB, some of them close to 20 dB.

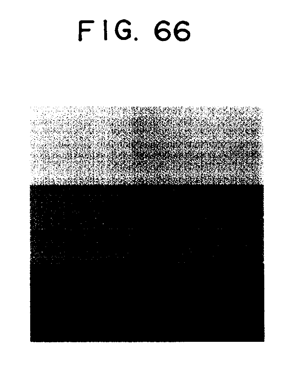

As described above, despite its high anisotropy equivalent to that of the dispersed-dot dithering method, this embodiment prevents periodic artifacts caused by the repetition of the same pattern from being sensed as shown in the gray scale in Fig. 72 for the blue noise mask of 128 × 128 pixels (Fig. 66 shows a gray scale obtained by the masks according to this embodiment).

In addition, when output images were compared which were obtained using the present masks and blue noise mask of 256 × 256 pixels, respectively, from an input image having lower gray levels and a gradually changing shading, the present masks exhibited a slightly better performance in reproducing the gradually changing shading. The high uniformity of the dot distribution according to this embodiment was numerically substantiated.

As described above, the size of the mask generating a visually pleasing dot pattern is only one-fourth of that of the corresponding blue noise mask. Besides, since the two sets of element pixel blocks having the same 16 dot patterns have the same threshold array, the number of element masks having an independent threshold array is 34. Accordingly, 34/256 = 0.13, so the above size is about one-eighth of that of the corresponding blue noise mask rather than one-fourth. That is, by improving the method for reading data from the storage device, the storage capacity required to store the masks according to this embodiment can be reduced to about one-eighth of that for the blue noise mask of 256 × 256 pixels.

These results of evaluations indicate that the mask according to this embodiment is not based on the theoretical scheme for the blue noise property shown in Fig. 68 but on the new theoretical scheme shown in Fig. 1.

<Third embodiment>

A procedure for creating another mask having the features of this embodiment will be described with reference to the flowchart in Fig. 5.

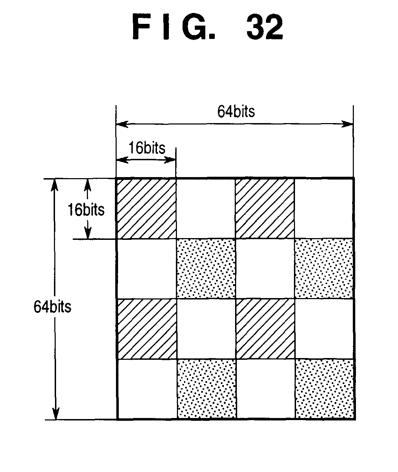

Fig. 32 shows the shape and size of a unit pixel block corresponding to a unit mask, and a set of element pixel blocks having the same dot array. The set of four element pixel blocks painted black and the set of four element pixel blocks painted light gray have exactly the same dot pattern over all gray levels.

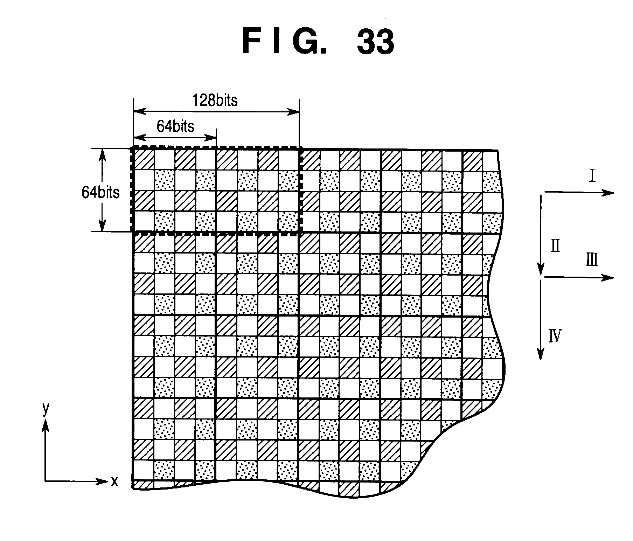

Fig. 33 shows a two-dimensional array of unit pixel blocks of 64 × 64 pixels corresponding to a unit mask on an output screen, based on step S2 in Fig. 5. As is apparent from the figure, the unit pixel blocks are arranged in the vertical direction by simply arranging them in the (y) direction, whereas in the horizontal direction (x direction), the blocks are not simply arranged but in such a way that the adjacent unit pixel block is offset by 32 pixels in the vertical direction. This arrangement is intended to avoid allowing the periodic structure to be visually easily sensed as in a simple arrangement of the same small-scale patterns placed orderly in both horizontal and vertical directions and to reduce horizontal linear blurs caused by non-uniform sheet feeding in order to facilitate the above avoidance. To reduce horizontal linear blurs in this manner, adjacent arrays of vertical unit pixel blocks are more effectively offset from each other, for example, by 16 pixels in the positive direction of the (y) axis.

On the other hand, to reduce vertical linear blurs, adjacent arrays of horizontal unit pixel blocks are more effectively offset from each other, for example, by 16 pixels in the positive direction of the (x) axis.

This embodiment uses for convenience a mask corresponding to the rectangular pixel block of 64 × 128 pixels shown by the thick dotted line in Fig. 33. This figure shows in its right the order in which the mask is repeatedly scanned in generating a dot pattern.

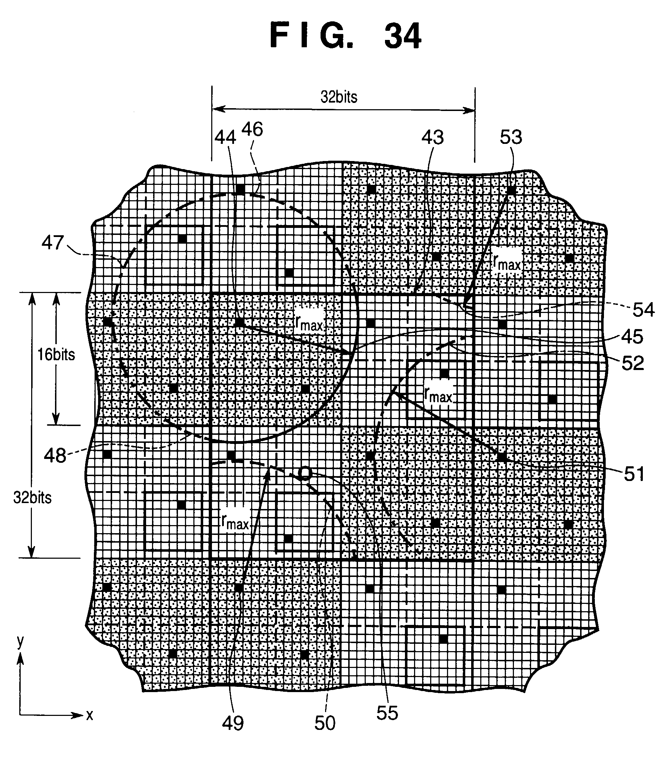

Steps S3 and S4 in Fig. 5 according to this embodiment will be described with reference to Fig. 34. For simplicity, this embodiment will be described in conjunction with the unit mask size of 32 × 32 pixels. Accordingly, the size of the unit pixel block is 32 × 32 pixels as shown in Fig. 34. Furthermore, horizontally adjacent unit pixel blocks are offset by 16 pixels in the (y) direction. The set of element pixel blocks painted dark gray have exactly the same dot pattern over all gray levels.

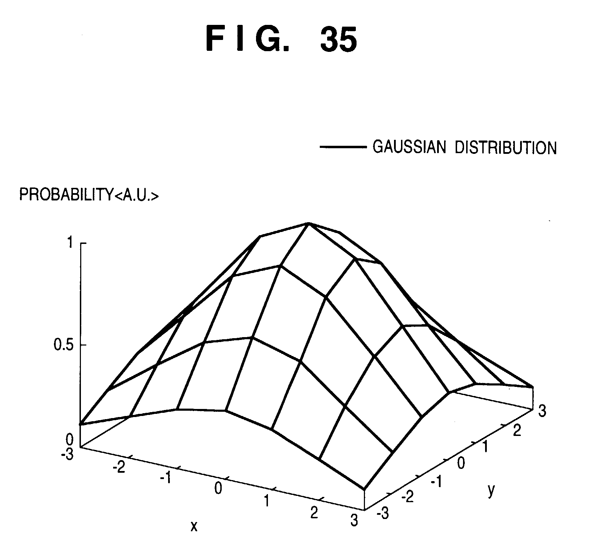

The dots each provided for the (4, 4) pixel of each element pixel block of 16 × 16 pixels form a dot pattern for the first gray level and match the dot pattern for the first gray level of the dispersed-dot dither method. The dots each provided for the (12, 12) pixel of each pixel element block of the set of element pixel blocks having the same dot pattern form the second gray level and also match the dots for the second gray level of the dispersed-dot dithering method. A small pixel block of 7 × 7 = 49 pixels is provided in each of the other element pixel blocks, and one of the 49 pixels is randomly selected as the second gray-level dot. All the 49 pixels, however, are not provided with the same probability of selection, but are weighted in a Gaussian manner as shown in Fig. 35 using the position of the central pixel as the origin so that pixels closer to the center are more likely to be selected.

The Gaussian function used in this weighting is given by the following equation.

[Equation 6]

$$W = e^{-\frac{X^2+Y^2}{2\sigma^2}} \quad \text{(where } \sigma^2 = 4\text{)} \quad (6)$$

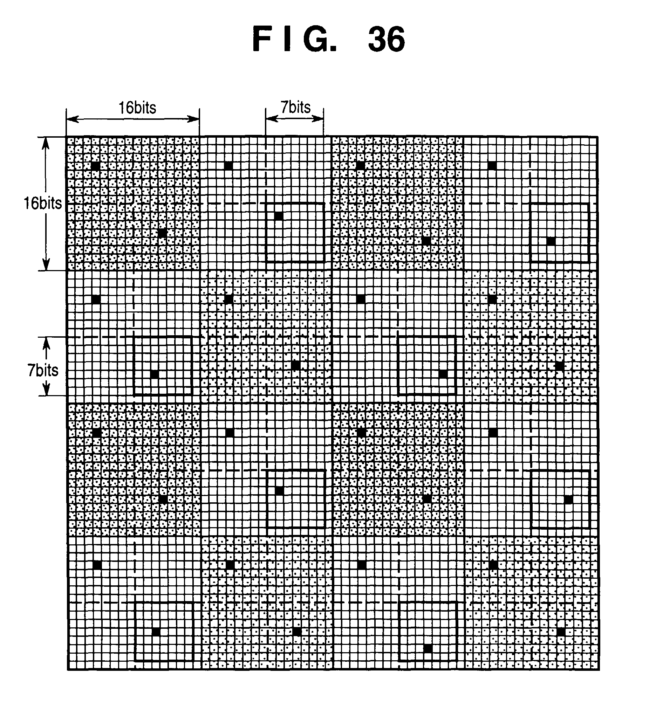

Fig. 36 shows the results of creation of dot patterns up to the second gray level for the unit pixel block shown in Fig. 32 using the above method. As described above, in making the dot positions for the second gray level irregular, dot positions are regulated by providing small pixel blocks of 7 × 7 = 49 pixels and further weighting the pixels. This is because when the masks are small, the number of irregularly positioned dots decreases and because the positions of the randomly selected dots are biased when regulated by simply providing the small pixel blocks, thereby allowing the periodicity obtained by the repetition of the small-scale dot pattern to be sensed more easily. Actually, in the second embodiment with large-scale masks, there are 32 dots for the second gray level which are made irregular, requiring only regulation with the small pixel blocks. This embodiment, however, includes only 8 dots, so it is difficult to control the dots so that their positions are not biased by simply regulating them with the small pixel blocks.

Returning to Fig. 34, a method for forming a dot pattern for the third gray level according to this embodiment is described. In contrast to the above embodiments in which the unit pixel blocks are arranged orderly in both horizontal and vertical directions on the output screen, there may be an offset between adjacent unit pixel blocks along their boundary, so a different method must be used to process the repulsive potential in the boundary.

With reference to Fig. 34 and taking as an example a dot 44 for the first gray level in a unit pixel block 43 forming a dot pattern, a method for processing the repulsive potential provided to this dot will be described.

A solid line 45 shows a range inside of the unit pixel block 43 which is subjected to this repulsive potential. Part of the potential that extends out from the upper boundary of the unit pixel block 43 and that is represented by a broken line 46 is shifted parallel into the block 43 without changing its shape until it abuts on the lower boundary of the block 43, because there is no offset between the unit pixel blocks along the upper boundary. This part of the potential is equal to a potential 50 applied to the inside of the unit pixel block 43 by the repulsive potential provided to a dot 49 for the first gray level in the unit pixel block located under and adjacent the unit pixel block 43 which corresponds to the dot 44 for the first gray level in the block 43.

Part 47 of the potential that extends into the unit pixel block located diagonally above and on the left of the unit pixel block 43 in such a way to be offset therefrom by 16 pixels and that is represented by a broken dotted line is shifted so as to be equal to a potential 52 applied to the inside of the unit pixel block 43 by the repulsive potential provided to a dot 51 corresponding to a dot 44 for the first gray level in the unit pixel block located diagonally below and on the right of the unit pixel block 43 in such a way as to be offset therefrom by 16 pixels.

Part 48 of the potential that extends into the unit pixel block located diagonally below and on the left of the unit pixel block 43 in such a way to be offset therefrom by 16 pixels and that is represented by a broken dotted line is shifted so as to be equal to a potential 54 applied to the inside of the unit pixel block 43 by the repulsive potential provided to a dot 53 corresponding to a dot 45 for the first gray level in the unit pixel block located diagonally above and on the right of the unit pixel block 43 in such a way as to be offset therefrom by 16 pixels. In this manner, the processing of the repulsive potential applied to the dot 44 is completed.

A repulsive potential is applied to each of the other dots provided inside the unit pixel block 43, and a first dot for the third gray level is provided to a pixel 55 with the lowest repulsive potential in the unit pixel block 43. A new dot is provided to each of the three remaining element pixel blocks in such a way that the repulsive potentials applied to the new dots are accumulated, thereby completing a dot pattern for the third gray level.

Although Fig. 34 uses the small-scale unit pixel blocks and repulsive potentials in order to simply describe the method for processing the repulsive potential in the boundary between the unit pixel blocks according to this embodiment, this method can be applied to the unit pixel block in Fig. 36 and the repulsive potential shown in Fig. 8 in order to create the dot pattern for the third gray level according to this embodiment.

Thus, for the third and subsequent gray levels, despite the change in the method for processing the repulsive potential in the boundary, dot patterns were formed according to step S5 in Fig. 5, which is described in detail in the second embodiment, and masks were produced based on these dot patterns.

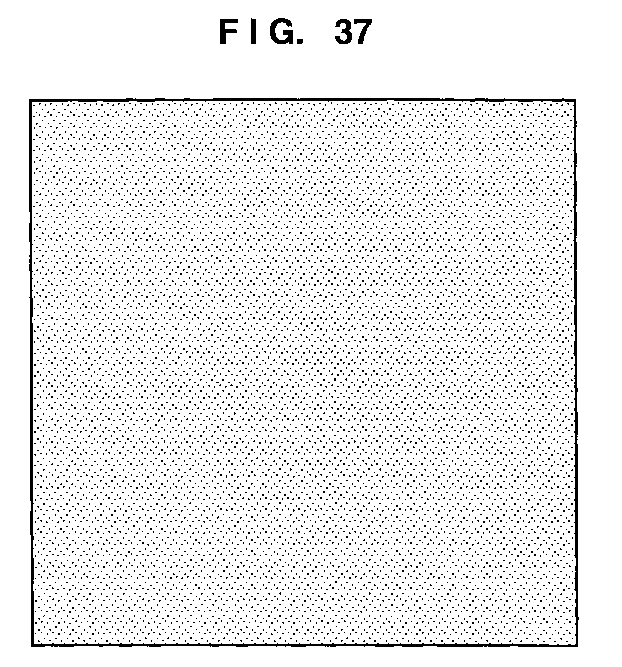

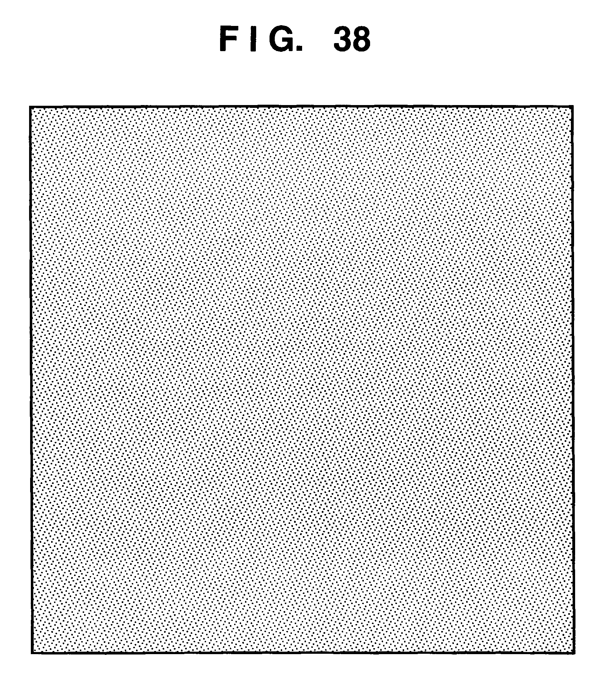

The masks created in this manner were used to output the dot patterns for an input image of a uniform density on a screen of 256 × 256 pixels using a 600-dpi BJ printer. Fig. 37 shows the dot pattern for the 8thgray level, and Fig. 38 shows the dot pattern for the 32nd gray level. These figures show actual screens obtained using the 600-dpi BJ printer, which have been enlarged 10 times in both length and width. The unit pixel blocks corresponding to the unit mask of 64 × 64 pixels are one-sixteenth of these screen in size, and the distribution of dots shown in Figs. 37 and 38 evidently show the periodicity of the unit masks.

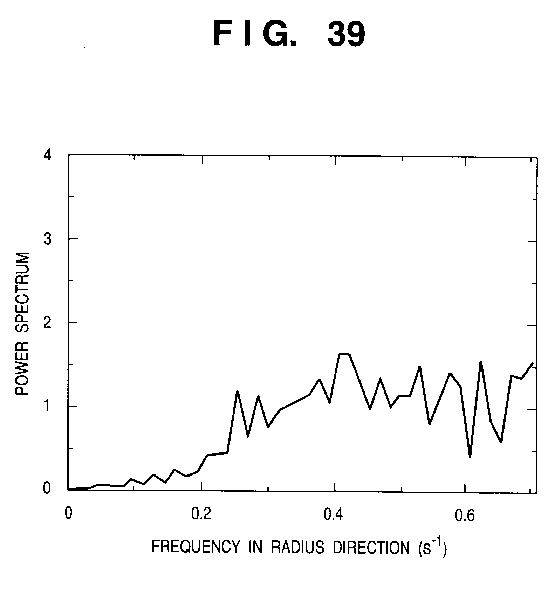

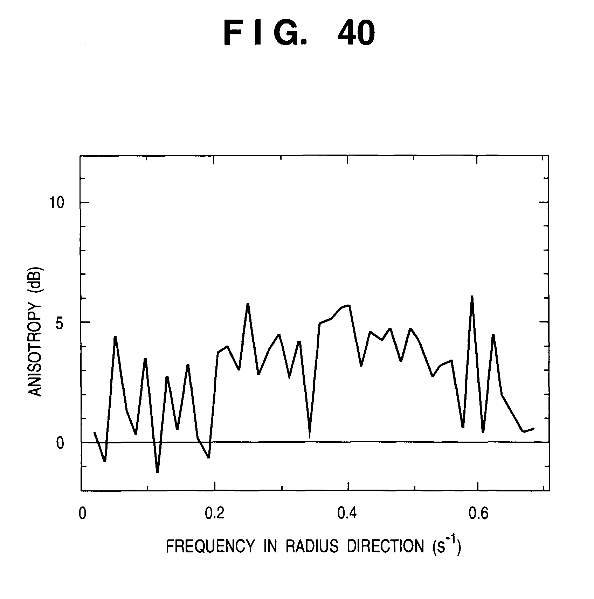

Figs. 39 and 40 show the spatial-frequency property of the dot pattern (64 × 64 pixels) for the 32nd gray level generated using a single unit mask according to this embodiment. Fig. 39 shows a one-dimensional-frequency property in the radial direction and also shows many isolated spectra having peaks are seen on noise components.

Fig. 40 shows anisotropy. This figure shows a large number of spectra having a mean value of 3 dB odd and a maximum value exceeding 4 dB, which is assumed to be a particularly anisotropic level according to the mask method. Since there are also spectra having a maximum value of about 6 dB, this dot pattern definitely has the non-blue-noise property. If the frequencies of the peaks in the one-dimensional-frequency property agree with the frequencies of the peaks in anisotropy, then for example, spectra of 0.24/s and 0.41/s are attributable to the periodicity of the mask.

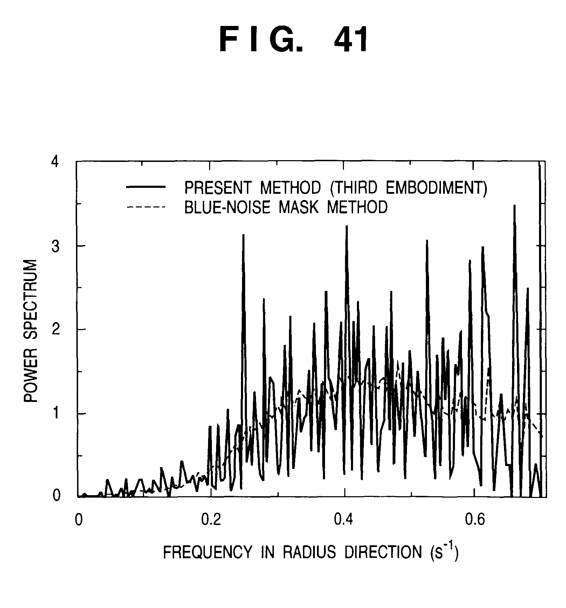

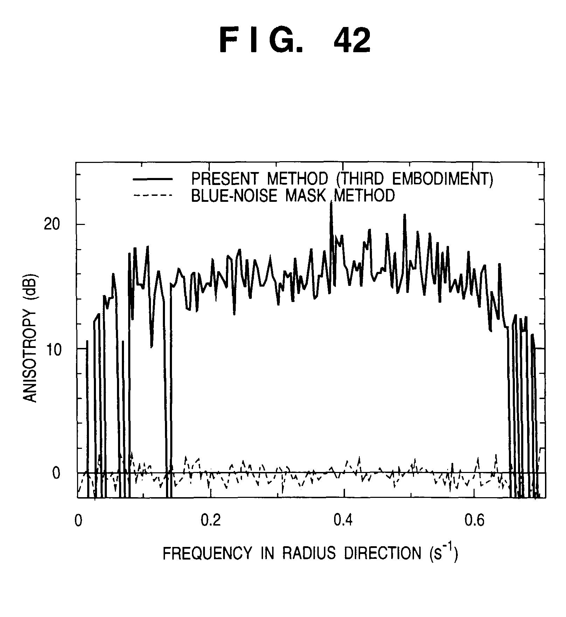

Such a spectrum property is not limited to the 32ndgray level but is found in all gray levels, so the unit mask according to this invention obviously has a non-blue noise property. Figs. 41 and 42 show the spatial-frequency property of the dot pattern for the 32nd gray level generated using the unit masks according to this embodiment, on a screen of 256 × 256 pixels, which is a standard for evaluating spectra. Fig. 41 shows a one-dimensional-frequency property in the radial direction. In this figure, the solid line shows this embodiment, while the broken line shows the case of a blue noise mask of 256 × 256 pixels. There are very few noise components and most of the isolated spectra have high sharp peaks.

Fig. 42 shows anisotropy. In this figure, the solid line shows this embodiment and the broken line shows the case of a blue noise masks of 256 × 256 pixels. This embodiment exhibits a very high anisotropy of about 16 dB as an average value and provides several spectra exceeding 20 dB as the maximum amplitude. Since a similar anisotropy is observed in the other gray levels, this embodiment has a higher anisotropy than the above embodiments.

As described above, despite its very high anisotropy equivalent to that of the dispersed-dot dithering method, this embodiment prevents periodic artifacts caused by the repetition of the same pattern from being sensed as shown in the gray scale in Fig. 73 for the blue noise mask of 64 × 64 pixels.

In addition, when output images were compared which were obtained using the present masks and blue noise mask of 256 × 256 pixels, respectively, from an input image having lower gray levels and a gradually changing shading, the present masks exhibited a slightly better performance in reproducing the gradually changing shading. The high uniformity of the dot distribution according to this embodiment was numerically substantiated.

As described above, the mask generating a visually pleasing dot pattern according to this embodiment has a size of 64 × 128 pixels as shown in Fig. 33, a unit mask of 64 × 64 pixels can be used by improving the method for reading data from the storage device.

This size is one-sixteenth of the size of the blue noise mask of 256 × 256 pixels. Besides, since the two sets of element pixel blocks having the same 4 dot patterns have exactly the same threshold array, the number of element masks having an independent threshold array is 10. Accordingly, 10/256 = 0.039, so the above size is substantially one-twenty-fifth of that of the corresponding blue noise mask rather than one-sixteenth. That is, by improving the method for reading data from the storage device, the storage capacity required to store the masks according to this embodiment can be reduced to about one-twenty-fifth of that for the blue noise mask of 256 × 256 pixels.

These results of evaluations indicate that the mask according to this embodiment is not based on the theoretical scheme for the blue noise property shown in Fig. 68 but on the new theoretical scheme shown in Fig. 1.

<Fourth embodiment>

A procedure for creating another mask having the features of this embodiment will be described.

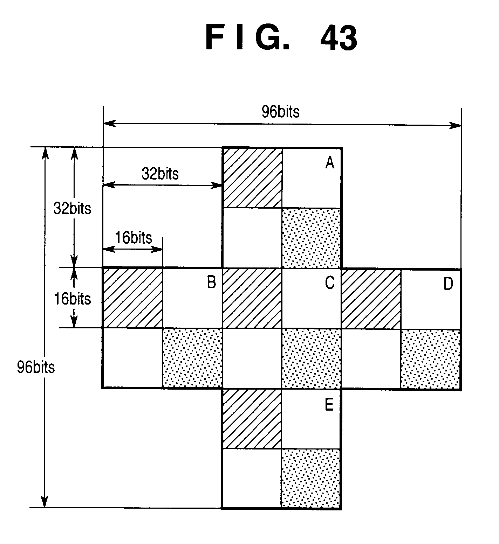

Fig. 43 shows the shape and size of a unit pixel block corresponding to a unit mask, and a set of element pixel blocks having the same dot array in this embodiment. According to this embodiment, the mask is shaped like a cross as is apparent from the figure, thereby enabling both the main scanning direction of the printer and the array direction of the mask to be tilted, as shown in Figs. 83 and 84 cited from the well-known example (USP 4,753,822) for clustered-dot dithering. That is, although the third embodiment allows the array of the mask to be shifted in only the (x) or (y) direction of the output image surface, this embodiment enables it to be two-dimensionally shifted to deal with the non-uniformity in both the main scanning and sub-scanning directions.

In Fig. 43, the set of five element pixel blocks painted dark gray and the set of five element pixel blocks painted light gray have exactly the same dot pattern over all gray levels. Thus, although the total number of element pixel blocks is 20, there are 12 independent element masks so the substantial storage capacity required to store unit masks is only about one-twentieth of that for the blue noise mask of 256 × 256 pixels.

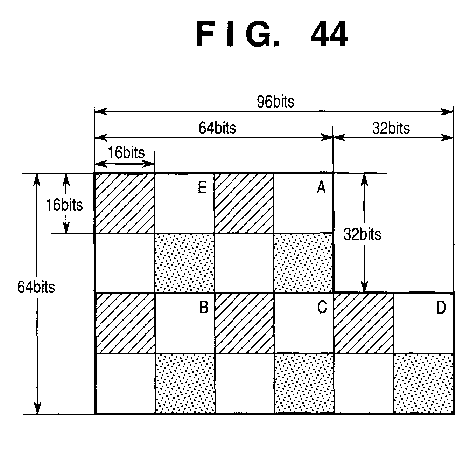

Fig. 44 shows the external shape of a unit mask actually created according to this invention. When 2 × 2 = 4 element pixel blocks are considered to be one block, the number of such unit pixel blocks is 5, and these blocks correspond to the blocks A to D shown in Fig. 43. Accordingly, exactly the same dot pattern as shown in Fig. 43 can be obtained by two-dimensionally arranging a mask, but due to its smaller number of sides forming the external shape of the mask, the mask in Fig. 44 enables the repulsive potential in the boundary to be more simply processed during mask creation.

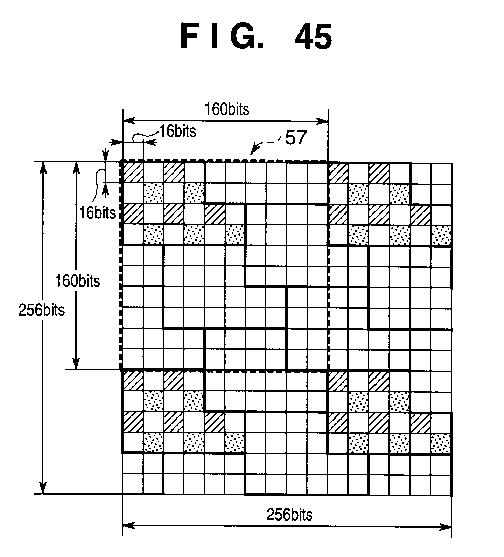

Fig. 45 shows an array of unit pixel blocks corresponding to an array of unit masks. As is easily understandable from the figure, this embodiment can use a square mask of 160 × 160 pixels, which is shown by a thick dotted line 57.

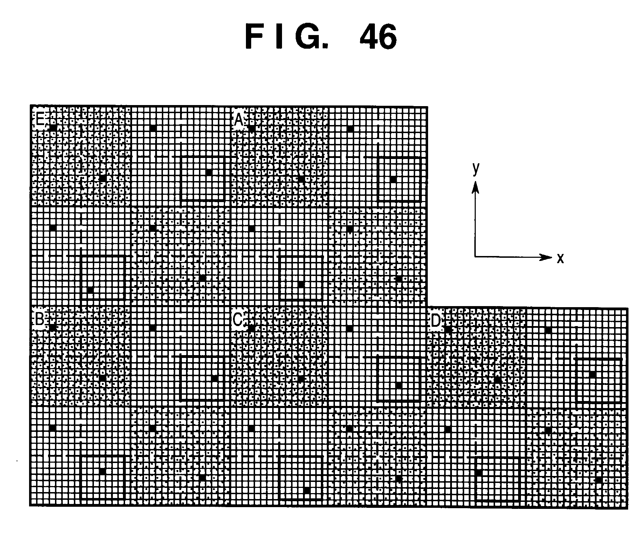

Steps S3 and S4 in Fig. 5 according to this embodiment will be described with reference to Fig. 46. For the first gray level, a dot is provided to the (4, 4) pixel of each element pixel block. Then, for the set of element pixel blocks having the same dot pattern, a dot for the second gray level is provided to the (12, 12) pixel. These dots match the dot pattern for the second gray level of the dispersed-dot dithering method. The method for introducing irregularity (perturbation) into the dot pattern for the second gray level in each of the element pixel blocks having individual independent bit patterns is exactly the same as in the third embodiment. That is, a small block of 7 × 7 bits centered at (12, 12) pixel is provided in each of these element pixel blocks, and the pixels contained in this small block are weighted in a Gaussian manner before one of the pixels is randomly selected. In this manner, the dot pattern for the second gray level for the unit pixel blocks can be determined as shown in Fig. 46.

As in the above embodiment, the two-dimensional array of unit pixel blocks according to this embodiment is not simple, resulting in the complicated method for processing the repulsive potential extending out from the boundary. However, the basic method, which has been described above in detail, can be used in this case.

For the third and subsequent gray levels, dot patterns can be created according to step S5 and subsequent steps in Fig. 5 as in the third embodiment, thereby completing a dither matrix.

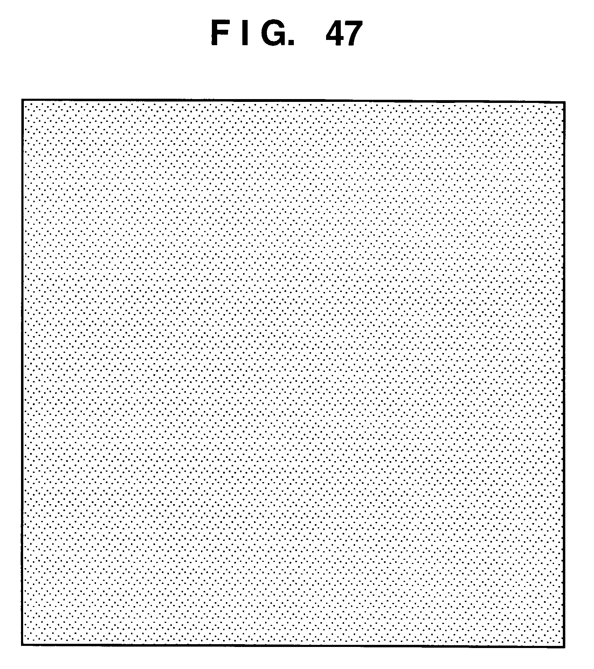

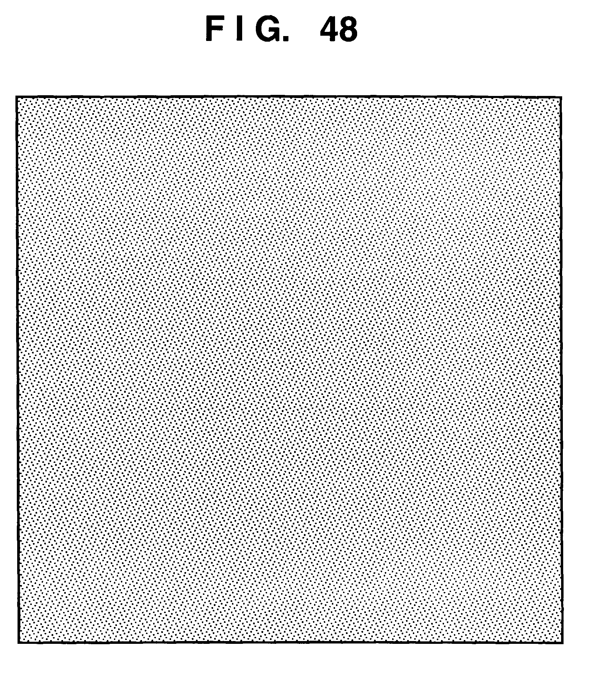

The masks created in this manner were used to output the dot patterns for an input image of a uniform density on a screen of 256 × 256 pixels using a 600-dpi BJ printer. Fig. 47 shows the dot pattern for the 8thgray level, and Fig. 48 shows the dot pattern for the 32nd gray level. These figures show actual screens obtained using the 600-dpi BJ printer, which have been enlarged 10 times in both length and width. The distribution of dots shown in Figs. 47 and 48 evidently show the periodicity of the unit masks.

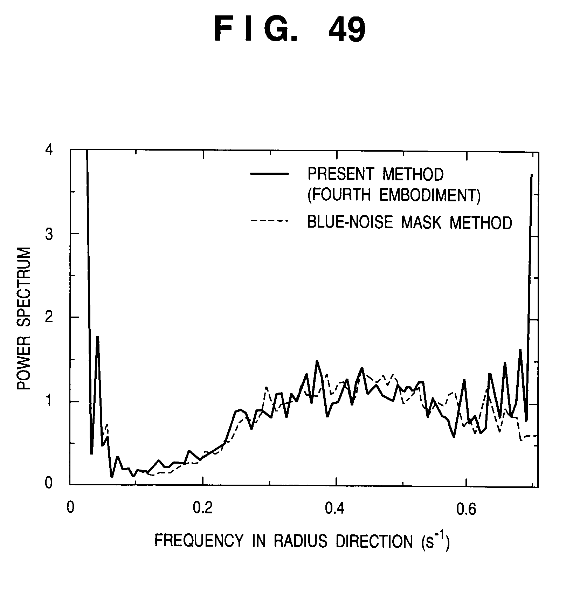

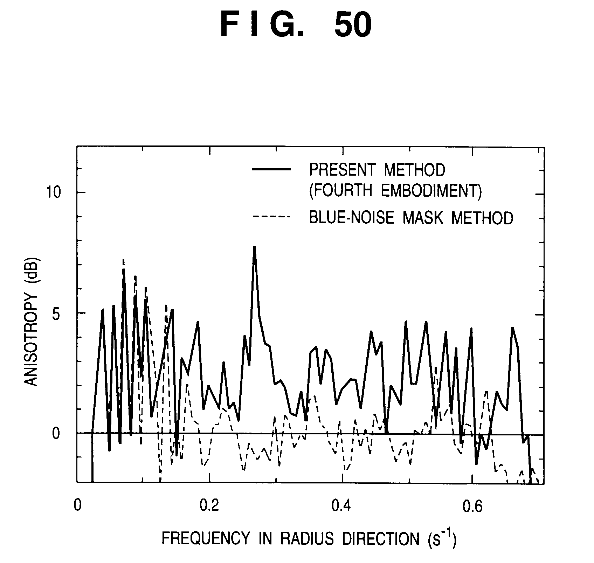

Figs. 49 and 50 show the spatial-frequency property of the dot pattern for the 32nd gray level generated using a single unit mask according to this embodiment. Fig. 49 shows a one-dimensional-frequency property in the radial direction. Since the spatial-frequency property is normally evaluated using the fast Fourie transform (FFT) algorithm, the pixel block must have a size of $2^n \times 2^n$ where (n) is an integer. Thus, according to this embodiment, the screen size was 128 × 128 pixels and evaluation was carried out by assuming that all pixels outside the unit pixel block are each provided with a dot.

Since the blue noise mask method, which is an comparative example, uses fast Fourie transform to create masks, it is very difficult for this method to design masks such as those generated according to this embodiment.

Thus, for convenience, a dot pattern was cut out from an original dot pattern generated using a blue noise mask of 128 × 128 pixels in such a way that the cutout dot pattern was shaped like the unit pixel block according to this embodiment.

Fig. 49 shows one-dimensional power spectra for the 32nd gray level for single unit masks, which were compared and evaluated as described above, and Fig. 50 shows anisotropy. The one-dimensional power spectra show that both methods have a very high spectrum at a frequency lower than 0.1/s or 0.15/s. This is because the dot pattern in the unit pixel block that was not square was evaluated using the screen of 128 × 128 pixels larger than this dot pattern. Thus, the frequency area higher than or equal to 0.2/s which is not substantially affected by these spectra is used for comparison.

For the one-dimensional power spectrum, this embodiment has relatively higher and more sharp isolated spectra than the blue noise mask method. With respect to the anisotropy of the frequency area higher than or equal to 0.2/s, the blue noise mask method has an average of 0 dB and is thus isotropic. Since even the frequency of a spectrum exhibiting a high anisotropy is about 3 dB or lower, the value of the blue noise mask method is almost equivalent to that of spectra exhibiting the highest anisotropy in the Perturbed Error Diffusion method. On the other hand, this embodiment has a large number of spectra having a mean value of 2 dB odd and a maximum value higher than 4 dB, which is assumed to be a particularly anisotropic level, or possibly higher than 6 dB.

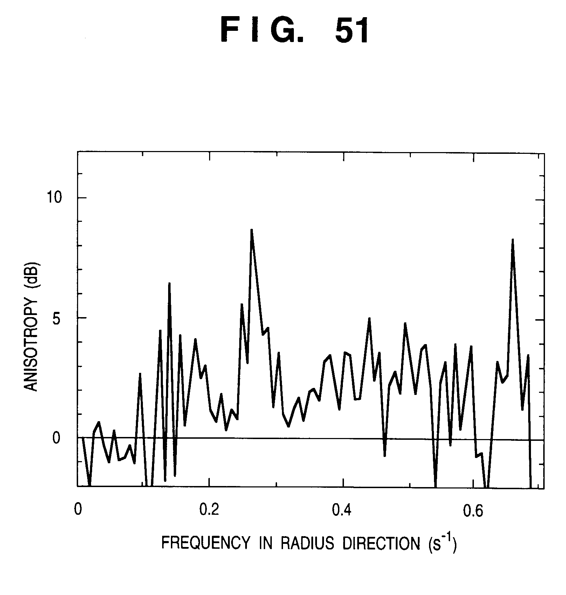

Accordingly, this embodiment is obviously anisotropic and has a non-blue noise property. For reference, Fig. 51 shows the results of subtraction of the anisotropy value of the blue noise mask method from the anisotropy value of this embodiment for the purpose of eliminating the effects of the shape of the unit pixel block. If the blue noise mask method is assumed to be isotropic, this embodiment exhibits a higher anisotropy.

Such a spectrum property is not limited to the 32ndgray level but is found in all gray levels, so the unit mask according to this invention obviously has a non-blue noise property.

Another point substantiates the non-blue-noise property of the mask according to this embodiment. That is, due to its size larger than the unit mask according to the third embodiment, the unit mask according to this embodiment has a higher periodicity, thus, a higher anisotropy. Since the mask according to the third embodiment exhibits the non-blue-noise property, the mask according to this embodiment reasonably has the non-blue-noise property.

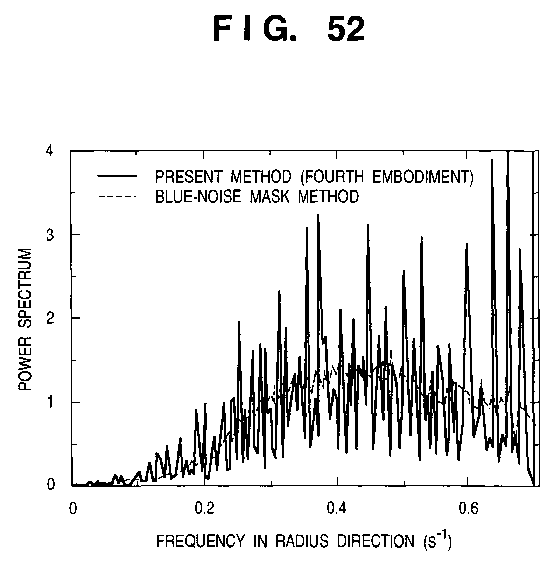

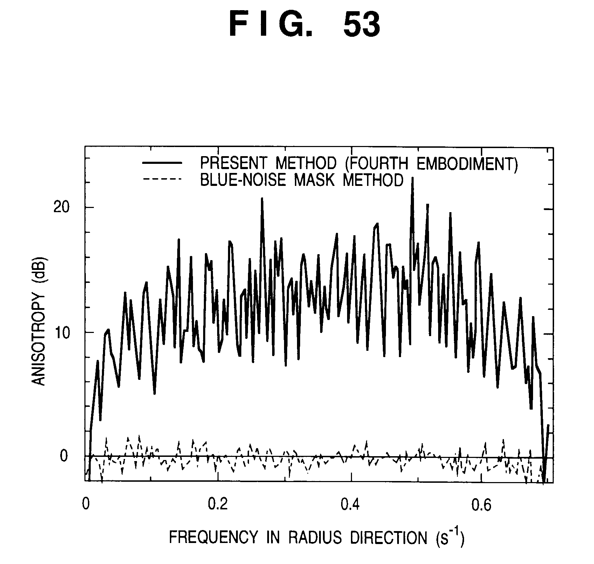

Figs. 52 and 53 show the spatial-frequency property of the dot pattern for the 32nd gray level generated using the unit masks according to this embodiment, on a screen of 256 × 256 pixels, which is a standard for evaluating spectra. Fig. 52 shows a one-dimensional-frequency property in the radial direction. In this figure, the solid line shows this embodiment, while the broken line shows the case of a blue noise mask of 256 × 256 pixels. This embodiment includes very few noise components and is composed of isolated spectra having high sharp peaks.

Fig. 53 shows anisotropy. In this figure, the solid line shows this embodiment and the broken line shows the case of a blue noise masks of 256 × 256 pixels. This embodiment exhibits a very high anisotropy of about 12 dB as an average value and provides several spectra exceeding 20 dB.

Such a spectrum property is not limited to the 32nd gray level but is found in all gray levels, so obviously, the dot pattern generated using the masks according to this invention is not a blue noise pattern.

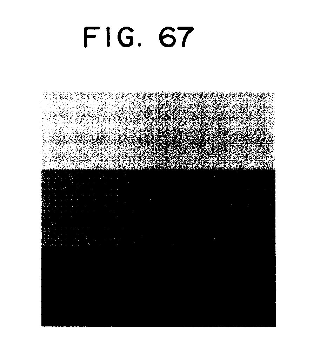

As described above, despite its very high anisotropy similar to that of the dispersed-dot dithering method, this embodiment substantially prevented the viewer from sensing periodic artifacts caused by the repetition of an identical pattern as shown in the gray scale in Fig. 73 for the blue noise mask of 64 × 64 pixels (Fig. 67 shows a gray scale obtained using the masks according to this invention).

In addition, when output images were compared which were obtained using the present masks and blue noise mask of 256 × 256 pixels, respectively, from an input image having lower gray levels and a gradually changing shading, the present masks exhibited a slightly better performance in reproducing the gradually changing shading. The high uniformity of the dot distribution according to this embodiment was numerically substantiated.

These results of evaluations indicate that the mask according to this embodiment is not based on the theoretical scheme for the blue noise property shown in Fig. 68 but on the new theoretical scheme shown in Fig. 1.

<Fifth embodiment>

A procedure for creating yet another mask having the features of this embodiment will be described.

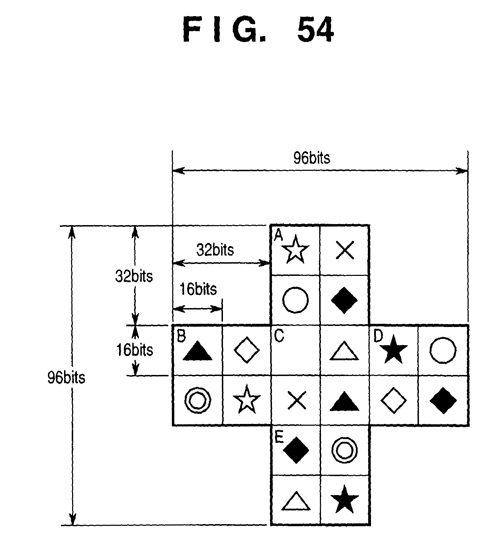

Fig. 54 shows the shape and size of a unit pixel block corresponding to a unit mask, and a set of element pixel blocks having the same dot array. Since the mask is shaped like a cross as in the fourth embodiment, this embodiment can simultaneously deal with the non-uniformity in both the main scanning and sub-scanning directions.

In Fig. 54, the individual element pixel blocks are mutually distinguished using patterns such as ☆ and ♦, but the set of element pixel blocks having the same pattern have the same dot pattern over all gray levels. Although in this example, the total number of element pixel blocks is 20, there are 8 sets of element pixel blocks having the same pattern. Thus, this embodiment includes 10 independent element masks, and this value, which is equal to that of the third embodiment, is smaller than those of the other illustrated embodiments. Consequently, the storage capacity required to store unit masks is only about one-twenty-fifth of that for the blue noise mask of 256 × 256 pixels.

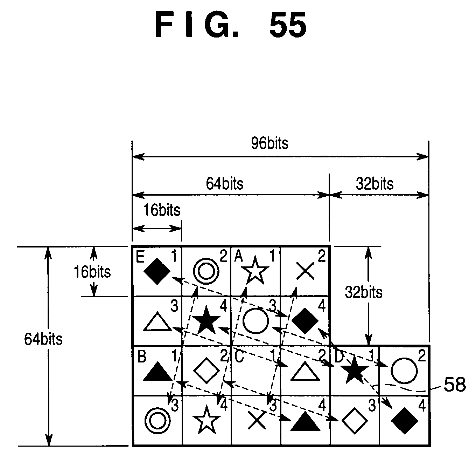

Fig. 55 shows the external shape of a unit mask actually created according to this invention, which is exactly the same as in the fourth embodiment. This figure uses dotted arrows to show the location of sets of element masks each having exactly the same threshold array, and shows that the location conforms to a constant periodicity except for one set shown by arrow 58.

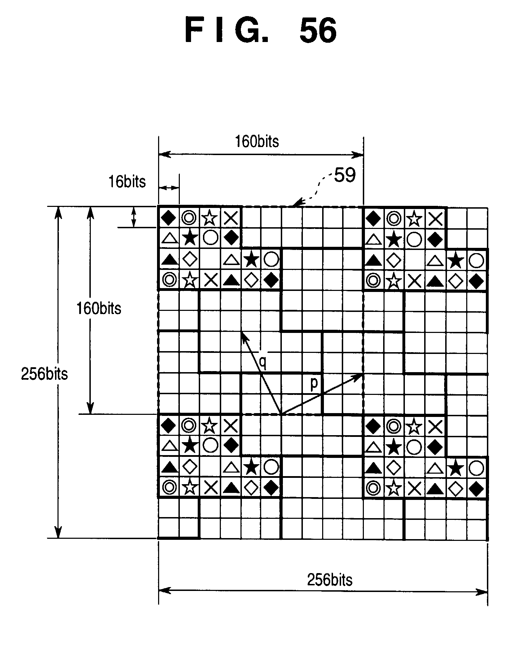

Fig. 56 shows an array of unit pixel blocks corresponding to an array of unit masks. This array is exactly the same as in the fourth embodiment and can also be used as a square mask of 160 × 160 pixels, which is shown by a thick dotted line 59.

This embodiment differs from the fourth embodiment in the method for determining a dot pattern for the second gray level.

In general, when the mask is small and the dot pattern is not uniform, periodic artifacts appear in the direction of the arrangement of the unit pixel blocks. If the arrangement direction according to this embodiment is represented using vectors (p) and (q), stripe patterns most frequently appear in the directions parallel with (p) and (q). (p) and (q) represent the direction and distance in and over which a unit pixel block moves parallel toward the adjacent unit pixel block until they overlap each other, and these vectors are mutually orthogonal.

In addition, the pixels can be located only at lattice points parallel with the (x) and (y) axes and the dots for the first gray level are in fact arranged on such lattice points, so stripe patterns are likely to appear in these two directions next to the (p) and (q) directions.

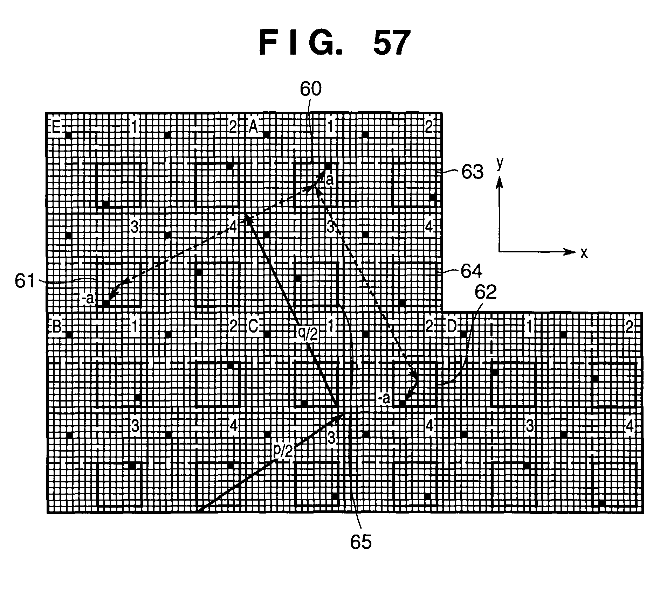

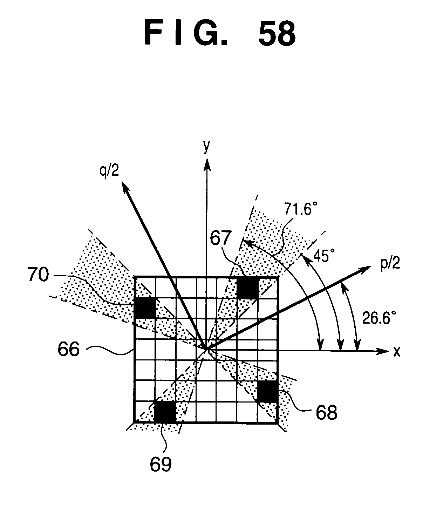

A method for determining a dot pattern for the second gray level in such a way as to prevent such stripe patterns from appearing according to this embodiment will be described with reference to Figs. 57 and 58.

Fig. 57 shows unit pixel blocks for which dots have been provided up to the second gray level. The (4, 4) pixel of each element pixel block is a dot for the first gray level, and a dot for the second gray level has been provided in each of the small block of 7 × 7 pixels centered at the (12, 12) pixel. These dots for the second gray level have not been randomly determined from the 7 × 7 = 49 pixels of the small block but have been selected from one of the four pixels according to a specified rule. The regularity for this selection will be described with reference to Fig. 58 taking as an example, two small blocks 60 and 61 located on a straight line parallel with the vector (p) and two small blocks 60 and 62 located on a straight line parallel with the vector (q).

In Fig. 57, when the small blocks 60 and 61 are seen from the (p) direction while the small blocks 60 and 62 are seen from the (q) direction, the pixel located at an equal distance from the centers of the respective small pixel blocks as seen from either direction is located in the direction that divides the angle between (p) and (q) into two.

In addition, when the respective small blocks are seen from the directions of the (x) and (y) axes, the pixel located at an equal distance from the centers of the respective small pixel blocks as seen from either direction is also located in the direction that divides the angle between the (x) and (y) axes into two.

Fig. 58 shows these results. In this figure, the center of the small pixel block 60 is used as an origin to set an xy coordinate system, and two vectors are drawn in this system. In the first quadrant, a line dividing the angle between the two coordinate axes and a line dividing the angle between the two vectors are drawn as alternate long and short dash lines. This applies to the other quadrants. Only one pixel can be selected from the small block, so it can be selected from an area of each quadrant sandwiched by the two bisectors. Then, four pixels, for example, 67, 68, 69, and 70, can be selected from the respective quadrants.

Thus, when the pixel 67 in Fig. 58 is determined to correspond to the pixel of the small block 60 in Fig. 57 to which a dot for the second gray is to be provided and its position is represented using a vector (a), pixels located at -a are selected from the small blocks 61 and 62 in order to avoid a biased dot distribution.

In a block A, the pixels corresponding to the pixels 68, 69, and 70 located in the remaining quadrants in Fig. 58 are also selected from the three remaining small blocks 63, 64, and 65 in order to avoid biased dots as seen from the two directions, and in the other blocks, selected pixels are accordingly determined using pairs of small blocks. In the other small blocks, a similar determination method is used to select a pixel corresponding to one of the four pixels in Fig. 58. If such a method is impossible, a pixel corresponding to one of the four pixels in Fig. 58 is selected in such a way as to avoid biased dots as seen from the two directions. Fig. 57 shows a state in which all dots for the second gray level have been provided to all element pixel blocks.

In contrast with the order of the algorithm shown in Fig. 5, this embodiment determines the positions of dots provided for the second gray level and then determines the set of element pixel blocks having the same dot pattern shown in Fig. 55. For example, the first element pixel block in the block A and the fourth element pixel block in block B are grouped into one set, and the third element pixel block in the block E and the second element pixel block in block C are grouped into one set. In this manner, the respective sets are determined to obtain the combination shown in Fig. 55.

For the third and subsequent gray levels, dot patterns can be formed according to step S5 and subsequent steps in Fig. 5 as in the third or fourth embodiment, thereby completing a dither matrix.

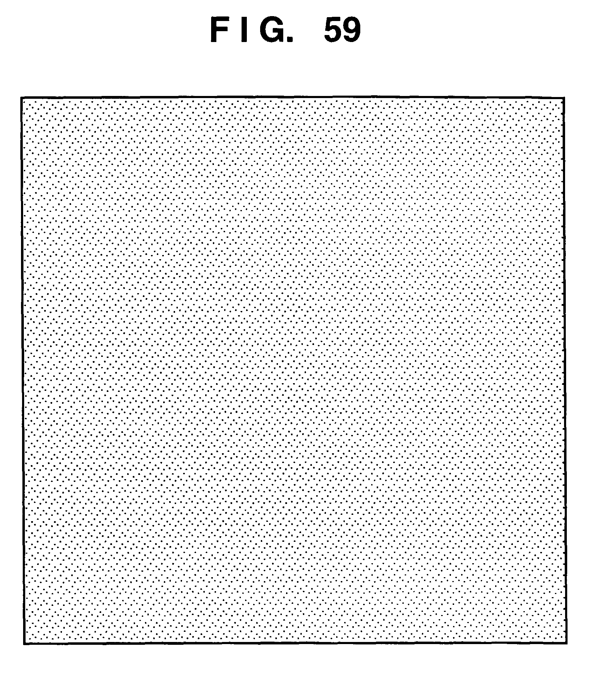

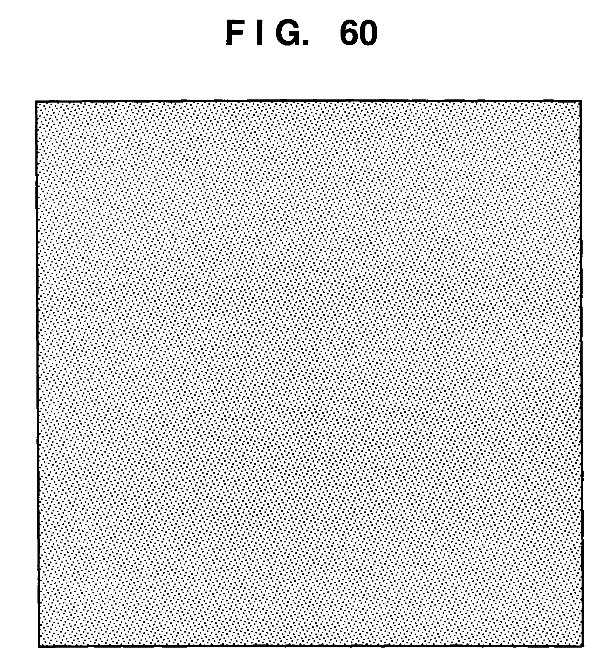

The masks created in this manner were used to output the dot patterns for an input image of a uniform density on a screen of 256 × 256 pixels using a 600-dpi BJ printer. Fig. 59 shows the dot pattern for the 8th gray level, and Fig. 60 shows the dot pattern for the 32nd gray level. These figures show actual screens obtained using the 600-dpi BJ printer, which have been enlarged 10 times in both length and width. Of the third and subsequent embodiments using the small-scale masks, this embodiment provides the highest uniformity and prevents non-uniform dot distributions parallel with the (x) or (y) axis as originally intended.

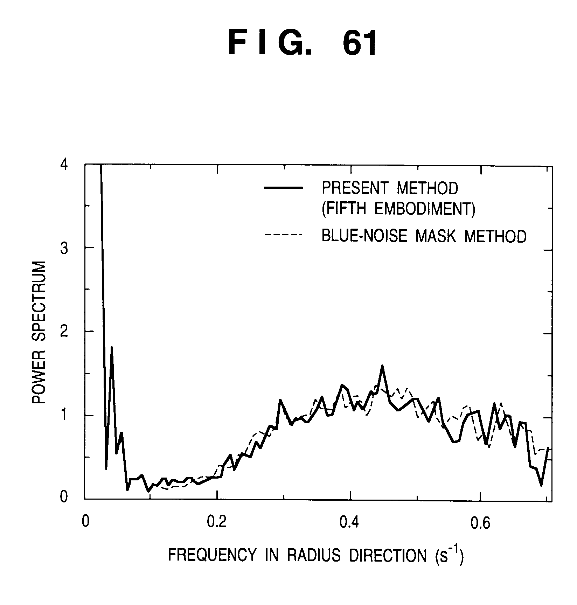

Figs. 61, 62, and 63 show the spatial-frequency property of a dot pattern for the 32nd gray level generated using a single unit mask according to this embodiment. Due to the same mask shape as in the fourth embodiment, the spatial-frequency property of the dot pattern for the single mask was evaluated in the same manner as in the fourth embodiment.

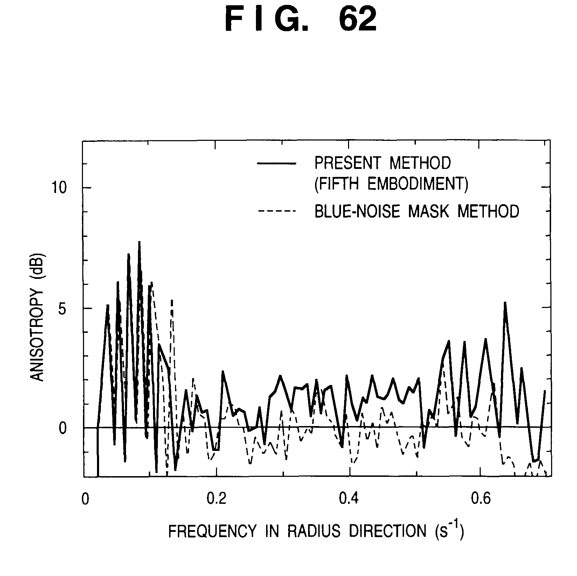

Fig. 61 shows one-dimensional power spectra for the 32nd gray level, which were compared and evaluated as described above, and Fig. 62 shows anisotropy. Since both methods have a very high spectrum at a frequency lower than 0.1/s or 0.15/s because the unit pixel block of a different shape was evaluated using the square screen, the frequency area higher than or equal to 0.2/s which is not substantially affected by these spectra is used for comparison.

With respect to the one-dimensional power spectra, this embodiment has relatively higher isolated spectra than the blue noise mask method, but the difference between this embodiment and the blue noise mask method is smaller than the difference between the fourth embodiment and the blue noise mask method. With respect to the anisotropy of the frequency area higher than or equal to 0.2/s, the blue noise mask method has an average anisotropy of 0 dB and is thus isotropic, and even very anisotropic spectra are equivalent to spectra according to the Perturbed Error Diffusion method exhibiting a high anisotropy.

On the other hand, this embodiment includes one spectrum having a mean value of 1.2 dB and a maximum value exceeding 4 dB, which is assumed to be a particularly anisotropic level, and reaching 5 dB. Thus, this dot pattern corresponding to the single mask meets the conditions for the non-blue-noise property according to the mask method, so it has the non-blue-noise property.

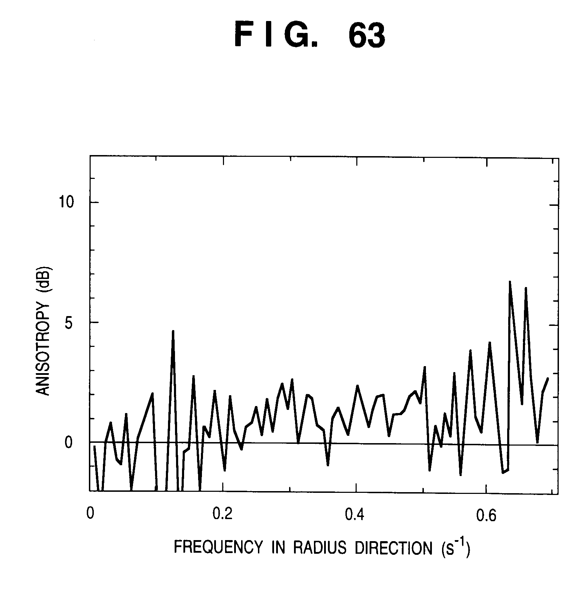

For reference, Fig. 63 shows the results of subtraction of the anisotropy value of the blue noise mask method from the anisotropy value of this embodiment for the purpose of eliminating the effects of the different shape of the unit pixel block. If the blue noise mask method is assumed to be isotropic, this embodiment exhibits a higher anisotropy and includes two spectra exceeding 5 dB. The one-dimensional power spectra and anisotropic spectra include a plurality of isolated spectra having an equal frequency, and this indicates that the mask has a periodicity.

Some of the other gray levels exhibited anisotropy equivalent to that of the 32nd gray level, while the others exhibited a slightly lower spectrum maximum amplitude. Due to the periodic structure of the mask, the unit mask according to this embodiment is more anisotropic than the Perturbed Error Diffusion method by Ulichrey exhibiting a good isotropy for three of six comparable gray levels. Thus, this embodiment has a property basically different from that of the blue noise mask method having an average indicating anisotropy.

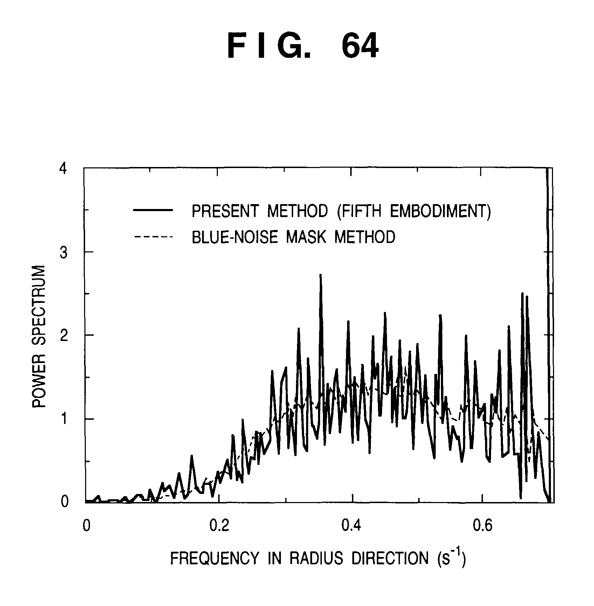

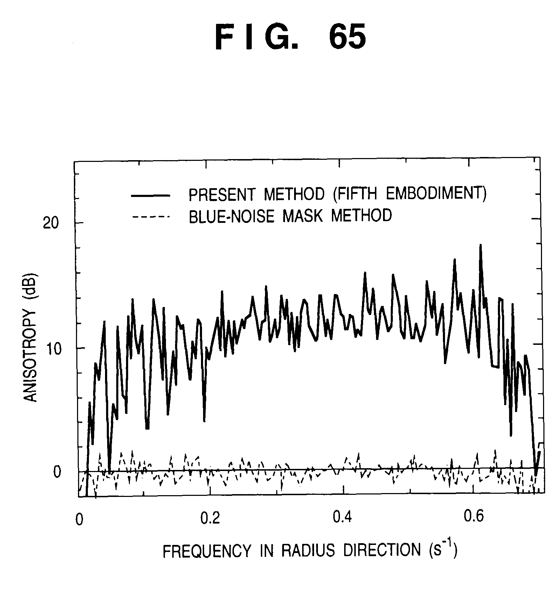

Figs. 64 and 65 show the spatial-frequency property of the dot pattern for the 32nd gray level generated using the unit masks according to this embodiment, on a screen of 256 × 256 pixels, which is a standard for evaluating spectra. Fig. 64 shows a one-dimensional-frequency property in the radial direction. In this figure, the solid line shows this embodiment, while the broken line shows the case of a blue noise mask of 256 × 256 pixels. This embodiment includes very few noise components and is composed of isolated spectra having high sharp peaks.

Fig. 65 shows anisotropy. In this figure, the solid line shows this embodiment and the broken line shows the case of a blue noise masks of 256 × 256 pixels. This embodiment exhibits a very high anisotropy of about 10 dB as an average value.

Such a spectrum property is not limited to the 32nd gray level but is found in all gray levels, so the dot pattern generated using the masks according to this invention obviously has a non-blue noise property.

As described above, despite its very high anisotropy, this embodiment substantially prevented the viewer from sensing periodic artifacts caused by the repetition of an identical pattern as shown in the gray scale in Fig. 73 for the blue noise mask of 64 × 64 pixels equivalent to the mask of this embodiment in size (× 0.8).

In addition, when output images were compared which were obtained using the present masks and blue noise mask of 256 × 256 pixels, respectively, from an input image having lower gray levels and a gradually changing shading, the present masks exhibited a slightly better performance in reproducing the gradually changing shading. This result indicates that the half-tone reproduction performance of the mask of this embodiment, which is dimensionally about one-thirteenth (substantially one-twentyfifth) of the blue noise mask of 256 × 256 pixels optimal for a 600-dpi printer, is slightly higher than or equal to that of the blue noise mask.

These results of evaluations indicate that the mask according to this embodiment is not based on the theoretical scheme for the blue noise property shown in Fig. 68 but on the new theoretical scheme shown in Fig. 1.

As described above in detail, although the conventional blue noise mask method produces artifacts when evaluation is carried out by reducing the mask size to a reference value, this embodiment uses the mask smaller than the pixel block of a reference size to prevent a dot pattern generated in the pixel block of the reference size from producing artifacts such as Moire fringes having a visually unpleasant contrast or a constant repeated pattern caused by the mask, thereby providing uniform high-quality images using the small masks.

In addition, the dot pattern generated solely by the mask exhibits a non-blue noise characteristic over all gray levels, that is, is regular, thereby enabling uniform high-quality images to be obtained.

Furthermore, based on the regularity of the dispersed-dot dithering method, a low perturbation is applied to the dot array to eliminate all of the following three advantages specific to the dispersed-dot dithering method: (1) Moire fringes are likely to occur, (2) regular patterns appear on the screen, and (3) non-uniform feeding is likely to cause fringe-like noises. As a result, this embodiment enables the gray level reproduction based on the following excellent characteristics: (i) the dot distribution is uniform over all gray levels, and (ii) the mask is small.

This has been substantiated by the gray scale shown in Fig. 66 and obtained using the mask according to the second embodiment and the gray scale shown in Fig. 67 and obtained using the mask according to the fourth embodiment.

These figures show a dot pattern for the 30th, 31st, and 32nd gray levels shown in the top row from left to right, a dot pattern for the 40th, 41st, and 42nd gray levels shown in the middle row from left to right, and a dot pattern for the 50th, 51st, and 52nd gray levels shown in the bottom row from left to right, all of which have been output using a 600-dpi printer. In terms of quality, these dot patterns compare with the gray scale in Fig. 71 which has also been output using the blue noise mask of 256 × 256 pixels. Nevertheless, the size of the mask according to the second embodiment is 128 × 128 pixels, which is one-fourth of that of the blue noise mask, but it is substantially one-eighth due to the plurality of element masks having the same threshold array. In addition, the mask according to the fourth embodiment is about one-thirteenth of the blue noise mask in size, but it is substantially about one-twentieth due to the plurality of element masks having the same threshold array. Thus, the present gray scale reproduction method is suited for a direct print system using a digital camera.

Furthermore, the method according to this embodiment takes over much of the regularity from the dispersed-dot dithering method. Accordingly, as in the dispersed-dot dithering method, the image quality improves as the definition of the printer increases, so a high quality is ensured even if this method is applied to recent 1,200-dpi printers. This method does not require larger masks corresponding to a higher-definition printer as in the blue noise mask.

Furthermore, according to the method according to this embodiment, the first gray level has a periodic or a pseudo periodic pattern and higher gray levels also have periodicity inside the mask. Consequently, simply viewing the dot pattern allows the use of the algorithm according to this embodiment to be determined based on the periodicity of the dot pattern.

As described above the gray level reproduction method based on the theoretical scheme has the following characteristics: (1) it has a high image quality, (2) the mask is small, (3) it can prevent software from being stolen, and (4) it is more preferably used for high-definition printers. Thus, this method is suited for the high-definition digital image age including the present and the near future. As regards this, if the gray scale reproducing apparatus includes a storage medium of a large capacity, this invention is not limited to the small mask used in each embodiment but may use a larger mask of, for example, 256 × 256 size.

Although the above embodiments have been described in conjunction with the conversion of input image data into binary data, this invention is not limited to this aspect but is applicable to conversion into three-or-more-valued data.

Conversion into ternary data will be described.

If the output device is an ink jet printer that has two inks of different densities, three values can be represented.

If data including 256 gray levels is input in which one pixel consists of 8 bits, input data up to 128th gray levels has its value doubled and the masks created according to the above embodiment are used to binarize the data. If the resulting value is 1, the lighter ink is input. If data between the 129th and 256th gray levels is input, it is binarized using the masks created according to the above embodiment and the darker ink is output if the resulting value is 1. Alternatively, up to the 128th gray level, masks having half the thresholds (decimals are omitted) of the respective masks created according to the above embodiment are separately provided for the lighter ink. Compared to the output of the 128th and lower gray levels using only the darker ink, this method doubles the number of dots provided, thereby enabling a gradually changing portion of an input image of low gray levels to be reproduced smoothly.

Thus, such a multi-valued technique is important in improving the reproducibility for changing gray levels such as those seen in the human skin, and higher-quality output images can be obtained by applying to such a technique the masks created according to this embodiment.

In addition, if this invention is applied to color image processing, different masks created according to the above embodiment are used for different colors (for example, Y/M/C/K) to provide binary or multi-valued data.

This invention can also be applied to a system composed of multiple devices such as a host computer, interface equipment, a reader, and a printer, and can further be applied to a unitary device such as a copier or facsimile terminal equipment.

This invention can also be applied to the case in which a storage medium on which is recorded a software program that implements the functions of the above embodiment is supplied to a system or an apparatus and in which a computer in the system or apparatus then reads out and executes program codes stored in the storage medium.

In this case, the program codes read out from the storage medium implements the functions of the above embodiment, and the storage medium storing the program codes constitutes this invention.

The storage medium supplying the program codes includes, for example, a floppy disc, a hard disc, an optical disc, an photo-magnetic disc, a CD-ROM, a CD-R, a magnetic tape, a non-volatile memory card, or a ROM.

Of course, the program codes read out by the computer cannot only be executed to implement the functions of the above embodiment but an OS (operating system) running on the computer can also carry out all or part of the actual processing in order to implement the functions of the above embodiment.

Furthermore, of course, after the program code read out from the storage medium has been written to the memory of an extension board inserted into the computer or extension unit connected thereto, a CPU in the extension board or unit can execute all or a part of actual processing based on instructions form the program code in order to implement the functions of the above embodiment.

As described above, this invention can obtain high-quality images with a uniform dot distribution using the small masks and can obviate the need to increase the mask size for a high-definition printer to reduce the memory capacity required to store the masks.

As many apparently widely different embodiments of the present invention can be made without departing from the spirit and scope thereof, it is to be understood that the invention is not limited to the specific embodiments thereof expect as defined in the appended claims.

**Claims**

1. A method of reproducing a gray level for representing density of each pixel of an output image by binary or multivalue data by corresponding each pixel of an original image one to one to each pixel of a threshold matrix (a mask), comprising the steps of:

   having non-blue noise properties at every gray level of dot patterns generated in a pixel block of a reference size using a mask of a size smaller than the reference size of the pixel block; and generating in an output image no moire having visually undesired contrast and an artifact such as a constant repetitive pattern, etc. caused by the mask itself when an input image receives a gray level process and the image is output through an output device having a resolution of over 600 dpi.

2. The method according to claim 1, wherein said dot pattern generated only by the mask has a value equal to or larger than 1dB as a mean value of anisotropy at every gray level.

3. A method of reproducing a gray level for representing density of each pixel of an output image by binary or multivalue data by corresponding each pixel of an original image one to one to each pixel of a threshold matrix (a mask), comprising the steps of:

   having non-blue noise properties at every gray level of dot patterns generated only by the mask; and
   generating in an output image no moire having visually undesired contrast and an artifact such as a constant repetitive pattern, etc. caused by the mask itself when an input image receives a gray level process.

4. A method of reproducing a gray level for representing density of each pixel of an output image by binary or multivalue data by corresponding each pixel of an original image one to one to each pixel of a threshold matrix (a mask), comprising the steps of:

   having a plurality of independent spectra, of a two-dimensional domain frequency spectrum of a dot pattern generated only by the mask, caused by periodicity of the mask at every gray level; and
   generating in an output image, which has received a gray level process, no visually undesired artifacts by introducing low irregularity (perturbation) to distribution of dots at a plurality of gray levels, and by assigning noise elements having a small amount of low frequency elements to a spectrum in a one-dimensional radius direction.

5. A method of reproducing a gray level using a relatively small threshold matrix having the same threshold array corresponding to an entire original image in a two-dimensional and regular array to represent density of each pixel of an output image by binary or multivalue data by corresponding each pixel of an original image one to one to each pixel of a threshold matrix (a mask), comprising the steps of:
   said mask having a size of an arrangement of a plurality of masks (element masks) of a size used in dispersed-dot dithering, and dot pattern generated by said mask:

   (1) having a set of element pixel blocks in which distribution of dots in each element pixel block corresponding to each element mask is the same at every gray level;
   (2) having low irregularity or pseudo-periodicity at any low gray level at a first level or thereafter;
   (3) having an equal number of dots in all element pixel blocks at every level; and
   (4) having an equal number of dots in four partial element pixel blocks each having a quarter of each element pixel block at every 4n (n indicates an integer) gray level.

6. The method according to any of claims 1 through 5, wherein adjacent masks are shifted along a boundary when said masks are two-dimensionally and repeatedly used.

7. The method according to claims 1 through 6, wherein said mask is different from quadrilateral.

8. The method according to any of claims 5 through 7, wherein said low irregularity or pseudo-periodicity is implemented by providing, at all or part of predetermined positions in each element pixel block corresponding to each element mask, a small pixel block having a number of pixels equal to or smaller than a quarter (1/4) of a total number of pixels in the section, and by selecting one pixel for a dot in each of small pixel blocks.

9. The method according to any of claims 1 through 8, wherein repulsive potential is assigned to all dots when a dot pattern is determined for a specific gray level as a method of determining a dot pattern at each gray level to generate the mask, and a dot is placed to determine a dot pattern for a next gray level at a pixel having lowest potential determined as a sum of potential values.

10. A method of reproducing a gray level of color image to which the method according to any of claims 1 through 9 is applied, wherein a color image is analyzed into a plurality of color elements; and an original image having at least one of the color elements is an input image.

11. An apparatus of reproducing a gray level for representing density of each pixel of an output image by binary or multivalue data by corresponding each pixel of an original image one to one to each pixel of a threshold matrix (a mask), comprising:

storage means for storing a threshold matrix; comparison means for comparing a value of the threshold matrix as a threshold with density of each pixel of an original image; and output means for outputting a binary or multivalue dot pattern based on a comparison result of said comparison means, wherein said threshold matrix has a size smaller than the reference size of the pixel block, dot patterns generated in a pixel block of a reference size have non-blue noise properties at every gray level, no moire having visually undesired contrast nor an artifact such as a constant repetitive pattern, etc. caused by the mask itself is generated in an output image when an input image receives a gray level process and the image is output through an output device having a resolution of over 600 dpi.

12. An apparatus of reproducing a gray level for representing density of each pixel of an output image by binary or multivalue data by corresponding each pixel of an original image one to one to each pixel of a threshold matrix (a mask), comprising:

storage means for storing a threshold matrix; comparison means for comparing a value of the threshold matrix as a threshold with density of each pixel of an original image; and output means for outputting a binary or multivalue dot pattern based on a comparison result of said comparison means, wherein said threshold matrix has dot patterns generated only by the mask having non-blue noise properties at every gray level, and generates in an output image no moire having visually undesired contrast or an artifact such as a constant repetitive pattern, etc. caused by the mask itself when an input image receives a gray level process.

13. An apparatus of reproducing a gray level for representing density of each pixel of an output image by binary or multivalue data by corresponding each pixel of an original image one to one to each pixel of a threshold matrix (a mask), comprising:

storage means for storing a threshold matrix; comparison means for comparing a value of the threshold matrix as a threshold with density of each pixel of an original image; and output means for outputting a binary or multivalue dot pattern based on a comparison result of said comparison means, wherein said threshold matrix has a plurality of independent spectra, of a two-dimensional domain frequency spectrum of a dot pattern generated only by the threshold matrix, caused by periodicity of the threshold matrix at every gray level, and generates in an output image, which has received a gray level process, no visually undesired artifacts by introducing low irregularity (perturbation) to distribution of dots at a plurality of gray levels, and by assigning noise elements having a small amount of low frequency elements to a spectrum in a one-dimensional radius direction.

14. An apparatus of reproducing a gray level for representing density of each pixel of an output image by binary or multivalue data by corresponding each pixel of an original image one to one to each pixel of a threshold matrix (a mask), comprising:

storage means for storing a threshold matrix; comparison means for comparing a value of the threshold matrix as a threshold with density of each pixel of an original image; and output means for outputting a binary or multivalue dot pattern based on a comparison result of said comparison means, wherein said threshold matrix mask has a size of an arrangement of a plurality of masks (element masks) of a size used in dispersed-dot dithering, and a generated dot pattern has:

(1) a set of element pixel blocks in which distribution of dots in each element pixel block corresponding to each element mask is the same at every gray level;
(2) low irregularity or pseudo-periodicity at any low gray level at a first level or thereafter;
(3) an equal number of dots in all element pixel blocks at every level; and
(4) an equal number of dots in four partial element pixel blocks each having a quarter of each element pixel block at every 4n (n indicates an integer) gray level.

15. A threshold matrix for use in converting density of each pixel of an original image into binary or multivalue data, wherein said threshold matrix has a size smaller than the reference size of the pixel block, dot patterns generated in a pixel block of a reference size have non-blue noise properties at every gray level, no moire having visually undesired contrast nor an artifact such as a constant repetitive pattern, etc. caused by the mask itself is generated in an output image when an input image receives a gray level process and the image is output through an output device having a resolution of over 600 dpi.

16. A threshold matrix for use in converting density of each pixel of an original image into binary or multivalue data, wherein said threshold matrix has dot patterns generated only by the threshold matrix having non-blue noise properties at every gray level, and generates in an output image no moire having visually undesired contrast or an artifact such as a constant repetitive pattern, etc. caused by the mask itself when an input image receives a gray level process.

17. A threshold matrix for use in converting density of each pixel of an original image into binary or multivalue data, wherein said threshold matrix has a plurality of independent spectra, of a two-dimensional domain frequency spectrum of a dot pattern generated only by the threshold matrix, caused by periodicity of the threshold matrix at every gray level, and generates in an output image, which has received a gray level process, no visually undesired artifacts by introducing low irregularity (perturbation) to distribution of dots at a plurality of gray levels, and by assigning noise elements having a small amount of low frequency elements to a spectrum in a one-dimensional radius direction.

18. A threshold matrix for use in converting density of each pixel of an original image into binary or multivalue data, wherein said threshold matrix mask has a size of an arrangement of a plurality of masks (element masks) of a size used in dispersed-dot dithering, and a generated dot pattern has:

(1) a set of element pixel blocks in which distribution of dots in each element pixel block corresponding to each element mask is the same at every gray level;
(2) low irregularity or pseudo-periodicity at any low gray level at a first level or thereafter;
(3) an equal number of dots in all element pixel blocks at every level; and
(4) an equal number of dots in four partial element pixel blocks each having a quarter of each element pixel block at every 4n (n indicates an integer) gray level.

19. A computer-readable storage medium storing a control program for controlling a gray level reproducing process for representing density of each pixel of an output image by binary or multivalue data by corresponding each pixel of an original image one to one to each pixel of a threshold matrix (a mask), comprising:

a threshold matrix having a size smaller than the reference size of the pixel block, dot patterns generated in a pixel block of a reference size having non-blue noise properties at every gray level, wherein no moire having visually undesired contrast nor an artifact such as a constant repetitive pattern, etc. caused by the mask itself is generated in an output image when an input image receives a gray level process and the image is output through an output device having a resolution of over 600 dpi; and a module for comparing a value of the threshold matrix as a threshold with density of each pixel of an original image for each pixel, and controlling an output of binary or multivalue dot patterns depending on a comparison result.

20. A computer-readable storage medium storing a control program for controlling a gray level reproducing process for representing density of each pixel of an output image by binary or multivalue data by corresponding each pixel of an original image one to one to each pixel of a threshold matrix (a mask), comprising:

a threshold matrix having dot patterns generated only by the threshold matrix having non-blue noise properties at every gray level, wherein no moire having visually undesired contrast or an artifact such as a constant repetitive pattern, etc. caused by the mask itself is generated when an input image receives a gray level process; and a module for comparing a value of the threshold matrix as a threshold with density of each pixel of an original image for each pixel, and controlling an output of binary or multivalue dot patterns depending on a comparison result.

21. A computer-readable storage medium storing a control program for controlling a gray level reproducing process for representing density of each pixel of an output image by binary or multivalue data by corresponding each pixel of an original image one to one to each pixel of a threshold matrix (a mask), comprising:

a threshold matrix having a plurality of independent spectra, of a two-dimensional domain frequency spectrum of a dot pattern generated only by the threshold matrix, caused by periodicity of the threshold matrix at every gray level, wherein no visually undesired artifacts is generated in an output image, which has received a gray level process, by introducing low irregularity (perturbation) to distribution of dots at a plurality of gray levels, and by assigning noise elements having a small amount of low frequency elements to a spectrum in a one-dimensional radius direction; and

a module for comparing a value of the threshold matrix as a threshold with density of each pixel of an original image for each pixel, and controlling an output of binary or multivalue dot patterns depending on a comparison result.

22. A computer-readable storage medium storing a control program for controlling a gray level reproducing process for representing density of each pixel of an output image by binary or multivalue data by corresponding each pixel of an original image one to one to each pixel of a threshold matrix (a mask), comprising:

a threshold matrix mask having a size of an arrangement of a plurality of masks (element masks) of a size used in dispersed-dot dithering, wherein a generated dot pattern has:

(1) a set of element pixel blocks in which distribution of dots in each element pixel block corresponding to each element mask is the same at every gray level;

(2) low irregularity or pseudo-periodicity at any low gray level at a first level or thereafter;

(3) an equal number of dots in all element pixel blocks at every level; and

(4) an equal number of dots in four partial element pixel blocks each having a quarter of each element pixel block at every 4n (n indicates an integer) gray level; and

a module for comparing a value of the threshold matrix as a threshold with density of each pixel of an original image for each pixel, and controlling an output of binary or multivalue dot patterns depending on a comparison result.

23. A gray scale reproducing apparatus of associating each pixel of an original image with each pixel of a threshold matrix (mask) on a one-to-one correspondence to reproduce the density of each pixel of an output image using binary or multivalue data, wherein: in the anisotropy of dot patterns generated only by a threshold matrix, the dot pattern has a spectrum having a mean value of 3 dB or more at every gray level and a maximum value of 10 dB or more, and no moire having visually undesired contrast or no artifact such as a constant repetition pattern caused by the mask is generated in an output image.

# FIG. 1

PICTURE SIZE 256×256 PIXELS

| PIXEL DOMAIN | SPECTRUM DOMAIN |
|---|---|
| NON-BLUE-NOISE PATTERN | NON-BLUE-NOISE SPECTRUM |
| I  LITTLE GRAININESS<br>II  NO ARTIFACT  } VISUALLY PLEASING ⟷ { | I  LITTLE LOW FREQUENCY COMPONENT<br>II  (PERIODICAL) ANISOTROPY |
| VISUALLY PLEASING  ⟷ | NOT BLUE-NOISE |

EP 0 963 105 A2

# F I G.  2

# FIG. 3

# FIG. 4

# F I G. 5

START

DETERMINING BASIC STRUCTURE OF THRESHOLD
MATRIX
(1)SHAPE
(2)SIZE
(3)SET OF ELEMENT MATRIX HAVING SAME
   THRESHOLD ARRAY
— S1

DETERMINING HOW TO MAKE TWO-DIMENSIONAL
ARRAY OF THRESHOLD MATRIX
— S2

SETTING FIRST GRAY LEVEL AS PERIODIC PATTERN — S3

SECOND GRAY LEVEL: ADDING PSEUDO-PERIODIC
PATTERN HAVING SAME PERIOD AS DESCRIBED
ABOVE
— S4

GENERATING PATTERN HAVING ONE MORE GRAY
LEVEL
(1)DETERMINING REPULSIVE POTENTIAL P(r)
(2)ASSIGNING P(r) TO EXISTING DOT
(3)AS COMPARED IN EACH ELEMENTARY PIXEL-BLOCK
   DOMAIN WITH NUMBER OF EXISTING DOTS IN
   OTHER PARTIAL ELEMENTARY PIXELS.
   PIXEL HAVING MINIMUM POTENTIAL IS DOTTED IN
   PARTIAL ELEMENTARY PIXEL-BLOCKS WHICH
   INCREASE 1 DOT OR DO NOT INCREASE AT ALL
— S5

NO — MAXIMUM NUMBER OF GRAY LEVELS? — S6

YES

GENERATING DITHERING MATRIX — S7

END

# F I G. 6

# F I G. 7

$$P(r): r = \sqrt{x^2 + y^2}$$

# F I G. 8

# F I G. 9

# F I G.  10

# F I G. 11

DETERMINING HOW TO MAKE TWO-DIMENSIONAL ARRAY OF THRESHOLD MATRIX ∼S2

.MAKING FIRST GRAY LEVEL AS PSEUDO-PERIODIC PATTERN ∼S3'

SECOND GRAY LEVEL: ADDING PSEUDO-PERIODIC PATTERN HAVING SAME PERIODICITY AS DESCRIBED ABOVE ∼S4

GENERATING PATTERN HAVING ONE MORE GRAY LEVEL ∼S5

# F I G. 12

DETERMINING HOW TO MAKE TWO-DIMENSIONAL ARRAY OF THRESHOLD MATRIX ~S2

MAKING FIRST GRAY LEVEL AS PSEUDO-PERIODIC PATTERN ~S3'

GENERATING PATTERN HAVING ONE MORE GRAY LEVEL ~S5

# F I G. 13

# F I G. 14

# F I G. 15

128bits

128bits

I

II

III

IV

# F I G. 16

**F I G. 17**

# F I G. 18

# F I G. 19

# F I G. 20

# F I G. 21

# F I G. 22

# FIG. 23

# F I G. 24

128bits

128bits

I

II

III

IV

# FIG. 25

# F I G. 26

# FIG. 27

# F I G. 28

# FIG. 29

# F I G. 30

# F I G. 31

# F I G. 32

# F I G. 33

# FIG. 34

# F I G. 35

— GAUSSIAN DISTRIBUTION

PROBABILITY<A.U.>

# F I G. 36

# F I G. 37

# F I G. 38

# F I G. 39

# F I G. 40

# F I G. 41

# F I G. 42

# FIG. 43

# FIG. 44

# F I G. 45

# F I G. 46

# F I G. 47

# F I G. 48

# FIG. 49

# F I G. 50

# F I G. 51

# F I G. 52

# F I G. 53

# F I G. 54

# FIG. 55

# F I G. 56

# F I G. 57

# F I G. 58

# F I G. 59

# F I G.  60

# F I G. 61

# F I G. 62

# F I G. 63

# F I G. 64

# F I G. 65

F I G. 66

FIG. 67

# FIG. 68

PICTURE SIZE 256×256 PIXELS

| PIXEL DOMAIN | SPECTRUM DOMAIN |
|---|---|
| BLUE-NOISE PATTERN | BLUE-NOISE SPECTRUM |
| I  LITTLE GRAININESS ⎫<br>⎬ VISUALLY PLEASING ⟷<br>II NO ARTIFACT ⎭ | ⎰ I  LITTLE LOW FREQUENCY COMPONENT<br>⎱ II (APERIODICAL) ISOTROPY |
| (CONTRAPOSITION) VISUALLY UNDESIRABLE ⟷ | NOT BLUE-NOISE |

EP 0 963 105 A2

# F I G. 69

# F I G. 70

FIG. 71

# FIG. 72

FIG. 73

# F I G. 74

# F I G. 75

# F I G. 76

# F I G. 77

# F I G. 78

# F I G. 79

# F I G. 80

# F I G.  81

# F I G. 82

# F I G. 83

| 15 | 23 | 35 | 27 | 26 | 10 | 2 | 4 | 22 | 38 |
|----|----|----|----|----|----|----|----|----|----|
| 31 | 39 | 19 | 11 | 34 | 18 | 6 | 8 | 14 | 30 |
| 25 | 9 | 1 | 3 | 21 | 37 | 16 | 24 | 35 | 27 |
| 33 | 17 | 5 | 7 | 13 | 29 | 32 | 40 | 19 | 11 |
| 21 | 37 | 15 | 23 | 36 | 28 | 25 | 9 | 1 | 3 |
| 13 | 29 | 31 | 39 | 20 | 12 | 33 | 17 | 5 | 7 |
| 35 | 27 | 26 | 10 | 2 | 4 | 22 | 38 | 15 | 23 |
| 19 | 11 | 34 | 18 | 6 | 8 | 14 | 30 | 31 | 39 |
| 1 | 3 | 21 | 37 | 16 | 24 | 36 | 28 | 25 | 9 |
| 5 | 7 | 13 | 29 | 32 | 40 | 20 | 12 | 33 | 17 |

# F I G. 84